Europäisches Patentamt

European Patent Office

Office européen des brevets

(19)

(11) **EP 1 211 661 A1**

(12) **EUROPEAN PATENT APPLICATION**
published in accordance with Art. 158(3) EPC

(43) Date of publication:
**05.06.2002 Bulletin 2002/23**

(51) Int Cl.⁷: **G09G 3/20**, G02B 26/08,
G09F 9/00

(21) Application number: **01912234.0**

(22) Date of filing: **09.03.2001**

(86) International application number:
**PCT/JP01/01867**

(87) International publication number:
**WO 01/67428 (13.09.2001 Gazette 2001/37)**

(84) Designated Contracting States:
**DE FR GB IT NL**
Designated Extension States:
**AL LT LV MK RO SI**

(30) Priority: **10.03.2000 JP 2000067778
16.02.2001 JP 2001039525**

(71) Applicant: **NGK INSULATORS, LTD.**
**Nagoya-City, Aichi Prefecture 467-8530 (JP)**

(72) Inventors:
• **TAKEUCHI, Yukihisa**
**c/o NGK INSULATORS, LTD.**
**Nagoya-city, Aichi 467-8530 (JP)**

• **NANATAKI, Tsutomu**
**c/o NGK INSULATORS, LTD.**
**Nagoya-city, Aichi 467-8530 (JP)**
• **OHWADA, Iwao c/o NGK INSULATORS, LTD.**
**Nagoya-city, Aichi 467-8530 (JP)**
• **AKAO, Takayoshi c/o NGK INSULATORS, LTD.**
**Nagoya-city, Aichi 467-8530 (JP)**

(74) Representative: **Paget, Hugh Charles Edward et al**
**MEWBURN ELLIS**
**York House**
**23 Kingsway**
**London WC2B 6HP (GB)**

(54) **METHOD FOR PRODUCING DISPLAY**

(57) A luminance correction table according to an embodiment of the present invention is prepared in accordance with the following process. That is, at first, in the step S1, a uniform image is displayed on a display to detect luminances of all dots. Specifically, for example, a signal of an intermediate level of gray scale (for example, gradation level of 128 if the full scale resides in gradation level of 256) is given to all of the dots of the display to make display. In this state, for example, the respective luminances of all of the dots are measured, for example, with a CCD camera to determine an actually measured illuminance distribution of the display. After that, in the step S2, luminance target values of the respective dots are calculated. Subsequently, in the step S3, luminance correction coefficients for the respective dots are calculated on the basis of the luminance target values of the respective dots.

FIG. 46

START

DETECT LUMINANCE OF ALL DOTS    S1

CALCULATE LUMINANCE TARGET VALUES OF RESPECTIVE DOTS    S2

CALCULATE LUMINANCE CORRECTION COEFFICIENTS FOR RESPECTIVE DOTS    S3

END

EP 1 211 661 A1

**Description**

TECHNICAL FIELD

The present invention relates to a method for producing a display apparatus which consumes less electric power and which has a large screen luminance. In particular, the present invention relates to a method for producing a display apparatus, which is preferably applied to a luminance-correcting process for the display apparatus constructed by arranging a plurality of display units.

BACKGROUND ART

Those hitherto known as the display device include, for example, display devices such as cathode ray tubes (CRT), liquid crystal display devices, and plasma displays.

Those known as the cathode ray tube include, for example, ordinary television receivers and monitor units for computers. Although the cathode ray tube has a bright screen, it consumes a large amount of electric power. Further, the cathode ray tube involves such a problem that the depth of the entire display device is large as compared with the size of the screen. The cathode ray tube also involves, for example, such problems that the resolution is deteriorated at the peripheral portion of a displayed image, the image or the graphic is distorted, the memory function is not effected, and it is impossible to make a large display, because of the following reason.

That is, the electron beam, which is radiated from the electron gun, is greatly deflected. Therefore, the light emission spot (beam spot) is widened at the portion at which the electron beam arrives at the fluorescent screen of the Braun tube, and the image is displayed obliquely. As a result, the distortion occurs in the displayed image. Further, there is a certain limit to maintain the large space in the Braun tube in vacuum.

On the other hand, the liquid crystal display device is advantageous in that the entire device can be miniaturized, and the display device consumes a small amount of electric power. However, the liquid crystal display device involves problems such that it is inferior in luminance of the screen, and the field angle of the screen is narrow. Further, the liquid crystal display device involves such a difficulty that the arrangement of a driving circuit is extremely complicated, because the gradational expression is performed based on the voltage level.

For example, when a digital data line is used, the driving circuit therefor comprises a latching circuit for holding component RGB data (each 8-bit) for a predetermined period of time, a voltage selector, a multiplexer for making changeover to a voltage level of a type corresponding to a number of gradations, and an output circuit for adding output data from the multiplexer to the digital data line. In this case, when the number of gradations is increased, it is necessary to perform the switching operation at an extremely large number of levels in the multiplexer. The circuit construction is complicated in accordance therewith.

When an analog data line is used, the driving circuit therefor comprises a shift register for aligning, in the horizontal direction, component RGB data (each 8-bit) to be successively inputted, a latching circuit for holding parallel data from the shift register for a predetermined period of time, a level shifter for adjusting the voltage level, a D/A converter for converting output data from the level shifter into an analog signal, and an output circuit for adding the output signal from the D/A converter to the analog data line. In this case, a predetermined voltage corresponding to the gradation is obtained by using an operational amplifier in the D/A converter. However, when the range of the gradation is widened, it is necessary to use an operational amplifier which outputs a highly accurate voltage, resulting in such drawbacks that the structure is complicated and the price is expensive as well.

The plasma display has the following advantages. That is, it is possible to realize a small size, because the display section itself occupies a small volume. Further, the display is comfortably viewed, because the display surface is flat. Especially, the alternating current type plasma display also has such an advantage that it is unnecessary to use any refresh memory owing to the memory function of the cell.

As for the plasma display described above, in order to allow the cell to have the memory function, it is necessary to continue the electric discharge by switching the polarity of the applied voltage in an alternating manner. For this purpose, it is necessary to provide a first pulse generator for generating the sustain pulse in the X direction, and a second pulse generator for generating the sustain pulse in the Y direction. The plasma display involves such a problem that the arrangement of the driving circuit is inevitably complicated.

On the other hand, in order to solve the problems concerning the CRT, the liquid crystal display device, and the plasma display as described above, the present applicant has suggested a novel display device (see, for example, Japanese Laid-Open Patent Publication No. 7-287176). As shown in FIG. 79, this display device includes actuator elements 1000 which are arranged for respective picture elements. Each of the actuator elements 1000 comprises a main actuator element 1008 including a piezoelectric/electrostrictive layer 1002 and an upper electrode 1004 and a lower electrode 1006 formed on upper and lower surfaces of the piezoelectric/electrostrictive layer 1002 respectively, and a substrate 1014 including a vibrating section 1010 and a fixed section 1012 disposed under the main actuator element 1008. The lower electrode 1006 of the main actuator element 1008 contacts with the vibrating section 1010. The main actuator element 1008 is supported by the vibrating section 1010.

The substrate 1014 is composed of ceramics in which the vibrating section 1010 and the fixed section 1012 are integrated into one unit. A recess 1016 is formed in the substrate 1014 so that the vibrating section 1010 is thin-walled.

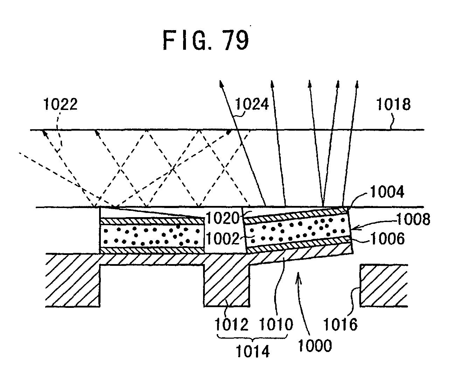

A displacement-transmitting section 1020 for obtaining a predetermined size of contact area with respect to an optical waveguide plate 1018 is connected to the upper electrode 1004 of the main actuator element 1008. In the illustrative display device shown in FIG. 79, the displacement-transmitting section 1020 is arranged such that it is located closely near to the optical waveguide plate 1018 in the ordinary state in which the actuator element 1000 stands still, while it contacts with the optical waveguide plate 1018 in the excited state at a distance of not more than the wavelength of the light.

The light 1022 is introduced, for example, from a lateral end of the optical waveguide plate 1018. In this arrangement, all of the light 1022 is totally reflected at the inside of the optical waveguide plate 1018 without being transmitted through front and back surfaces thereof by controlling the magnitude of the refractive index of the optical waveguide plate 1018. In this state, a voltage signal corresponding to an attribute of an image signal is selectively applied to the actuator element 1000 by the aid of the upper electrode 1004 and the lower electrode 1006 so that the actuator element 1000 is allowed to stand still in the ordinary state or make displacement in the excited state. Thus, the displacement-transmitting section 1020 is controlled for its contact and separation with respect to the optical waveguide plate 1018. Accordingly, the scattered light (leakage light) 1024 is controlled at a predetermined portion of the optical waveguide plate 1018, and a screen image corresponding to the image signal is displayed on the optical waveguide plate 1018.

This display device has, for example, the following advantages. That is, (1) it is possible to decrease the electric power consumption, (2) it is possible increase the screen luminance, and (3) it is unnecessary to increase the number of picture elements (image pixels) as compared with the black-and-white screen when a color screen is constructed.

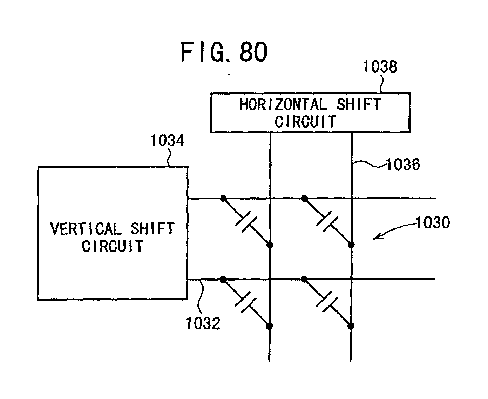

For example, as shown in FIG. 80, the peripheral circuit of the display device as described above comprises a display section 1030 in which a large number of picture elements are arranged, a vertical shift circuit 1034 provided with vertical selection lines 1032 which are led in a number corresponding to necessary rows and which are common for a large number of picture elements (picture element group) for constructing one row, and a horizontal shift circuit 1038 provided with signal lines 1036 which are led in a number corresponding to necessary columns and which are common for a large number of picture elements (picture element group) for constructing one column.

As for the display device as described above, a large screen display is constructed by arranging a large number of display devices in some cases. In such a case, it is conceived that a large number of display units are randomly arranged. However, it is feared that the image quality may be deteriorated, because the average luminance is dispersed among the display units.

In other words, for example, if a display unit having an extremely low average luminance is arranged adjacent to a display unit having a high average luminance, then the existence of the display units conspicuously appears due to the drastic difference in average luminance, and it is uncomfortable to view an image displayed on a screen of a display apparatus. Further, an inconvenience also arises such that the seam between the display units is conspicuous.

DISCLOSURE OF THE INVENTION

The present invention has been made taking the foregoing problems into consideration, an object of which is to provide a method for producing a display apparatus, which makes it possible to allow the seam and the luminance dispersion between display units to be inconspicuous and which makes it possible to improve the image quality, when a large screen display apparatus is constructed by arranging a large number of display units.

Another object of the present invention is to provide a method for producing a display apparatus, which makes it possible to decrease, for example, the display unevenness and the difference in brightness as less as possible, to exclude any sense of incongruity to human eyes, and to enhance the image quality of an image.

According to the present invention, there is provided a method for producing a display apparatus constructed by arranging a plurality of display units arranged with a plurality of display components; the method comprising the steps of displaying a uniform image on the display apparatus to detect luminances of the respective display components; calculating luminance target values of the respective display components; and calculating luminance correction coefficients for the respective display components on the basis of the luminance target values of the respective display components.

When the value to suppress the luminance distribution is set for the luminance target value, the effect is reflected on the luminance correction coefficient. Therefore, when the display component is driven or it emits light, then the light emission luminance is corrected on the basis of the luminance correction coefficient. In this process, the light emission is effected while effectively suppressing the dispersion of the luminance distribution. It is possible to allow the seam and the luminance distribution between the display components to be inconspicuous.

In the production method described above, it is also preferable that the luminance target value is calculated by averaging the luminances of the display component and the plurality of display components arranged therearound, and regarding an obtained average value as the luminance target value of the display component. That is, the dispersion of the luminance distribution is suppressed by means of the moving averaging process.

In this procedure, it is also preferable that the plurality of display components, which are arranged around the display component, are included in a group of the display components corresponding to (2m + 1) rows aligned in a vertical direction, and they are included in a group of the display components corresponding to (2n + 1) columns aligned in a horizontal direction.

When M individuals of the display components are arranged in the vertical direction, N individuals of the display components are arranged in the horizontal direction, and $(M \times N)$ individuals of the display components are provided in total for one of the display units, then m and n described above may satisfy the following expressions provided that $\alpha$ and $\beta$ are variables of not less than 1 respectively:

$$(1/2)M \leq 2m + 1 \leq \alpha M$$

$$(1/2)N \leq 2n + 1 \leq \beta N.$$

Especially, $\alpha$ and $\beta$ described above are set so that the display components, in each of which the luminance correction coefficient exceeds an upper limit value, have a number which is not more than a predetermined number.

By doing so, the seam can be made to be inconspicuous as well while suppressing the dispersion of the luminance distribution in the display unit. Further, it is possible to make use of the individual luminances of the display units. The luminance is not unnecessarily lowered in a successful manner for the display unit which successfully emits light brightly.

It is also preferable that the display component, which exhibits a minimum value of the calculated luminance target values, is retrieved; and the current luminance target value is increased by a certain value for the retrieved display component.

According to the technique described above, it is possible to dissolve such an inconvenience that the image is discontinuous between the display units (maintenance of the continuous surface). Further, it is possible to extract the display ability of the display unit to the maximum.

In another way, it is also preferable that the display component, which exceeds a threshold value of the calculated luminance target values, is retrieved; and the current luminance target value is decreased to the threshold value for the retrieved display component.

In the present invention, it is also preferable that the luminance correction coefficient is calculated in consideration of color temperature.

Specifically, standardization may be performed for the calculated luminance target values for the respective display components in accordance with a color scheme respectively; amendment may be made so that values obtained after the standardization are included in a certain range; and a restoring process may be performed for values obtained after the amendment in accordance with the color scheme respectively to obtain luminance target values in consideration of the color temperature. It is also preferable that when the luminance target values in consideration of the color temperature are obtained, the step includes a process for multiplying a color temperature regulation constant.

It is also preferable that the display unit comprises an optical waveguide plate for introducing light from a light source thereinto, and a driving section provided opposingly to a first plate surface of the optical waveguide plate and arranged with the display components of a number corresponding to a large number of picture elements, wherein a screen image corresponding to an image signal is displayed on the optical waveguide plate by controlling a displacement action of an actuator element of the display component in a direction to make contact or separation with respect to the optical waveguide plate in accordance with an attribute of the image signal to be inputted so that leakage light is controlled at a predetermined portion of the optical waveguide plate.

According to another aspect of the present invention, there is provided a method for producing a display apparatus constructed by arranging a plurality of display units arranged with a plurality of display components; the method comprising the steps of obtaining characteristic values for the respective display units respectively; ranking the display units on the basis of the obtained characteristic values; partitioning an arrangement area for the plurality of display units of the display apparatus to designate ranks of the display units to be arranged in respective areas; and arranging the display units in accordance with the designation to manufacture the display apparatus.

Accordingly, it is possible to decrease, for example, the display unevenness and the difference in brightness as less as possible, to exclude any sense of incongruity to human eyes, and enhance the image quality of an image.

In this aspect, it is possible to obtain a smooth luminance distribution when the display apparatus is viewed as a whole by arranging the display units which are ordered in an identical rank in accordance with a predetermined rule, when the ranked display units are arranged in the designated areas.

Especially, it is also preferable that the arrangement area for the display units is partitioned into a central portion and a peripheral portion; and the display units having high ranks are arranged in the central portion, and the display units having low ranks are arranged in the peripheral portion. This arrangement is based on the use of such a characteristic that even when the periphery is dark, it is difficult for human eyes to notice that it is dark. This arrangement is effective to exclude the sense of incongruity for human eyes.

It is also preferable that when the characteristic value includes an average luminance of the plurality of display components for constructing the display unit and a number of deficiencies of the display components; the ranking is determined by overall evaluation on the basis of a rank based on the average luminance and a rank based on the number of deficiencies.

In this case, it is also preferable that the arrangement area for the display units is partitioned into a central portion and a peripheral portion; and the display units having high ranks based on the number of deficiencies are arranged in the central portion, and the display unit having low ranks based on the number of deficiencies are arranged in the peripheral portion. It is also preferable that the display units having substantially identical ranks based on the average luminance are arranged in the central portion and the peripheral portion.

The above and other objects, features, and advantages of the present invention will become more apparent from the following description when taken in conjunction with the accompanying drawings in which a preferred embodiment of the present invention is shown by way of illustrative example.

BRIEF DESCRIPTION OF THE DRAWINGS

FIG. 1 shows a perspective view illustrating a schematic arrangement of a display according to an embodiment of the present invention;
FIG. 2 shows a sectional view illustrating an arrangement of a display unit;
FIG. 3 illustrates an arrangement of picture elements of the display unit;
FIG. 4 shows a sectional view depicting a first illustrative arrangement of an actuator element and a picture element assembly;
FIG. 5 shows an example of a planar configuration of a pair of electrodes formed on the actuator element;
FIG. 6A illustrates an example in which comb teeth of the pair of electrodes are arranged along the major axis of a shape-retaining layer;
FIG. 6B illustrates another example;
FIG. 7A illustrates an example in which comb teeth of the pair of electrodes are arranged along the minor axis of a shape-retaining layer;
FIG. 7B illustrates another example;
FIG. 8 shows a sectional view illustrating another arrangement of a display unit;

FIG. 9 shows a sectional view depicting a second illustrative arrangement of an actuator element and a picture element assembly;
FIG. 10 shows a sectional view depicting a third illustrative arrangement of an actuator element and a picture element assembly;
FIG. 11 shows a sectional view depicting a fourth illustrative arrangement of an actuator element and a picture element assembly;
FIG. 12 illustrates an arrangement obtained when crosspieces are formed at four corners of the picture element assemblies respectively;
FIG. 13 illustrates another arrangement of the crosspiece;
FIG. 14 shows a table illustrating the relationship concerning the offset potential (bias potential) outputted from a row electrode drive circuit, the electric potentials of an ON signal and an OFF signal outputted from a column electrode drive circuit, and the voltage applied between a row electrode and a column electrode;
FIG. 15 shows a circuit diagram illustrating an arrangement of first and second driving units;
FIG. 16 shows a block diagram illustrating an arrangement of a driver IC of a column electrode drive circuit of the first driving unit;
FIG. 17 especially shows an example in which one frame is divided into a plurality of subfields in order to explain the gradation control in the first driving unit;
FIG. 18 shows a block diagram illustrating a signal processing circuit of the first driving unit;
FIG. 19 shows a table illustrating another example of the relationship concerning the offset potential (bias potential) outputted from a row electrode drive circuit, the electric potentials of an ON signal and an OFF signal outputted from a column electrode drive circuit, and the voltage applied between a row electrode and a column electrode;
FIG. 20 shows a table illustrating still another example of the relationship concerning the offset potential (bias potential) outputted from a row electrode drive circuit, the electric potentials of an ON signal and an OFF signal outputted from a column electrode drive circuit, and the voltage applied between a row electrode and a column electrode;
FIG. 21 especially shows an example in which one frame is equally divided into a plurality of linear subfields in order to explain the gradation control in the second driving unit;
FIG. 22A illustrates a bit array in which the gradation level is 62 in dot data prepared by the second driving unit;
FIG. 22B illustrates a bit array in which the gradation level is 8 as well;
FIG. 23 shows a block diagram illustrating a signal processing circuit in second and fourth driving units;
FIG. 24 shows a block diagram illustrating an arrangement of a driver IC to be used for the second driving unit;

FIG. 25 shows a block diagram illustrating an arrangement of a data transfer section to be used for the second driving unit;

FIG. 26 illustrates data division in a first data output circuit;

FIG. 27 illustrates the data transfer form from the first data output circuit to the second data output circuit;

FIG. 28 shows a circuit diagram illustrating an arrangement of third and fourth driving units;

FIG. 29 especially shows an example in which one frame is divided into two fields and one field is divided into a plurality of subfields in order to explain the gradation control in the third driving unit;

FIG. 30 shows a block diagram illustrating a signal processing circuit in the third driving unit;

FIG. 31 shows a table illustrating the relationship concerning the electric potentials of a select signal and an nonselect signal outputted from a row electrode drive circuit, the electric potentials of an ON signal and an OFF signal outputted from a column electrode drive circuit, and the voltage applied between the row electrode and the column electrode;

FIG. 32 shows a table illustrating another example of the relationship concerning the electric potentials of a select signal and an nonselect signal outputted from a row electrode drive circuit, the electric potentials of an ON signal and an OFF signal outputted from a column electrode drive circuit, and the voltage applied between the row electrode and the column electrode;

FIG. 33 shows a table illustrating still another example of the relationship concerning the electric potentials of a select signal and an nonselect signal outputted from a row electrode drive circuit, the electric potentials of an ON signal and an OFF signal outputted from a column electrode drive circuit, and the voltage applied between the row electrode and the column electrode;

FIG. 34 especially shows an example in which one frame is divided into two fields and one field is equally divided into a plurality of linear subfields in order to explain the gradation control in the fourth driving unit;

FIG. 35 shows a block diagram illustrating a signal processing circuit in the fourth driving unit;

FIG. 36 illustrates an arrangement of picture elements of a display unit to which a fifth driving unit is applied;

FIG. 37 especially shows an example in which one frame is divided into three fields and one field is divided into a plurality of subfields in order to explain the gradation control in the fifth driving unit;

FIG. 38 shows a circuit diagram illustrating an arrangement of fifth and sixth driving units;

FIG. 39 shows a block diagram illustrating a signal processing circuit in the fifth driving unit;

FIG. 40 especially shows an example in which one frame is divided into three field and one field is equally divided into a plurality of linear subfields in order to explain the gradation control in the sixth driving unit;

FIG. 41 shows a block diagram illustrating a signal processing circuit in the sixth driving unit;

FIG. 42A shows a sectional view illustrating an example of a display unit based on the use of static electricity depicting a case in which the display unit is in a light emission state;

FIG. 42B shows a sectional view depicting a case in which the display unit is in a light off state;

FIG. 43A shows a sectional view illustrating another example of a display unit based on the use of static electricity depicting a case in which the display unit is in a light emission state;

FIG. 43B shows a sectional view depicting a case in which the display unit is in a light off state;

FIG. 44 shows a sectional view illustrating another arrangement of an actuator element;

FIG. 45 shows a block diagram for illustrating a luminance-correcting means;

FIG. 46 shows a flow chart illustrating a process for preparing a luminance correction table;

FIG. 47 shows a characteristic illustrating an example of luminance distribution of respective dots;

FIG. 48 shows a characteristic illustrating another example of luminance distribution of respective dots;

FIG. 49A illustrates an example in which a plurality of dots, which are arranged in a rectangular area constructed by (2m + 1) rows × (2n + 1) columns, are selected in the moving averaging process;

FIG. 49B illustrates an example in which a plurality of dots, which are arranged in an approximately circular area included in the rectangular area constructed by (2m + 1) rows × (2n + 1) columns, are selected in the moving averaging process;

FIG. 50 shows a characteristic of a luminance correction coefficient prepared by the moving averaging process;

FIG. 51 shows a flow chart illustrating a process for preparing a luminance correction coefficient in accordance with the so-called bottom-up method;

FIG. 52 shows a flow chart illustrating a process for preparing a luminance correction coefficient in accordance with the so-called top-down method;

FIG. 53 shows a flow chart illustrating a process for preparing a luminance correction coefficient in consideration of color temperature;

FIG. 54 shows an example of change for a luminance correction coefficient passing through the origin;

FIG. 55 shows an example of change to a luminance correction coefficient not passing through the origin;

FIG. 56 shows a flow chart illustrating an example of the method for determining the arrangement of the display units;

FIG. 57A shows a table illustrating an example of the criterion for ranking the display units on the basis of characteristic values;

FIG. 57B shows a table illustrating the contents of the ranking to overall ranks;

FIG. 58A illustrates an arrangement form of the display units for the first display;

FIG. 58B illustrates an arrangement form of the display units for the second display;

FIG. 59A illustrates an example of the order used when the display units are arranged in a central portion of an arrangement area;

FIG. 59B illustrates another example;

FIG. 60A illustrates an example of the order used when the display units are arranged in a peripheral portion of an arrangement area;

FIG. 60B illustrates another example;

FIG. 61 shows a block diagram for illustrating a linear correcting means;

FIG. 62A shows a light emission luminance characteristic of a certain dot;

FIG. 62B shows a characteristic illustrating a weighting factor for linearizing the light emission luminance characteristic;

FIG. 62C shows a characteristic illustrating a light emission luminance distribution after being linearized;

FIG. 63A shows a light emission luminance characteristic of a television signal applied with gamma control;

FIG. 63B shows a characteristic illustrating a weighting factor for counteracting the gamma control;

FIG. 63C shows a characteristic illustrating a light emission luminance distribution after being linearized;

FIG. 64 shows a block diagram for illustrating a dimming control means;

FIG. 65A shows a timing chart illustrating an example of the timing for switching the light source;

FIG. 65B shows a timing chart illustrating an example of the combination of linear subfields selected depending on the gradation level;

FIG. 66A shows a timing chart illustrating another example of the timing for switching the light source;

FIG. 66B shows a timing chart illustrating another example of the combination of linear subfields selected depending on the gradation level;

FIG. 67A shows a waveform illustrating a signal applied to the column electrode in the ordinary driving;

FIG. 67B shows a waveform illustrating a signal applied to the row electrode;

FIG. 67C shows a waveform illustrating a voltage applied to the dot;

FIG. 68A shows an applied voltage waveform in the ordinary operation;

FIG. 68B shows a light intensity distribution thereof;

FIG. 69A shows a waveform illustrating a signal applied to the column electrode when the preparatory period is provided;

FIG. 69B shows a waveform illustrating a signal applied to the row electrode;

FIG. 69C shows a waveform illustrating a voltage applied to the dot;

FIG. 70A shows an applied voltage waveform when the preparatory period is provided;

FIG. 70B shows a light intensity distribution thereof;

FIG. 71 shows an example of the circuit used for the row electrode drive circuit;

FIG. 72 shows a block diagram illustrating a form of use according to a first specified embodiment;

FIG. 73 shows a block diagram illustrating a form of use according to a second specified embodiment;

FIG. 74 shows a block diagram illustrating a form of use according to a third specified embodiment;

FIG. 75 shows a block diagram illustrating a first modified embodiment of the form of use according to the third specified embodiment;

FIG. 76 shows a block diagram illustrating a second modified embodiment of the form of use according to the third specified embodiment;

FIG. 77 shows a block diagram illustrating a form of use according to a fourth specified embodiment;

FIG. 78 shows a block diagram illustrating a form of use according to a fifth specified embodiment;

FIG. 79 shows an arrangement illustrating a display device concerning a suggested example; and

FIG. 80 shows a block diagram illustrating a peripheral circuit of the display device.

BEST MODE FOR CARRYING OUT THE INVENTION

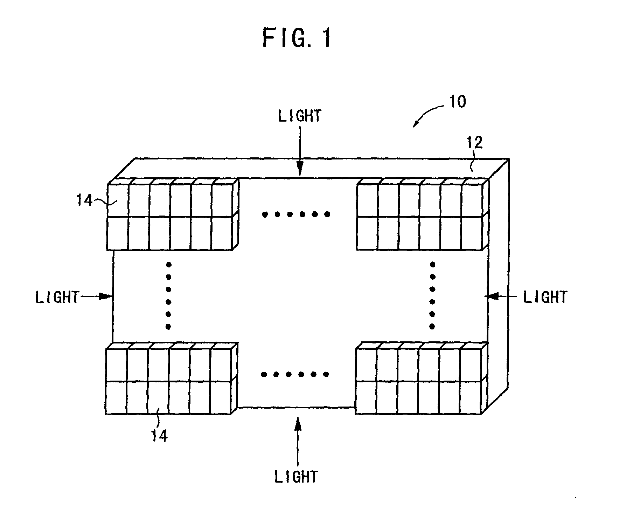

Illustrative embodiments of the display apparatus according to the present invention (hereinafter simply referred to as "display according to the embodiment") will be explained below with reference to FIGS. 1 to 78.

As shown in FIG. 1, the display 10 according to the embodiment of the present invention comprises a plurality of display units 14 arranged on a back surface of an optical waveguide plate 12 having a display area as the display 10.

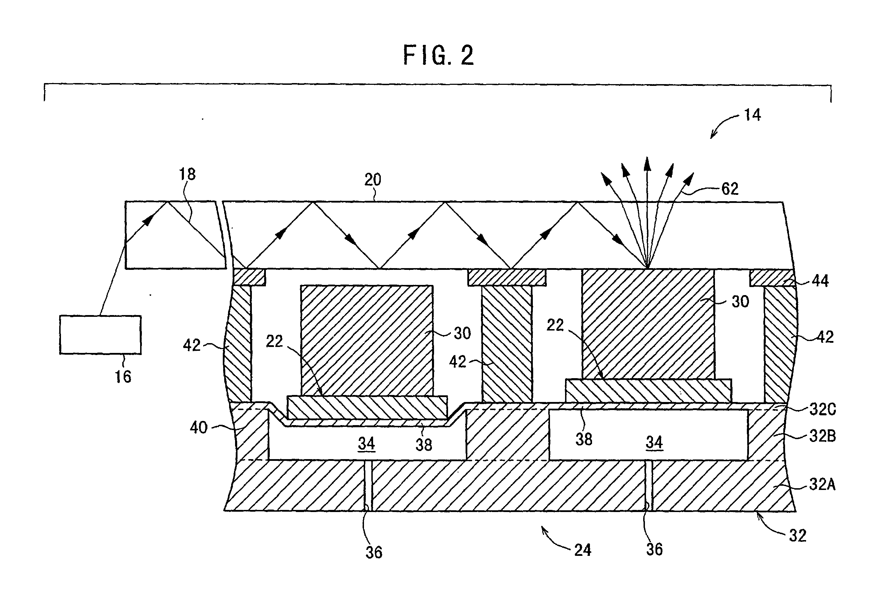

As shown in FIG. 2, each of the display units 14 comprises an optical waveguide plate 20 for introducing light 18 from a light source 16 thereinto, and a driving section 24 provided opposingly to the back surface of the optical waveguide plate 20 and including a large number of actuator elements 22 which are arranged corresponding to picture elements (image pixels) in a matrix configuration or in a zigzag configuration.

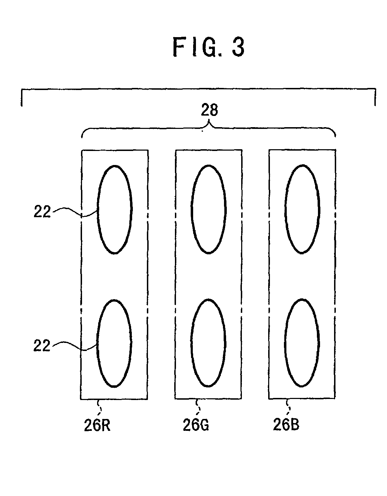

The arrangement of the picture element array is as follows, for example, as shown in FIG. 3. That is, one dot 26 is constructed by two actuator elements 22 which are aligned in the vertical direction. One picture element 28 is constructed by three dots 26 (red dot 26R, green dot 26G, and blue dot 26B) which are aligned in the horizontal direction. In the display unit 14, the picture elements 28 are aligned such that sixteen individuals (48 dots) are arranged in the horizontal direction, and sixteen individuals (16 dots) are arranged in the vertical direction.

In the display 10, as shown in FIG. 1, for example, in order to conform to the VGA standard, forty individuals of the display units 14 are arranged in the horizontal direction, and thirty individuals of the display units 14 are arranged in the vertical direction on the back surface of the optical waveguide plate 12 so that 640 picture elements (1920 dots) are aligned in the horizontal direction, and 480 picture elements (480 dots) are aligned in the vertical direction.

Those which are uniform and which have a large light transmittance in the visible light region, such as glass plates and acrylic plates are used for the optical waveguide plate 12. The respective display units 14 are mutually connected to one another, for example, by means of wire bonding, soldering, end surface connector, or back surface connector so as to make it possible to supply signals between the mutual display units 14.

It is preferable that the refractive index of the optical waveguide plate 12 is similar to that of the optical waveguide plate 20 of each of the display units 14. When the optical waveguide plate 12 and the optical waveguide plates 20 are bonded to one another, it is also preferable to use a transparent adhesive. Preferably, the adhesive is uniform and it has a high transmittance in the visible light region in the same manner as the optical waveguide plate 12 and the optical waveguide plate 20. It is also desirable that the refractive index of the adhesive is set to be similar to those of the optical waveguide plate 12 and the optical waveguide plate 20 in order to ensure the brightness of the screen.

In each of the display units 14, as shown in FIG. 2, a picture element assembly 30 is stacked on each of the actuator elements 22. The picture element assembly 30 functions such that the contact area with the optical waveguide plate 20 is increased to give an areal size corresponding to the picture element.

The driving section 24 includes an actuator substrate 32 composed of, for example, ceramics. The actuator elements 22 are arranged at positions corresponding to the respective picture elements 28 on the actuator substrate 32. The actuator substrate 32 has its first principal surface which is arranged to oppose to the back surface of the optical waveguide plate 20. The first principal surface is a continuous surface (flushed surface). Hollow spaces 34 for forming respective vibrating sections as described later on are provided at positions corresponding to the respective picture elements 28 at the inside of the actuator substrate 32. The respective hollow spaces 34 communicate with the outside via through-holes 36 each having a small diameter and provided at the second principal surface of the actuator substrate 32.

The portion of the actuator substrate 32, at which the hollow space 34 is formed, is thin-walled. The other portion of the actuator substrate 32 is thick-walled. The thin-walled portion has a structure which tends to undergo vibration in response to external stress, and it functions as a vibrating section 38. The portion other than the hollow space 34 is thick-walled, and it functions as a fixed section 40 for supporting the vibrating section 38.

That is, the actuator substrate 32 has a stacked structure comprising a substrate layer 32A as a lowermost layer, a spacer layer 32B as an intermediate layer, and a thin plate layer 32C as an uppermost layer. The actuator substrate 32 can be recognized as an integrated structure including the hollow spaces 34 formed at the positions in the spacer layer 32B corresponding to the actuator elements 22. The substrate layer 32A functions as a substrate for reinforcement, as well as it functions as a substrate for wiring. The actuator substrate 32 may be sintered in an integrated manner, or it may be additionally attached.

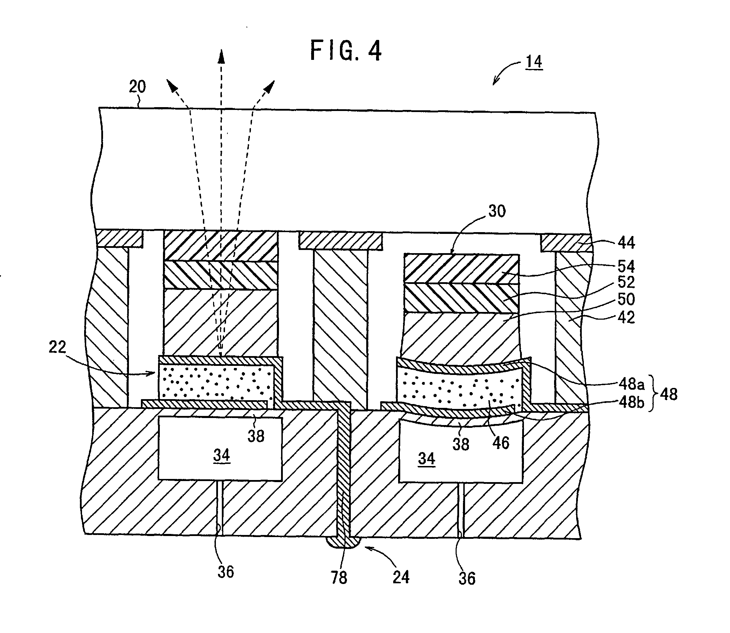

Specified embodiments of the actuator element 22 and the picture element assembly 30 will now be explained with reference to FIGS. 4 to 13. The embodiments shown in FIGS. 4 to 13 are illustrative of a case in which a gap-forming layer 44 is provided between the optical waveguide plate 20 and a crosspiece 42 as described later on.

At first, as shown in FIG. 4, each of the actuator elements 22 comprises the vibrating section 38 and the fixed section 40 described above, as well as a shape-retaining layer 46 composed of, for example, a piezoelectric/electrostrictive layer or an anti-ferroelectric layer directly formed on the vibrating section 38, and a pair of electrodes 48 (a row electrode 48a and a column electrode 48b) formed on an upper surface and a lower surface of the shape-retaining layer 46.

As shown in FIG. 4, the pair of electrodes 48 may have a structure in which they are formed on upper and lower sides of the shape-retaining layer 46, or they are formed on only one side of the shape-retaining layer 46. Alternatively, the pair of electrodes 48 may be formed on only the upper portion of the shape-retaining layer 46.

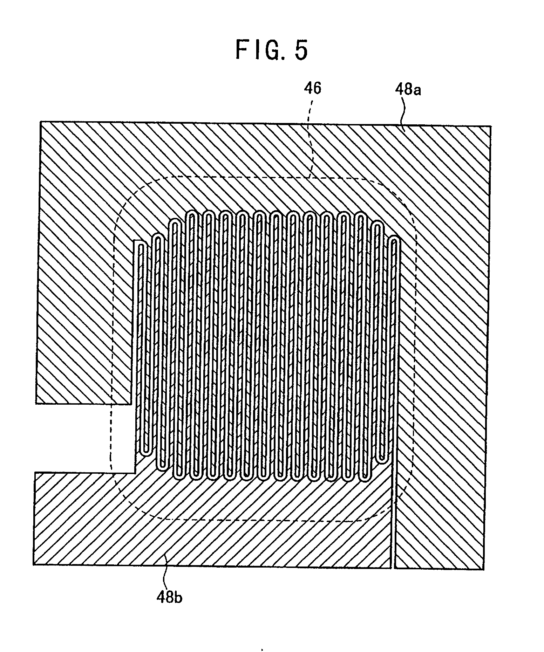

When the pair of electrodes 48 are formed on only the upper portion of the shape-retaining layer 46, the planar configuration of the pair of electrodes 48 may be a shape in which a large number of comb teeth are opposed to one another in a complementary manner as shown in FIG. 5. Alternatively, it is possible to adopt, for example, the spiral configuration and the branched configuration as disclosed in Japanese Laid-Open Patent Publication No. 10-78549 as well.

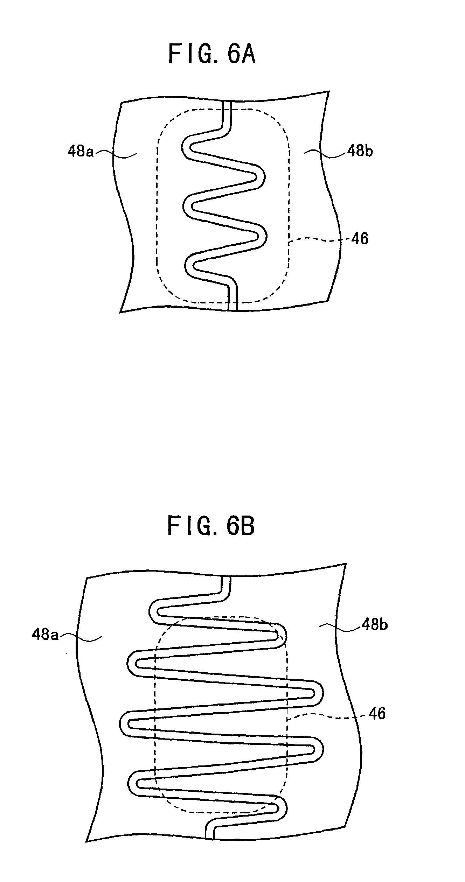

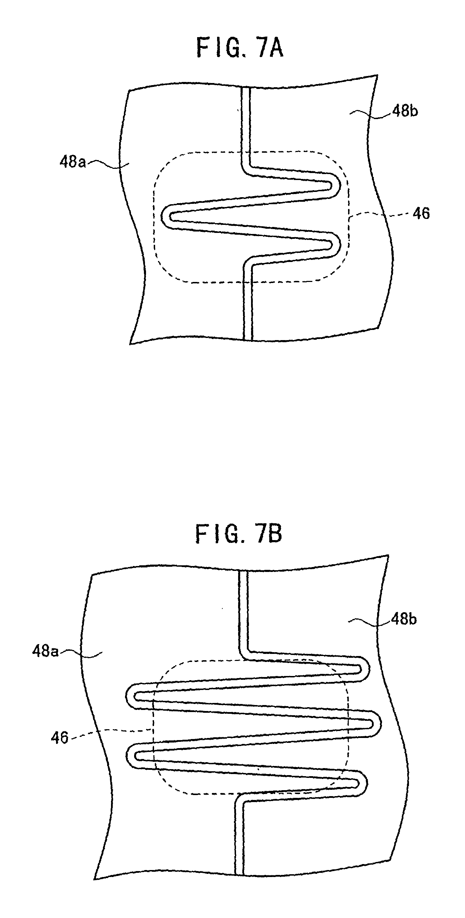

When the planar configuration of the shape-retaining layer 46 is, for example, an elliptic configuration, and the pair of electrodes 48 are formed to have a comb teeth-shaped configuration, then it is possible to use, for example, a form in which the comb teeth of the pair of electrodes 48 are arranged along the major axis of the shape-retaining layer 46 as shown in FIGS. 6A and 6B, and a form in which the comb teeth of the pair of electrodes 48 are arranged along the minor axis of the shape-retaining layer 46 as shown in FIGS. 7A and 7B.

It is possible to use, for example, the form in which the comb teeth of the pair of electrodes 48 are included in the planar configuration of the shape-retaining layer 46 as shown in FIGS. 6A and 7A, and the form in which the comb teeth of the pair of electrodes 48 protrude from the planar configuration of the shape-retaining layer 48 as shown in FIGS. 6B and 7B. The forms shown in FIGS. 6B and 7B are more advantageous to effect the bending displacement of the actuator element 22.

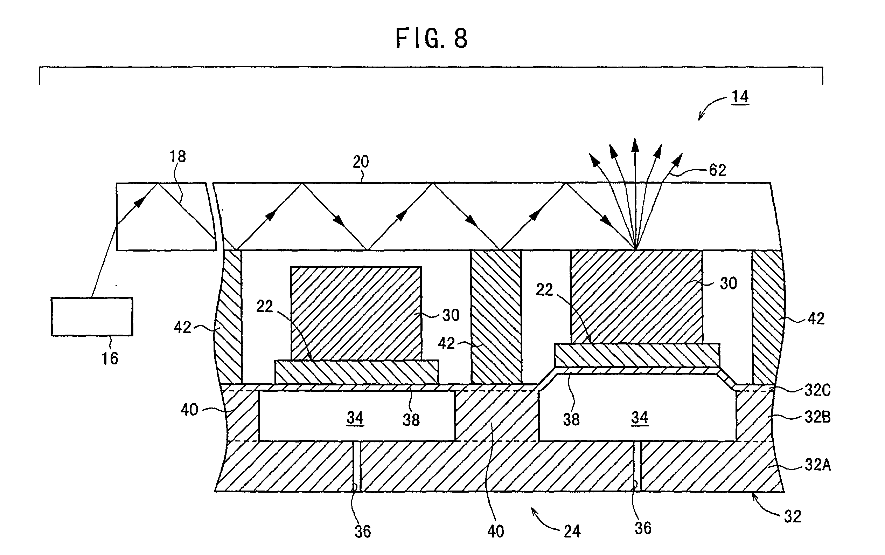

As shown in FIG. 4, for example, when the pair of electrodes 48 are constructed such that the row electrode 48a is formed on the upper surface of the shape-retaining layer 46, and the column electrode 48b is formed on the lower surface of the shape-retaining layer 46, the actuator element 22 can be subjected to bending displacement in a first direction so that it is convex toward the hollow space 34 as shown in FIG. 2. Alternatively, as shown in FIG. 8, the actuator element 22 can be subjected to bending displacement in a second direction so that it is convex toward the optical waveguide plate 20. The example shown in FIG. 8 is illustrative of a case in which the gap-forming layer 44 (see FIG. 4) is not formed.

On the other hand, as shown in FIG. 4, for example, the picture element assembly 30 can be constructed by a stack comprising a white scattering element 50 as a displacement-transmitting section formed on the actuator element 22, a color filter 52, and a transparent layer 54.

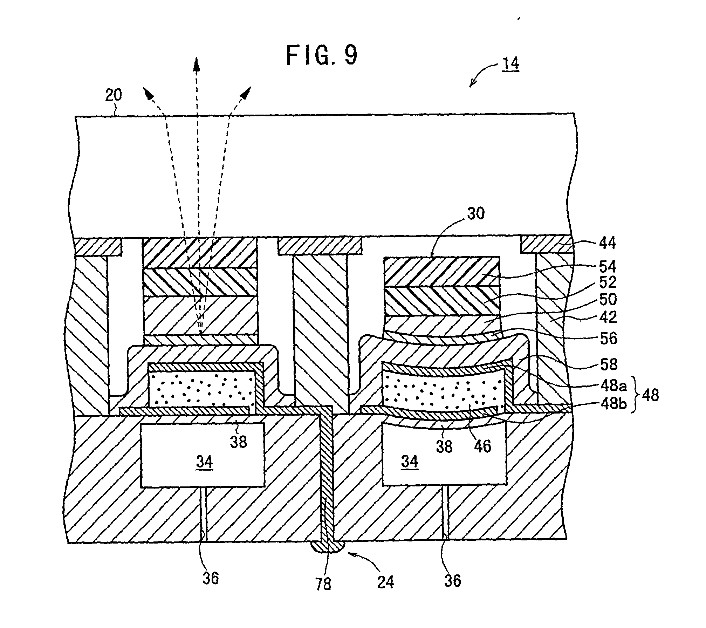

Further, as shown in FIG. 9, a light-reflective layer 56 may be allowed to intervene as a lower layer of the white scattering element 50. In this arrangement, it is desirable that an insulative layer 58 is formed between the light-reflective layer 56 and the actuator element 22.

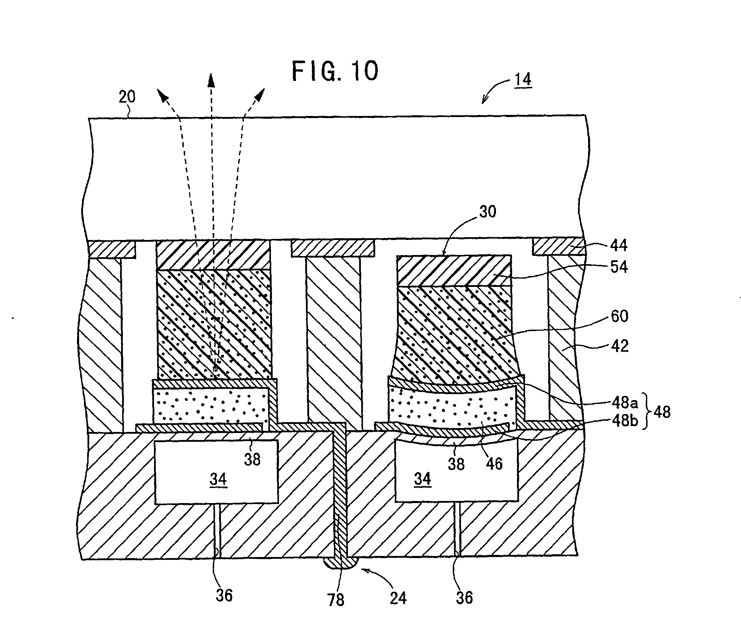

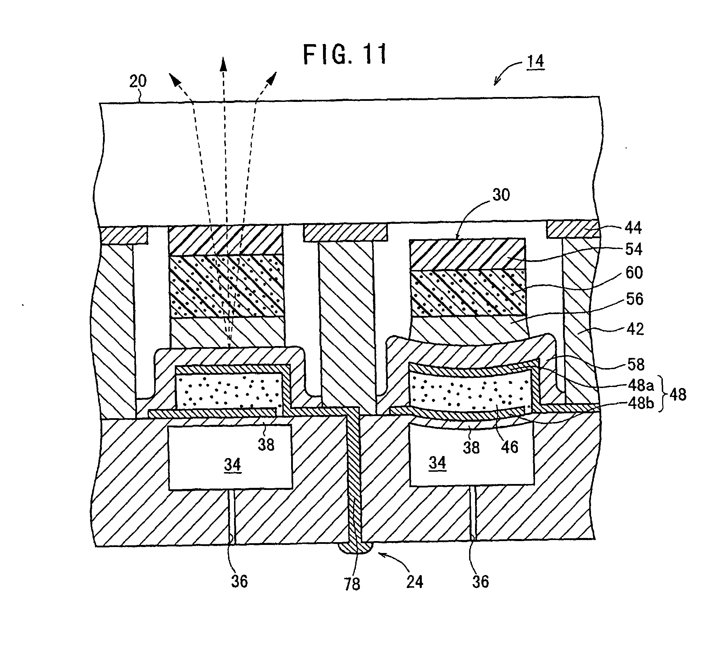

Another example of the picture element assembly 30 is, for example, as shown in FIG. 10. That is, the picture element assembly 30 can be also constructed by a stack comprising a color scattering element 60 to also serve as a displacement-transmitting section formed on the actuator element 22, and a transparent layer 54. Also in this case, as shown in FIG. 11, a light-reflective layer 56 and an insulative layer 58 may be allowed to intervene between the actuator element 22 and the color scattering element 60.

As shown in FIGS. 2, 4, and 8, the display unit 14 comprises the crosspieces 42 which are formed at the portions other than the picture element assembly 30 between the optical waveguide plate 20 and the actuator substrate 32. The example shown in FIG. 8 is illustrative of a case in which the optical waveguide plate 20 is directly secured to the upper surfaces of the crosspieces 42. It is preferable that the material for the crosspiece 42 is not deformed by heat and pressure.

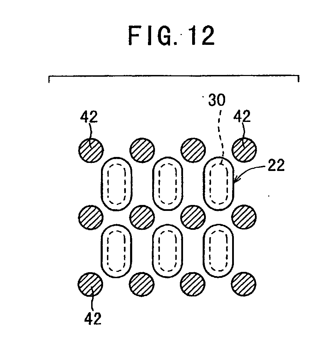

The crosspieces 42 can be formed, for example, at portions around four corners of the picture element assembly 30. The portions around four corners of the picture element assembly 30 are herein exemplified, for example, by positions corresponding to the respective corners as shown in FIG. 12, for example, when the picture element assembly 30 has a substantially rectangular or elliptic planar configuration. FIG. 12 is illustrative of a form in which one crosspiece 42 is shared by the adjoining picture element assembly 30.

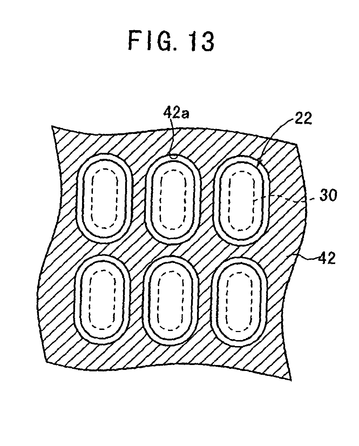

Another example of the crosspiece 42 is shown in FIG. 13. That is, the crosspiece 42 may be provided with windows 42a each of which surrounds at least one picture element assembly 30. The representative illustrative arrangement is as follows. That is, for example, the crosspiece 42 itself is formed to have a plate-shaped configuration. Windows (openings) 42a, each having a shape similar to the outer configuration of the picture element assembly 30, are formed at the positions corresponding to the picture element assemblies 30. Accordingly, all of the side surfaces of the picture element assembly 30 are consequently surrounded by the crosspiece 42. Thus, the actuator substrate 32 and the optical waveguide plate 20 are secured to one another more tightly.

Explanation will now be made for the respective constitutive members of the display unit 14, especially for the selection of the material or the like for the respective constitutive member.

At first, the light 18 to be introduced into the optical waveguide plate 20 may be any one of those of ultraviolet, visible, and infrared regions. Those usable as the light source 16 include, for example, incandescent lamp, deuterium discharge lamp, fluorescent lamp, mercury lamp, metal halide lamp, halogen lamp, xenon lamp, tritium lamp, light emitting diode, laser, plasma light source, hot cathode tube (or one arranged with carbon nano tube-field emitter in place of filament-shaped hot cathode), and cold cathode tube.

It is preferable that the vibrating section 38 is composed of a highly heat-resistant material, because of the following reason. That is, when the actuator element 22 has the structure in which the vibrating section 38 is directly supported by the fixed section 40 without using any material such as an organic adhesive which is inferior in heat resistance, the vibrating section 38 is preferably composed of a highly heat-resistant material in order that the vibrating section 38 is not deteriorated in quality at least during the formation of the shape-retaining layer 46.

It is preferable that the vibrating section 38 is composed of an electrically insulative material in order to electrically separate the wiring connected to the row electrode 48a of the pair of electrodes 48 formed on the actuator substrate 22, from the wiring (for example, data line) connected to the column electrode 48b.

Therefore, the vibrating section 38 may be composed of a material such as a highly heat-resistant metal and a porcelain enamel produced by coating a surface of such a metal with a ceramic material such as glass. However, the vibrating section 38 is optimally composed of ceramics.

Those usable as the ceramics for constructing the vibrating section 38 include, for example, stabilized zirconium oxide, aluminum oxide, magnesium oxide, titanium oxide, spinel, mullite, aluminum nitride, silicon nitride, glass, and mixtures thereof. Stabilized zirconium oxide is especially preferred because of, for example, high mechanical strength obtained even when the thickness of the vibrating section 38 is thin, high toughness, and small chemical reactivity with the shape-retaining layer 46 and the pair of electrodes 48. The term "stabilized zirconium oxide" includes fully stabilized zirconium oxide and partially stabilized zirconium oxide. Stabilized zirconium oxide has a crystal structure such as cubic crystal, and hence it does not cause phase transition.

On the other hand, zirconium oxide causes phase transition between monoclinic crystal and tetragonal crystal at about 1000 °C. Cracks appear during the phase transition in some cases. Stabilized zirconium oxide contains 1 to 30 mole % of a stabilizer such as calcium oxide, magnesium oxide, yttrium oxide, scandium oxide, ytterbium oxide, cerium oxide, and oxides of rare earth metals. In order to enhance the mechanical strength of the vibrating section 22, the stabilizer preferably comprises yttrium oxide. In this composition, yttrium oxide is contained preferably in an amount of 1.5 to 6 mole %, and more preferably 2 to 4 mole %. It is preferable that aluminum oxide is further contained in an amount of 0.1 to 5 mole %.

The crystal phase may be, for example, a mixed phase of cubic crystal + monoclinic crystal, a mixed phase of tetragonal crystal + monoclinic crystal, and a mixed phase of cubic crystal + tetragonal crystal + monoclinic crystal. However, among them, most preferred are those having a principal crystal phase composed of tetragonal crystal or a mixed phase of tetragonal crystal + cubic crystal, from viewpoints of strength, toughness, and durability.

When the vibrating section 38 is composed of ceramics, a large number of crystal grains construct the vibrating section 38. In order to increase the mechanical strength of the vibrating section 38, the crystal grains preferably have an average grain diameter of 0.05 to 2 µm, and more preferably 0.1 to 1 µm.

The fixed section 40 is preferably composed of ceramics. The fixed section 40 may be composed of the same ceramic material as that used for the vibrating section 38, or the fixed section 40 may be composed of a ceramic material different from that used for the vibrating section 38. Those usable as the ceramic material for constructing the fixed section 40 include, for example, stabilized zirconium oxide, aluminum oxide, magnesium oxide, titanium oxide, spinel, mullite, aluminum nitride, silicon nitride, glass, and mixtures thereof, in the same manner as the material for the vibrating section 38.

Especially, those preferably adopted for the actuator substrate 32 used in the display unit 14 include, for example, materials containing a major component of zirconium oxide, materials containing a major component of aluminum oxide, and materials containing a major component of a mixture thereof. Among them, those containing a major component of zirconium oxide are more preferable.

Clay or the like is added as a sintering aid in some cases. However, it is necessary to control components of the sintering aid in order not to contain an excessive amount of those liable to form glass such as silicon oxide and boron oxide because of the following reason. That is, although the materials which are liable to form glass are advantageous to join the actuator substrate 32 to the shape-retaining layer 46, the materials facilitate the reaction between the actuator substrate 32 and the shape-retaining layer 46, making it difficult to maintain a predetermined composition of the shape-retaining layer 46. As a result, the materials make a cause to deteriorate the element characteristics.

That is, it is preferable that silicon oxide or the like in the actuator substrate 32 is restricted to have a weight ratio of not more than 3 %, and more preferably not more than 1 %. The term "major component" herein refers to a component which exists in a proportion of not less than 50 % in weight ratio.

As described above, those usable as the shape-retaining layer 46 include piezoelectric/electrostrictive layers and anti-ferroelectric layers. However, when the piezoelectric/electrostrictive layer is used as the shape-retaining layer 46, those usable as the piezoelectric /electrostrictive layer include ceramics containing, for example, lead zirconate, lead magnesium niobate, lead nickel niobate, lead zinc niobate, lead manganese niobate, lead magnesium tantalate, lead nickel tantalate, lead antimony stannate, lead titanate, barium titanate, lead magnesium tungstate, and lead cobalt niobate, or any combination of them.

It is needless to say that the major component contains the compound as described above in an amount of not less than 50 % by weight. Among the ceramic materials described above, the ceramic material containing lead zirconate is most frequently used as the constitutive material for the piezoelectric/electrostrictive layer for constructing the shape-retaining layer 46.

When the piezoelectric/electrostrictive layer is composed of ceramics, it is also preferable to use ceramics obtained by appropriately adding, to the ceramics described above, oxide of, for example, lanthanum, calcium, strontium, molybdenum, tungsten, barium, niobium, zinc, nickel, and manganese, or any combination thereof or another type of compound thereof.

For example, it is preferable to use ceramics containing a major component composed of lead magnesium niobate, lead zirconate, and lead titanate and further containing lanthanum and strontium.

The piezoelectric/electrostrictive layer may be either dense or porous. When the piezoelectric/electrostrictive layer is porous, its porosity is preferably not more than 40 %.

When the anti-ferroelectric layer is used as the shape-retaining layer 46, it is desirable to use, as the anti-ferroelectric layer, a compound containing a major component composed of lead zirconate, a compound containing a major component composed of lead zirconate and lead stannate, a compound obtained by adding lanthanum to lead zirconate, and a compound obtained by adding lead zirconate and lead niobate to a component composed of lead zirconate and lead stannate.

Especially, when an anti-ferroelectric film, which contains the component composed of lead zirconate and lead stannate as represented by the following composition, is applied as a film-type element such as the actuator element 22, it is possible to perform the driving at a relatively low voltage:

$$Pb_{0.99}Nb_{0.02}[(Zr_xSn_{1-x})_{1-y}Ti_y]_{0.98}O_3$$

wherein, $0.5 < x < 0.6$, $0.05 < y < 0.063$, $0.01 < Nb < 0.03$. Therefore, application of such an anti-ferroelectric film is especially preferred.

The anti-ferroelectric film may be porous. When the anti-ferroelectric film is porous, it is desirable that the porosity is not more than 30 %.

Those usable as the method for forming the shape-retaining layer 46 on the vibrating section 38 include various types of the thick film formation method such as the screen printing method, the dipping method, the application method, and the electrophoresis method, and various types of the thin film formation method such as the ion beam method, the sputtering method, the vacuum evaporation method, the ion plating method, the chemical vapor deposition method (CVD), and the plating.

In this embodiment, when the shape-retaining layer 46 is formed on the vibrating section 38, the thick film formation method is preferably adopted, based on, for example, the screen printing method, the dipping method, the application method, and the electrophoresis method, because of the following reason.

That is, in the techniques described above, the shape-retaining layer 46 can be formed by using, for example, paste, slurry, suspension, emulsion, or sol containing a major component of piezoelectric ceramic particles having an average grain size of 0.01 to 5 μm, preferably 0.05 to 3 μm, in which it is possible to obtain good piezoelectric operation characteristics.

Especially, the electrophoresis method makes it possible to form the film at a high density with a high shape accuracy, and it further has the features as described in technical literatures such as "Electrochemistry and Industrial Physical Chemistry, Vol. 53, No. 1 (1985), pp. 63-68, written by Kazuo ANZAI" and "Proceedings of First Study Meeting on Higher Order Ceramic Formation Method Based on Electrophoresis (1998), pp. 5-6 and pp. 23-24". Therefore, the technique may be appropriately selected and used considering, for example, the required accuracy and the reliability.

It is preferable that the thickness of the vibrating section 38 has a dimension identical to that of the thickness of the shape-retaining layer 46, because of the following reason. That is, if the thickness of the vibrating section 38 is extremely thicker than the thickness of the shape-retaining layer 46 (if the former is different from the latter by not less than one figure), when the shape-retaining layer 46 makes shrinkage upon sintering, then the vibrating section 38 behaves to inhibit the shrinkage. For this reason, the stress at the boundary surface between the shape-retaining layer 46 and the actuator substrate 22 is increased, and consequently they are easily peeled off from each other. On the contrary, when the dimension of the thickness is in an identical degree between the both, it is easy for the actuator substrate 32 (vibrating section 38) to follow the shrinkage of the shape-retaining layer 46 upon sintering. Accordingly, such dimension of the thickness is preferred to achieve integration. Specifically, the vibrating section 38 preferably has a thickness of 1 to 100 μm, more preferably 3 to 50 μm, and much more preferably 5 to 20 μm. On the other hand, the shape-retaining layer 46 preferably has a thickness of 5 to 100 μm, more preferably 5 to 50 μm, and much more preferably 5 to 30 μm.

The row electrode 48a and the column electrode 48b formed on the upper surface and the lower surface of the shape-retaining layer 46, or the pair of electrodes 34 formed on the shape-retaining layer 46 are allowed to have an appropriate thickness depending on the use or application. However, the thickness is preferably 0.01 to 50 μm, and more preferably 0.1 to 5 μm. The row electrode 48a and the column electrode 48b are preferably composed of a conductive metal which is solid at room temperature. The metal includes, for example, metal simple substances or alloys containing, for example, aluminum, titanium, chromium, iron, cobalt, nickel, copper, zinc, niobium, molybdenum, ruthenium, rhodium, silver, stannum, tantalum, tungsten, iridium, platinum, gold, and lead. It is needless to say that these elements may be contained in an arbitrary combination.

The optical waveguide plate 20 has an optical refractive index with which the light 18 introduced into the inside thereof is totally reflected by the front and back surfaces without being transmitted to the outside of the optical waveguide plate 20. It is necessary for the optical waveguide plate 20 to use those having a large and uniform light transmittance in the wavelength region of the light 18 to be introduced. The material for the optical waveguide plate 20 is not specifically limited provided that it satisfies the foregoing characteristic. However, specifically, those generally used for the optical waveguide plate 20 include, for example, glass, quartz, light-transmissive plastics such as acrylic plastics, light-transmissive ceramics, structural materials comprising a plurality of layers composed of materials having different refractive indexes, and those having a surface coating layer.

The color layer such as the color filter 52 and the color scattering element 60 included in the picture element assembly 30 is the layer which is used to extract only the light in a specified wavelength region, and it includes, for example, those which develop the color by absorbing, transmitting, reflecting, or scattering the light at a specified wavelength, and those which convert incident light into light having a different wavelength. The transparent member, the semitransparent member, and the opaque member can be used singly or in combination.

The color layer is constructed, for example, as follows. That is, the color layer includes, for example, those obtained by dispersing or dissolving a dyestuff or a fluorescent material such as dye, pigment, and ion in rubber, organic resin, light-transmissive ceramic, glass, liquid or the like, those obtained by applying the dyestuff or the fluorescent material on the surface of the foregoing material, those obtained by sintering, for example, the powder of the dyestuff or the fluorescent material, and those obtained by pressing and solidifying the powder of the dyestuff or the fluorescent material. As for the material quality and the structure, the materials may be used singly, or the materials may be used in combination.

The difference between the color filter 52 and the color scattering element 60 lies in whether or not the luminance value of leakage light obtained by reflection and scattering effected by only the color layer is not less than 0.5-fold the luminance value of leakage light obtained by reflection and scattering effected by the entire structure including the picture element assembly 30 and the actuator element 22, when the light emission state is given by allowing the picture element assembly 30 to make contact with the optical waveguide plate 20 into which the light 18 is introduced. If the former luminance value is not less than 0.5-fold the latter luminance value, the color layer is defined to be the color scattering element 60. If the former luminance value is less than 0.5-fold the latter luminance value, the color layer is defined to be the color filter 52.

The measuring method is specifically exemplified as follows. That is, it is assumed that when the color layer is singly allowed to make contact with the back surface of the optical waveguide plate 20 into which the light 18 is introduced, A(nt) represents the front luminance of the light which passes from the color layer through the optical waveguide plate 20 and which leaks to the front surface. Further, it is assumed that when the picture element assembly 30 is allowed to make contact with the surface of the color layer on the side opposite to the side to make contact with the optical waveguide plate 20, B (nt) represents the front luminance of the light which leaks to the front surface. If $A \geq 0.5 \times B$ is satisfied, the color layer is the color scattering element 60. If $A < 0.5 \times B$ is satisfied, the color layer is the color filter 52.

The front luminance is the luminance measured by arranging a luminance meter so that the line to connect the color layer to the luminance meter for measuring the luminance is perpendicular to the surface of the optical waveguide plate 20 to make contact with the color layer (the detection surface of the luminance meter is parallel to the plate surface of the optical waveguide plate 20).

The color scattering element 60 is advantageous in that the color tone and the luminance are scarcely changed depending on the thickness of the layer. Accordingly, those applicable as the method for forming the layer includes various methods such as the screen printing which requires inexpensive cost although it is difficult to strictly control the layer thickness.

Owing to the arrangement in which the color scattering element 60 also serves as the displacement-transmitting section, it is possible to simplify the process for forming the layer. Further, it is possible to obtain a thin entire layer thickness. Therefore, the thickness of the entire display unit 14 can be made thin. Further, it is possible to avoid the decrease in displacement amount of the actuator element 22, and improve the response speed.

The color filter 52 has the following advantages. That is, when the layer is formed on the side of the optical waveguide plate 20, the layer can be easily formed, because the optical waveguide plate 20 is flat, and it has high surface smoothness. Thus, the range of process selection is widened, and the cost becomes inexpensive. Further, it is easy to control the layer thickness which may affect the color tone and the luminance.

The method for forming the film of the color layer such as the color filter 52 and the color scattering element 60 is not specifically limited, to which it is possible to apply a variety of known film formation methods. Those usable include, for example, a film lamination method in which the color layer in a chip form or in a film form is directly stuck on the surface of the optical waveguide plate 20 or the actuator element 22, as well as a method for forming the color layer in which, for example, powder, paste, liquid, gas, or ion to serve as a raw material for the color layer is formed into a film in accordance with the thick film formation method such as the screen printing, the photolithography method, the spray dipping, and the application, or in accordance with the thin film formation method such as the ion beam, the sputtering, the vacuum evaporation, the ion plating, CVD, and the plating.

Alternatively, it is also preferable that a light emissive layer is provided for a part or all of the picture element assembly 30. Those usable as the light-emissive layer include a fluorescent layer. The fluorescent layer includes those which are excited by invisible light (ultraviolet light and infrared light) to emit visible light, and those which are excited by visible light to emit visible light. However, any of them may be used.

A fluorescent pigment may be also used for the light-emissive layer. The use of the fluorescent pigment is effective for those added with fluorescent light having a wavelength approximately coincident with the color of the pigment itself, i.e., the color of reflected light such that the color stimulus is large corresponding thereto, and the light emission is vivid. Therefore, the fluorescent pigment is used more preferably to obtain the high luminance for the display unit and the display. A general daylight fluorescent pigment is preferably used.

A stimulus fluorescent material, a phosphorescent material, or a luminous pigment is also used for the light-emissive layer. These materials may be either organic materials or inorganic materials.

Those preferably used include those formed with the light-emissive layer by using the light-emissive material as described above singly, those formed with the light-emissive layer by using the light-emissive material as described above dispersed in resin, and those formed with the light-emissive layer by using the light-emissive material as described above dissolved in resin.

The afterglow or decay time of the light-emissive material is preferably not more than 1 second, more preferably 30 milliseconds. More preferably, the afterglow or decay time is not more than several milliseconds.

When the light-emissive layer is used as a part or all of the picture element assembly 30, the light source 16 is not specifically limited provided that it includes the light having a wavelength capable of exciting the light-emissive layer and it has an energy density sufficient for excitation. Those usable include, for example, cold cathode tube, hot cathode tube (or one arranged with carbon nano tube-field emitter in place of filament-shaped hot cathode), metal halide lamp, xenon lamp, laser including infrared laser, black light, halogen lamp, incandescent lamp, deuterium discharge lamp, fluorescent lamp, mercury lamp, tritium lamp, light emitting diode, and plasma light source.

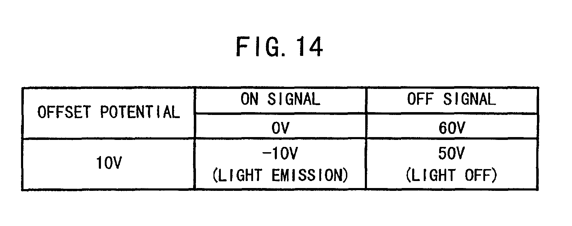

Next, the operation of the display 10 will be briefly explained with reference to FIG. 2. As shown in FIG. 14, the description of the operation is illustrative of a case in which the offset potential, which is used and applied to the row electrode 48a of each of the actuator elements 22, is, for example, 10 V, and the electric potentials of the ON signal and the OFF signal, which are used and applied to the column electrode 48b of each of the actuator elements 22, are 0 V and 60 V respectively.

Therefore, the low level voltage (-10 V) is applied between the column electrode 48b and the row electrode 48a in the actuator element 22 in which the ON signal is applied to the column electrode 48b. The high level voltage (50 V) is applied between the column electrode 48b and the row electrode 48a in the actuator element 22 in which the OFF signal is applied to the column electrode 48b.

At first, the light 18 is introduced, for example, from the end portion of the optical waveguide plate 20. In this embodiment, all of the light 18 is totally reflected at the inside of the optical waveguide plate 20 without being transmitted through the front and back surfaces thereof by controlling the magnitude of the refractive index of the optical waveguide plate 20, in the state in which the picture element assembly 30 does not make contact with the optical waveguide plate 20. The reflection factor n of the optical waveguide plate 20 is desirably 1.3 to 1.8, and more desirably 1.4 to 1.7.

In this embodiment, in the natural state of the actuator element 22, the end surface of the picture element assembly 30 contacts with the back surface of the optical waveguide plate 20 at the distance of not more than the wavelength of the light 18. Therefore, the light 18 is reflected by the surface of the picture element assembly 30, and it behaves as scattered light 62. A part of the scattered light 62 is reflected again in the optical waveguide plate 20. However, almost all of the scattered light 62 is not reflected by the optical waveguide plate 20, and it is transmitted through the front surface (face) of the optical waveguide plate 20. Accordingly, all of the actuator elements 22 are in the ON state, and the ON state is expressed in a form of light emission. Further, the color of the light emission corresponds to the color of the color filter 52 or the color scattering element 60 included in the picture element assembly 30, or the color of the light emissive layer described above. In this case, all of the actuator elements 22 are in the ON state. Therefore, the white color is displayed on the screen of the display 10.

Starting from this state, when the OFF signal is applied to the actuator element 22 corresponding to a certain dot 26, the concerning actuator element 22 makes the bending displacement to be convex toward the hollow space 20 as shown in FIG. 2, i.e., it makes the bending displacement in the first direction. The end surface of the picture element assembly 30 is separated from the optical waveguide plate 20, and the concerning actuator element 22 is in the OFF state. The OFF state is expressed in a form of light off.

That is, in the display 10, the presence or absence of light emission (leakage light) at the front surface of the optical waveguide plate 20 can be controlled depending on the presence or absence of the contact of the picture element assembly 30 with the optical waveguide plate 20.

Especially, in the display 10, one unit for making the displacement action of the picture element assembly 30 in the direction to make contact or separation with respect to the optical waveguide plate 20 is arranged in the vertical direction to be used as one dot. The array of the three dots in the horizontal direction (red dot 26R, green dot 26G, and blue dot 26B) is used as one picture element. A large number of the picture elements are arranged in a matrix configuration or in a zigzag configuration concerning the respective rows. Therefore, it is possible to display a color screen image (characters and graphics) corresponding to the image signal on the front surface of the optical waveguide plate 20, i.e., on the display surface, in the same manner as in the cathode ray tube, the liquid crystal display device, and the plasma display, by controlling the displacement action in each of the picture elements in accordance with the attribute of the inputted image signal.

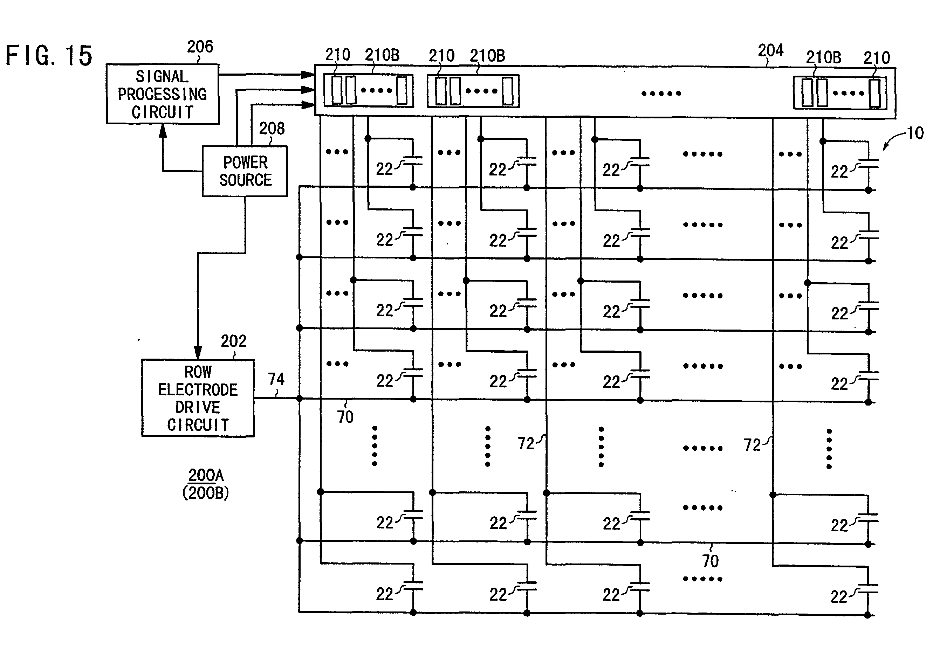

In the display 10, as shown in FIG. 15, the wirings connected to the row electrode 48a and the column electrode 48b include wirings 70 of a number corresponding to the number of rows of the large number of actuator elements 22, and data lines 72 of a number corresponding to the number of all of the actuator elements 22. The wirings 70 are connected to a common wiring 74 at an intermediate position.

In the display 10, the column electrodes 48b of the actuator elements 22 are connected to the data lines 72. The common wiring 70 is connected to the actuator elements 22 corresponding to one row. The data lines 72 are formed, for example, on the back surface side of the actuator substrate 32.

The wiring 70 is led from the row electrode 48a in relation to the actuator element 22 in the previous column, and it is connected to the row electrode 48a in relation to the concerning actuator element 22, giving a form of being wired in series concerning one row. The column electrode 48b and the data line 72 are electrically connected to one another via the through-hole 78 formed in the actuator substrate 32.

An unillustrated insulating film, which is composed of, for example, a silicon oxide film, a glass film, or a resin film, is allowed to intervene at the portion of intersection between each of the wirings 70 and each of the data lines 72 in order to effect insulation between the mutual wirings 70, 72.

As shown in FIG. 15, a first driving unit 200A comprises a row electrode drive circuit 202 mounted at the periphery of the display 10, a column electrode drive circuit 204, and a signal processing circuit 206 for controlling at least the column electrode drive circuit 204.

The row electrode drive circuit 202 is constructed so that the offset potential (bias potential) is supplied to the row electrodes 48a of all of the actuator elements 22 via the common wiring 74 and the respective wirings 70. One type of offset power source voltage is supplied by the aid of a power source 208.

The column electrode drive circuit 204 includes driver outputs 210 of a number corresponding to the number of all of the dots, and a plurality of driver IC's 210B incorporated with a predetermined number of driver outputs 210. The column electrode drive circuit 204 is constructed so that the data signal is outputted in parallel to the respective data lines 72 of the display 10 to supply the data signal to all of the dots respectively.

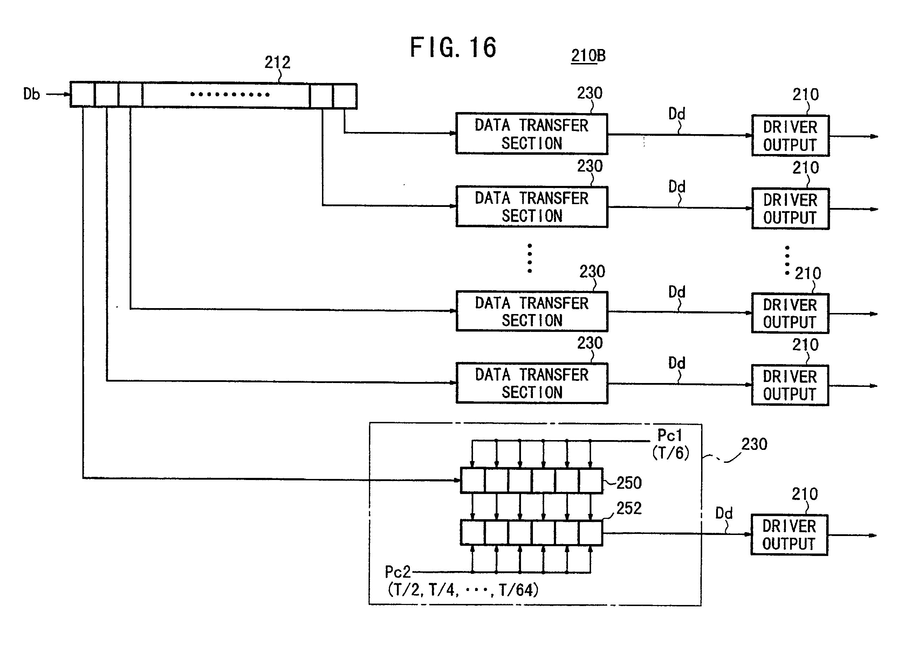

As shown in FIG. 16, each of the driver IC's 210B has, for example, a shift register 212 composed of 240 bits. A data transfer section 230 and a driver output 210 are connected to each of the bits of the shift register 212 respectively. Each bit data of the data of 240 bits (block data Db), which is supplied to the shift register 212, is dot data Dd to be supplied to the corresponding dot respectively.

The data transfer section 230 may comprise two shift registers (first and second shift registers 250, 252).

The first shift register 250 may be composed of a shift register of the series input parallel output in which the dot data Dd is received in series in accordance with the bit shift operation based on a constant shift clock Pc1 (= T/6), and the 6-bit dot data Dd is outputted in parallel at a stage at which the 6-bit dot data Dd is received.

The second shift register 252 may be composed of a shift register of the parallel input series output in which the dot data Dd stored in the first shift register 250 is received in parallel, and the bit information of the dot data Dd is successively outputted on the basis of a shift clock Pc2 having the timing (T/2, T/4,..., T/64) corresponding to the temporal length of the subfield SF1 to SF6.

That is, the second shift register 252 is operated as follows. The bit information of 0th bit stored in LSB is supplied as it is to the corresponding driver output 210 of the column electrode drive circuit 204 at the point of time of the transfer from the first shift register 250. The overall bit information is bit-shifted to the right side at the point of time of the elapse of the first shift clock Pc2 (= T/2). The bit information of 1st bit, which is located at LSB, is supplied as it is to the driver output 210.

Subsequently, the overall bit information is bit-shifted to the right side at the point of time of the elapse of the shift clock Pc2 (= T/4). The bit information of 2nd bit, which is located at LSB, is supplied as it is to the driver output 210. Similarly, every time when the shift clock Pc2 successively elapses to T/8, T/16, T/32, and T/64, the overall bit information is bit-shifted. The bit information of 3rd bit, 4th bit, 5th bit, and 6th bit, which is located at LSB every time when the bit shift is performed, is successively supplied to the driver output 210.

Two types of data power source voltages are supplied to each of the driver outputs 210 by the aid of the power source 208 as well.

It is necessary to ensure a wide area to lead the data lines 72, because the data lines 72 are connected to all of the dots from the column electrode drive circuit 204. Further, it is necessary to consider the influence of the time constant (for example, the attenuation of the signal) caused by the wiring resistance and the wiring capacity brought about by the increase in wiring length of the data lines 72. However, in this embodiment, the display 10 is divided into 1200 individuals of the display units 14. Therefore, it is enough that the leading of the data lines 72 from the column electrode drive circuit 204 is considered in the unit of the display unit 14. It is unnecessary to ensure any area to form the wide wiring. It is also enough that the wiring capacity and the wiring resistance are considered in the unit of the display unit 14. Therefore, the attenuation of the signal or the like is not caused.

The two types of the data power source voltages are a high level voltage which is sufficient to allow the actuator element 22 to make the bending displacement downwardly, and a low level voltage which is sufficient to restore the actuator element 22 to the original state, as described later on.

The signal processing circuit 206 is constructed to control the column electrode drive circuit 204 so that the gradation control is performed at least in accordance with the temporal modulation system.

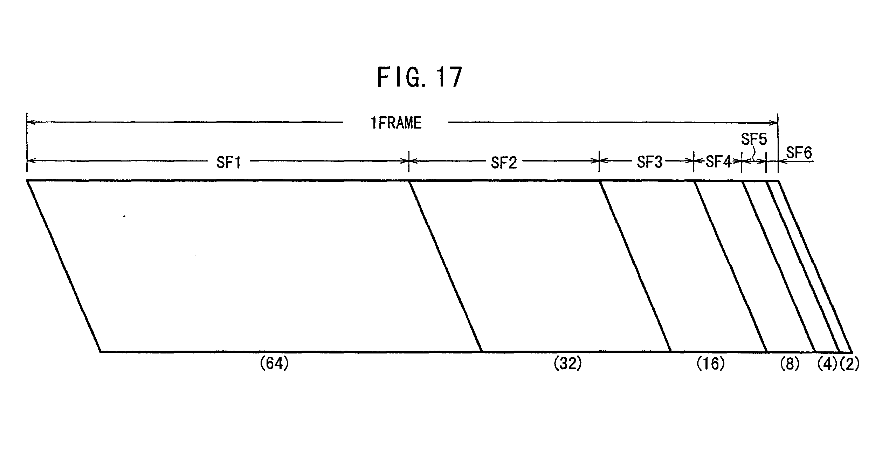

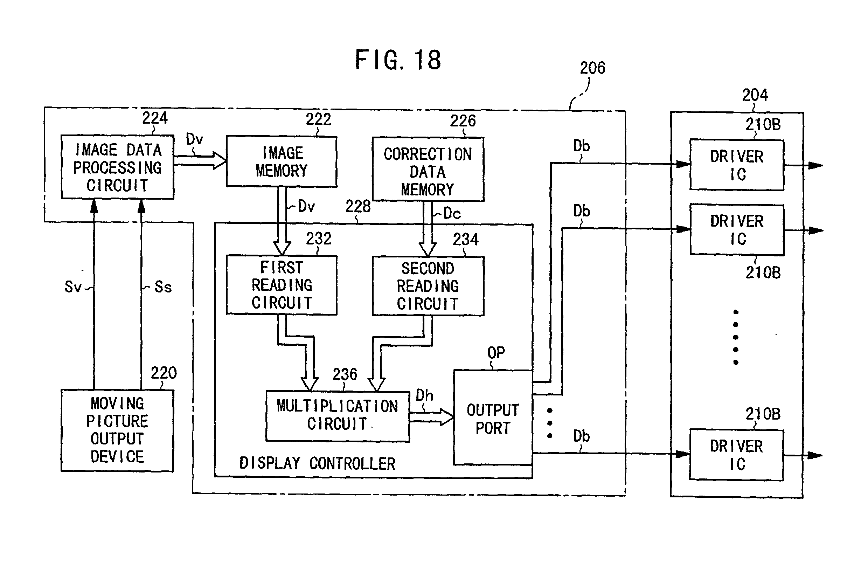

The gradation control based on the temporal modulation system will now be explained with reference to FIGS. 17 and 18. At first, it is assumed that the display period for one sheet of image is one frame, and one divided period, which is obtained by dividing one frame, for example, into six, is a subfield. On this assumption, the setting is made such that the initial subfield (first subfield SF1) is the longest, and the following subfields are shortened at a ratio of 1/2 as the number of subfield increases.

The length of the subfield is represented by the magnitude of the data value as follows. That is, as shown in FIG. 17, the setting is made such that when the period of the first subfield SF1 is, for example, "64", then the second subfield SF2 is "32", the third subfield SF3 is "16", the fourth subfield SF4 is "8", the fifth subfield SF5 is "4", and the sixth subfield SF6 is "2".

In the signal processing circuit 206, the display time corresponding to each of the gradation levels is allotted to the respective subfields SF1 to SF6 for all of the dots to prepare the dot data. The dot data is outputted as each of the data signals in the period of each of the subfields SF1 to SF6 by the aid of the column electrode drive circuit 204.

Taking notice of one dot data, the display time corresponding to the gradation level of the dot is assigned to the time width allotted to each of the subfields. Therefore, there are a case in which the assignment is made to all of the subfields and a case in which the assignment is made to some of the subfields.

For example, when the gradation level of the concerning dot is, for example, 126, all of the subfields SF1 to SF6 are selected. The dot data resides in a bit string of "000000". When the gradation level is 78, the first, fourth, fifth, and sixth subfields SF1, SF4, SF5, SF6 are selected. The dot data resides in a bit string of "011000".

The data signal is an analog signal which is changed to the high level and the low level depending on each bit information of the bit string for constructing the dot data. If the bit information is logically "0", the low level voltage (ON signal) is given. If the bit information is logically "1", the high level voltage (OFF signal) is given.

That is, the following output form is available for the data signal outputted to the concerning actuator element 22. That is, for example, the ON signal (low level voltage) is outputted for the selected subfield, and the OFF signal (high level voltage) is outputted for the unselected subfield.

Specifically, as shown in FIG. 18, the signal processing circuit 206 comprises an image data processing circuit 224 for inputting a synchronization signal Ss and an moving picture signal Sv (for example, an analog moving picture signal) based on the progressive system from an moving picture output device 220 to make conversion into digital image data Dv in a unit of frame to be written into an image memory 222 (frame buffer), a correction data memory 226 for recording gradation correction data Dc set in a unit of dot, and a display controller 228 for reading the image data Dv from the image memory 222 and the gradation correction data Dc from the correction data memory 226 to multiply them to obtain corrected image data Dh.

The moving picture output device 220 is exemplified, for example, by personal computers and VTR for receiving and outputting the moving picture recorded on a recording medium or the moving picture sent by communication (including, for example, radio wave and cable).

The display controller 228 includes a first reading circuit 232 for reading the image data Dv from the image memory 222, a second reading circuit 234 for reading the gradation correction data Dc from the correction data memory 226, and a multiplication circuit 236 for multiplying the image data Dv and the gradation correction data Dc read from the first and second reading circuits 232, 234 to obtain corrected image data Dh, and an output port 238 for outputting the corrected image data Dh obtained by the multiplication circuit 236 in parallel.

The data transfer rate in the first driving unit 200A will now be considered. It is necessary to transfer the 6-bit data per one dot during the period T of one frame, the following expression is given:

$$43 \text{ Hz} \times 6 \text{ bit} \times (640 \times 3 \times 480) = 238 \text{ Mbps}.$$

When an IC having an operation clock of, for example 1 MHz is used for the column electrode drive circuit 204, it is necessary to perform 1-bit transfer in parallel of 238 MHz/1MHz = 238.

Therefore, the output port OP of the display controller 228 has 238 individuals of output terminals for data transfer. The corrected image data Dh outputted from the multiplication circuit 236 is realigned corresponding to the respective output terminals to make output in parallel as the block data Db from the respective output terminals. In this case, the rate of transfer (transfer rate) in 1-bit unit in parallel from each of the output terminals is 1 MHz.

The first driving unit 200A is basically constructed as described above. Next, its function and effect will be explained.

At first, the synchronization signal Ss and the moving picture signal Sv from the moving picture output device 220 are inputted into the image data processing circuit 224. The image data processing circuit 224 converts the inputted moving picture signal Sv into the digital image data Dv in the unit of frame on the basis of the synchronization signal Ss, and the image data Dv is written into the image memory 222 (frame buffer).

The display controller 228 reads the image data Dv written in the image memory 222 and the gradation correction data Dc from the correction data memory 226, and it multiplies them to obtain the corrected image data Dh (image data arranged with 6-bit dot data in the unit of one dot).

The corrected image data Dh is realigned at the output port OP in the data form corresponding to the output terminals respectively. After that, the corrected image data Dh is outputted from the output port OP in parallel of 238 individuals at the transfer rate of 1 bit/1 MHz, and it is supplied to each of the corresponding driver IC's 210.

In each of the driver IC's 210B, the block data Db, which is sent from the output port OP, is supplied to the shift register 212. At a stage at which 240 individuals of the bit strings are aligned in the shift register 212, the bit strings are sent in parallel as the dot data Dd to the corresponding data transfer sections 230 respectively.

That is, each of the data transfer sections 230 performs the operation such that the dot data Dd sent from the shift register 212 is read at the constant shift clock Pc1, and the dot data Dd is outputted at the timing corresponding to the start timing (T/2, T/4,..., T/64) of each of the subfields SF1 to SF6.

The dot data Dd outputted from each of the data transfer sections 230 is supplied to each of the corresponding driver outputs 210. The driver output 210 makes conversion into the data signal based on the bit information contained in the dot data Dd to make output to each of the corresponding dots via the data line 72.

That is, the bit information contained in the corresponding dot data Dd is supplied as the data signal to each of the dots while being subjected to increment in synchronization with the start timing of each of the subfields SF1 to SF6.

Accordingly, a color screen image corresponding to the image data Dv is displayed on the screen of the display 10.

As described above, in the first driving unit 200A, one dot 26 is constructed by one or more actuator elements 22, and one picture element 28 is constructed by one or more dots 26. In this arrangement, the driving unit 200A comprises the row electrode drive circuit 202 for applying the offset potential (bias potential) to all of the actuator elements 22, the column electrode drive circuit 204 for outputting the data signal composed of the ON signal and the OFF signal for each dot on the basis of the image data Dv, and the signal processing circuit 206 for controlling the row electrode drive circuit 202 and the column electrode drive circuit 204. The column electrode drive circuit 204 is controlled so that the gradation control is performed at least in accordance with the temporal modulation system by the aid of the signal processing circuit 206. Therefore, it is enough to use one type of the offset power source voltage as the power source voltage to be supplied to the row electrode drive circuit 202. Accordingly, it is easy to realize the custom IC architecture for the row electrode drive circuit 202. It is possible to increase the degree of freedom for the design and the production of the driving unit 200A. It is possible to realize low electric power consumption as well.

Further, as for the column driver IC (column electrode drive circuit 204), it is unnecessary to use, for IC itself, any expensive one such as those having the high function, for example, PWM modulation. Basically, it is possible to use multiple-output low price IC merely having a data input shift register and a level shifter. These components are also advantageous to miniaturize the mounting contour size of bare chip, TCP or the like. It is easy to save the space for the portion on which the driving IC is mounted. Therefore, it is also easy to realize a thin type of the display 10. This results in the reduction of the production cost of the display 10.

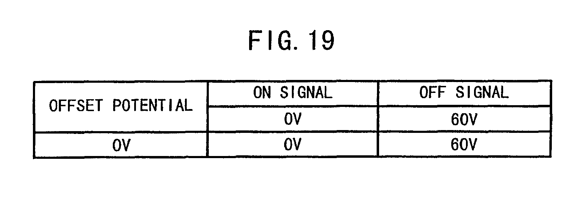

The embodiment described above is illustrative of the case in which the offset potential, which is applied to the row electrode 48a of each of the actuator elements 22, is 10 V. Alternatively, as shown in FIG. 19, the offset potential may be 0 V. In this case, the ground electric potential may be used as the offset potential. Therefore, it is possible to decrease the number of power sources by one.

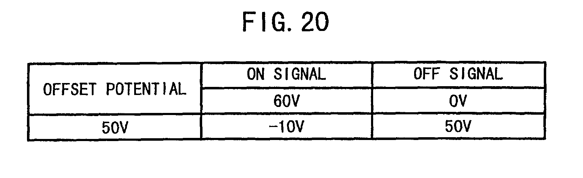

Further alternatively, for example, as shown in FIG. 20, it is also preferable that the polarization of the voltage application is inverted. For example, the offset potential may be +50 V, and the respective potentials of the ON signal and the OFF signal may be 60 V and 0 V. In this case, the polarization direction of the shape-retaining layer 46 is also inverted.

Further, another technique is available as follows. That is, for example, the pattern of the voltage application shown in FIG. 14 (for example, positive logic) and the pattern of the voltage application shown in FIG. 20 (for example, negative logic) may be switched periodically or temporarily in a state in which the previously established direction of polarization of the shape-retaining layer 46 is the first direction.

For example, if the voltage application pattern of only the positive logic is repeated for a long period of time, it is feared that the decrease in displacement may be caused in the actuator element 22. Accordingly, the decrease in displacement in the actuator element 22 is compensated by using the voltage application pattern of the negative logic periodically or temporarily. Thus, it is possible to realize the stable and durable ON/OFF operation of the picture element assembly 30.

The voltage application pattern may be switched, for example, such that the voltage application pattern based on the positive logic is used during the actual display period in which the image is displayed on the display 10, and the voltage application pattern based on the negative logic is used during the non-display period in which the image is not displayed on the display 10.

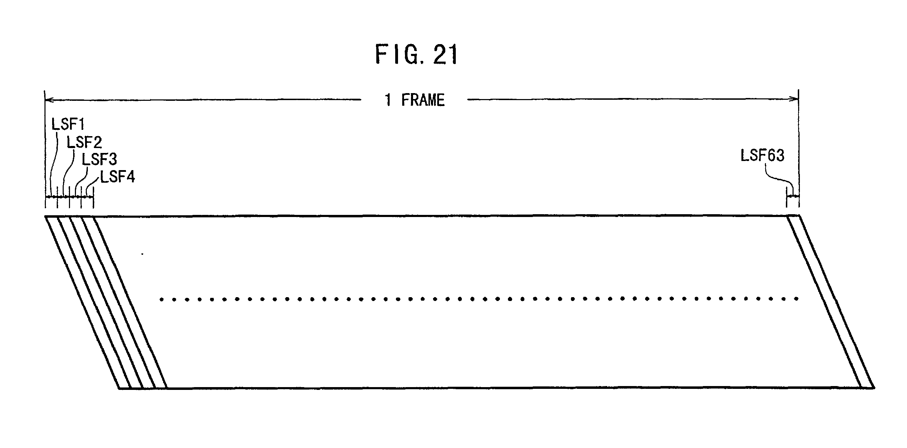

Next, a second driving unit 200B will be explained with reference to FIGS. 21 to 27.

In the second driving unit 200B, the gradation control based on the temporary modulation system in the signal processing circuit 206 is partially different. As shown in FIG. 21, it is assumed that the display period for one sheet of image is one frame, and one divided period, which is obtained by equally dividing the one frame into a plurality of ones, is a linear subfield. On this assumption, the signal processing circuit 206 continuously allots the display time corresponding to each of the gradation levels for each of the dots to the necessary linear subfield to prepare the dot data.

For example, when the maximum gradation is 64-gradation, 63 individuals of linear subfields LSF1 to LSF63 are allotted to the period of one frame. The dot data Dd is constructed by 1-bit data per one linear subfield.

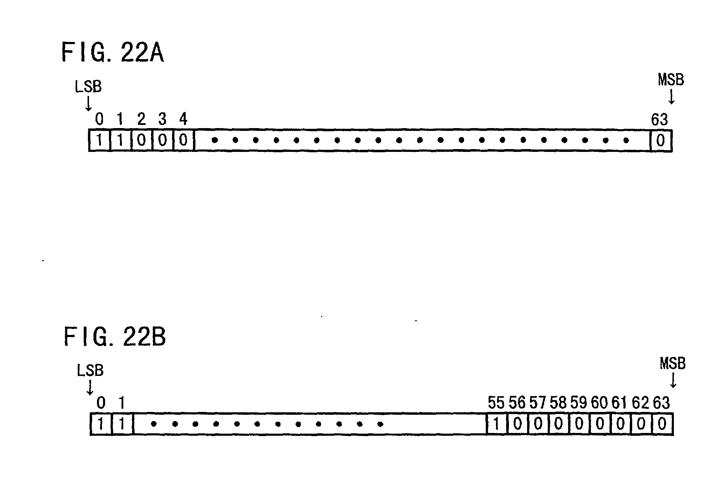

Specifically, when the gradation level of a certain dot is 62, as shown in FIG. 22A, the dot data is prepared such that 0-bit and 1-bit are "1" respectively, and the remaining continuous 2-bit to 63-bit are "0". When the gradation level is 8, as shown in FIG. 22B, the dot data is prepared such that continuous 0-bit to 55-bit are "1", and the remaining continuous 56-bit to 63-bit are "0".

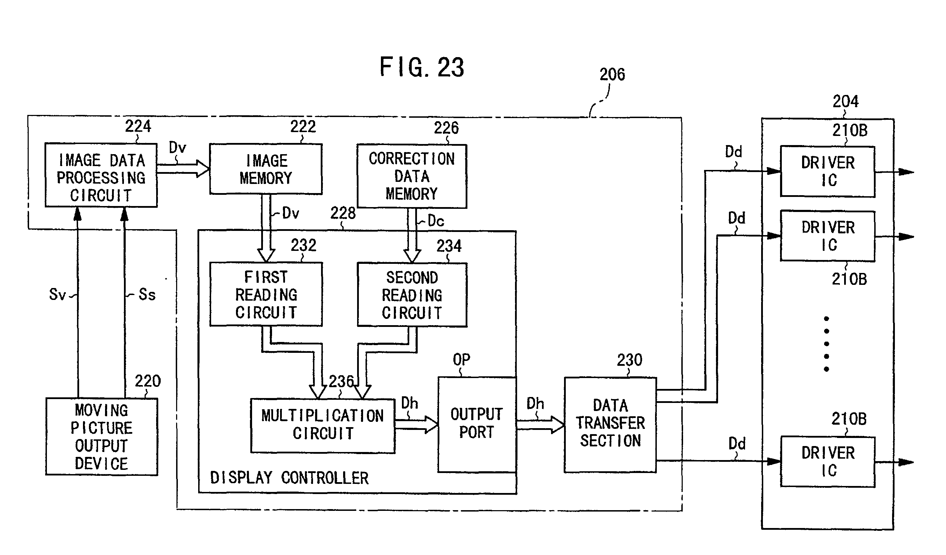

As shown in FIG. 23, the second driving unit 200B is constructed in approximately the same manner as the first driving unit 200A (see FIG. 18). However, the arrangement of the data output system of the signal processing circuit 206 and the arrangement of each driver IC 210B of the column electrode drive circuit 204 differ as follows.

That is, a data transfer section 230 is connected to the downstream stage of the data output system of the signal processing circuit 206, i.e., the display controller 228. The multiplication circuit 236 of the display controller 228 multiplies the image data Dv and the gradation correction data Dc read from the first and second reading circuits 232, 234 to give the corrected image data Dh (image data arranged with the dot data of a bit number corresponding to the maximum gradation in a unit of dot) which is outputted as it is to the downstream data transfer section 230 via the output port OP.

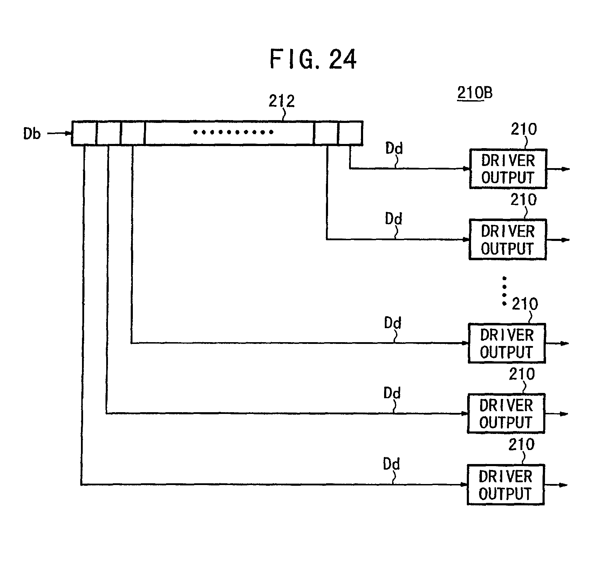

As shown in FIG. 24, the driver IC 210B has a shift register 212 of, for example, 240 bits. A driver output 210 is connected to each bit of the shift register 212.

The data transfer rate in the second driving unit 200B will now be considered. It is required to transmit 1-bit data in a period of 1/64 frame (T/64), and thus the following expression is given:

$$(43 \times 64 \text{ Hz}) \times 1 \text{ bit} \times (640 \times 3 \times 480) = 2.5 \text{ Gbps}.$$

For example, when an IC having an operation clock of 1 MHz is used for the column electrode drive circuit 204, it is necessary to perform 1-bit transmission in parallel of 2.5 GHz/1 MHz = 2500.

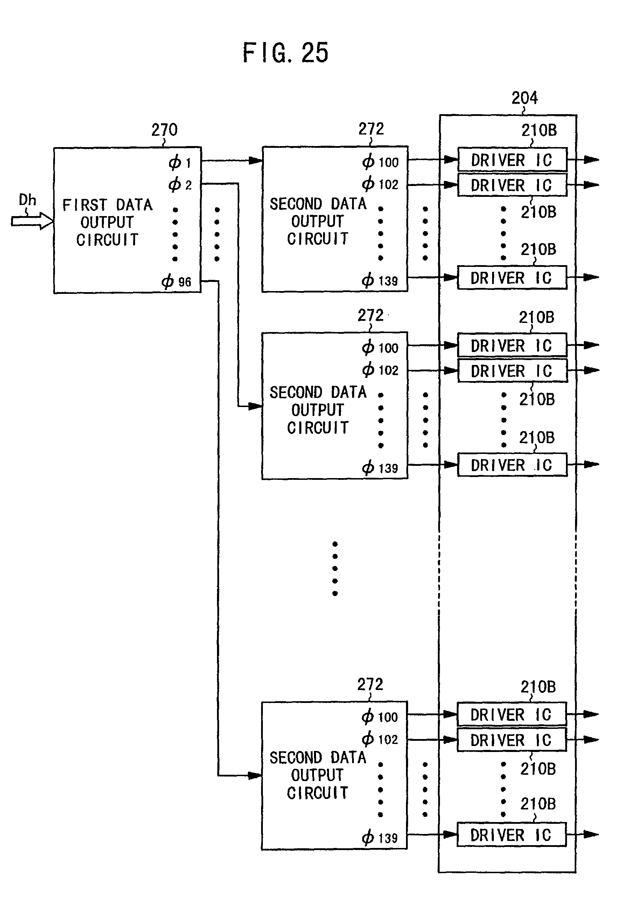

Therefore, a circuit system, which outputs the bit information for constructing the dot data Dd in conformity with the start timing of each of the linear subfields LSF1 to LSF64, is adopted for the data transfer section 230. For example, as shown in FIG. 25, the system includes one first data output circuit 270 and second data output circuits 272 of a number corresponding to a number of output terminals of the first data output circuit 270.

The first data output circuit 270 is constructed as follows. That is, all of the driver IC's 210B are divided into those belonging to a plurality of groups. It is assumed that k represents the number of outputs per one driver IC 210B (number of dots outputted by the driver IC 210B), m represents the number of allotment of the driver IC's in one group, and n represents the number of bits corresponding to the maximum gradation. On this assumption, a data group constructed by $k \times m \times n$ is allotted to each of the output terminals in the period T of one frame. The data group is outputted in a unit of dot at every predetermined timing at each of the output terminals.

The second data output circuit 272 has output terminals of a number corresponding to the allotment number m of the driver IC's. The data, which is supplied from the first data output circuit 270, is outputted in parallel to the allotted driver IC 210B via the plurality of output terminals.

For example, it is assumed that the number of outputs (number of dots outputted by the driver IC 210B) per one driver IC 210B is 240, 40 individuals of driver IC's 210B are allotted to each group, and the number of the output terminals of the first data output circuit 270 is 96. On this assumption, the second data output circuits 272, each of which has 40 individuals of output terminals $\phi100$ to $\phi139$, are connected to the respective output terminals $\phi1$ to $\phi96$ of the first data output circuit 270. In this arrangement, it is possible to make the parallel output of $96 \times 40 = 3840$ individuals.

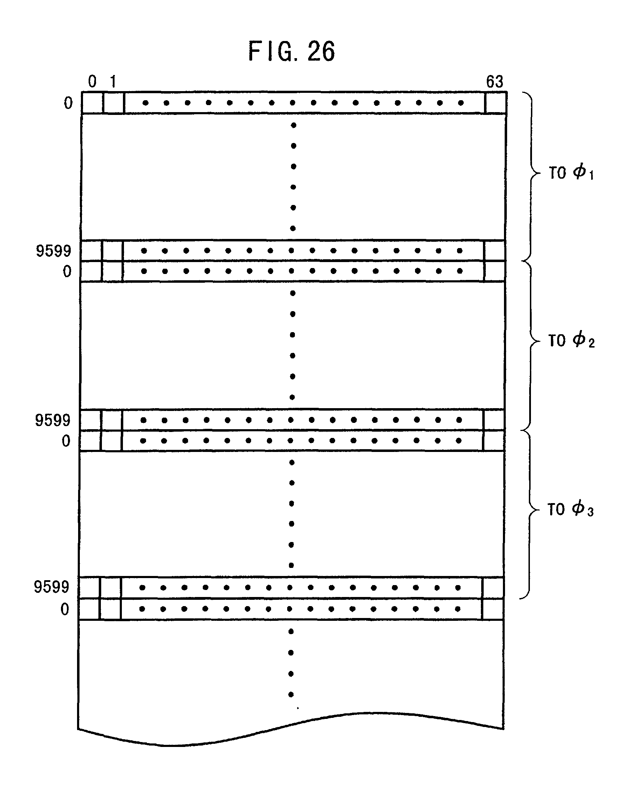

As shown in FIG. 26, the first data output circuit 270 divides the corrected image data Dh supplied from the display controller 228 for each dot data of $240 \times 40$ individuals = 9600 individuals to allot 9600 individuals of dot data to each of the output terminals φ1 to φ96.

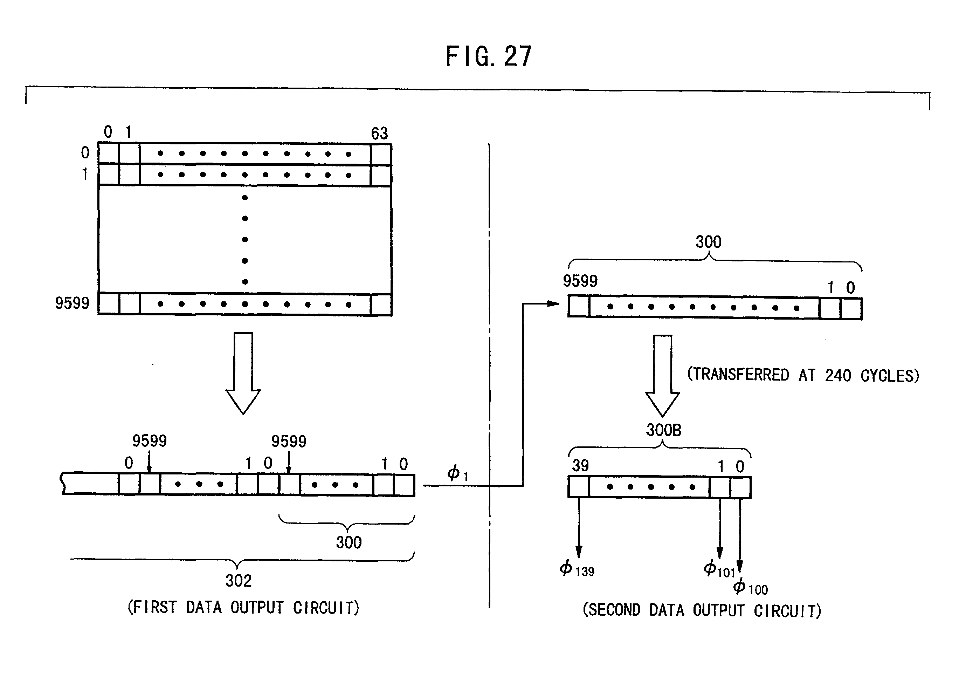

As for one output terminal (for example, the output terminal φ1), as shown in FIG. 27, a bit string 300 of 9600 bits is prepared for 0-bit to 63-bit of the dot data Dd, in which the bit information located at the same bit position of the 9600 individuals of the dot data Dd is aligned in a unit of dot. Further, the bit string data 302 is prepared, in which the bit strings are arranged in an order of 0-bit to 63-bit.

The bit string data 302 is outputted from the output terminal φ1 while effecting bit shift in synchronization with the reference clock of the first data output circuit 270 by 240 × 40 = 9600 bits (length of the bit string 300) within a period of time of T/64. When the reference clock is, for example, 40 MHz, the transfer frequency for the bit string 300B of 40 bits for constructing the bit string 300 of 9600 bits is 1 MHz, which is successfully the same as the transfer frequency of the column electrode drive circuit 204. Therefore, when an IC, which has a reference clock of not less than 40 MHz (for example, 44.9 MHz), is used for the first data output circuit 270, it is possible to transfer the bit string 300 with a sufficient temporal margin.

The second data output circuit 272 makes the output to 40 individuals of the corresponding driver IC's 210B of the column electrode drive circuit 204 in parallel from 40 individuals of the output terminals φ100 to φ139 every time when the bit string 300B of 40 bits is latched. The series of operation is repeated 240 times, and thus the bit string of 240 bits is stored in the shift register 212 of each of the driver IC's 210B.

Each bit information of the bit string stored in the shift register 212 serves as the dot data Dd. At this point of time, 240 individuals of dot data Dd are outputted in parallel from the shift register 212 to 240 individuals of the corresponding driver outputs 210. The driver output 210 makes conversion into the data signal based on the bit information contained in the dot data Dd, and it makes output to each of the corresponding dots via the data line 72.

The operation described above is successively repeated for all of the dots. Accordingly, a color screen image corresponding to the image data is displayed on the screen of the display 10.

As described above, also in the second driving unit 200B, in the same manner as in the first driving unit 200A, it is easy to realize the custom IC architecture for the row electrode drive circuit 202, it is possible to increase the degree of freedom for the design and the production of the driving unit 200B, and it is possible to realize low electric power consumption as well.

Further, as for the column driver IC, it is unnecessary to use, for IC itself, any expensive one such as those having the high function, for example, PWM modulation. Basically, it is possible to use multiple-output low price IC merely having a data input shift register and a level shifter. These components are also advantageous to miniaturize the mounting contour size of bare chip, TCP or the like. It is easy to save the space for the portion on which the driving IC is mounted. Therefore, it is also easy to realize a thin type of the display 10. This results in the reduction of the production cost of the display 10.

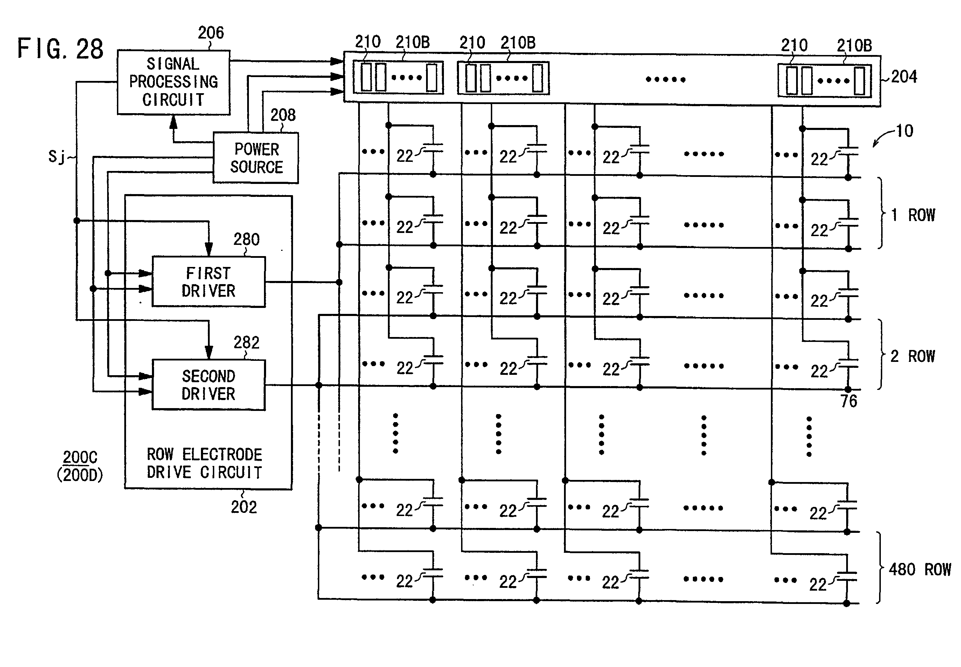

Next, a third driving unit 200C will be explained with reference to FIGS. 28 to 33.

As shown in FIG. 28, the third driving unit 200C is constructed in the same manner as the first driving unit 200A. However, the former is different from the latter in that the row electrode drive circuit 202 is constructed so that picture elements in odd number rows and picture elements in even number rows are alternately selected in conformity with an image signal based on the interlace system, and that the number of driver outputs 210 for constructing the column electrode drive circuit 204 is 1/2 of the number of all dots, i.e., the number of driver IC's 210 is 1/2 of the number of those in the first driving unit 200A. One driver output 210 is in charge of the driving for two dots aligned in the vertical direction.

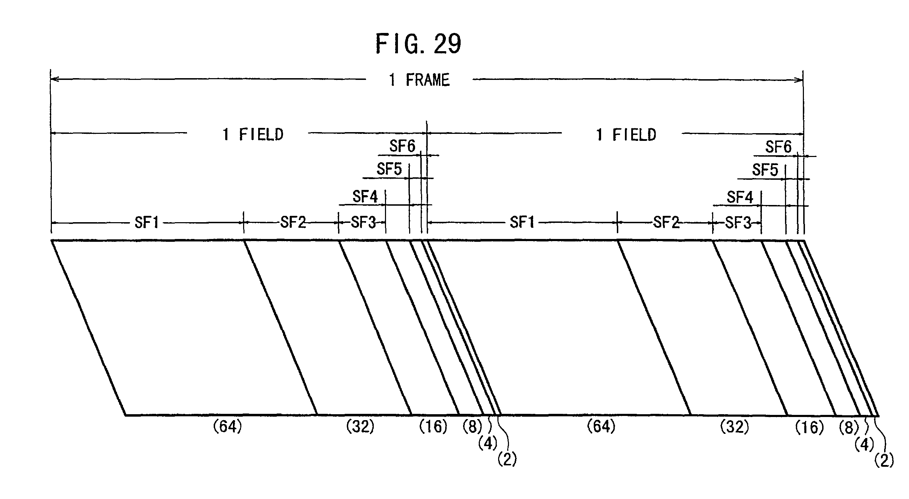

As shown in FIG. 29, the gradation control based on the temporal modulation system in the signal processing circuit 206 of the third driving unit 200C is performed as follows. That is, it is assumed that the display period for one sheet of image is one frame, a period obtained by dividing the one frame into two is one field, and one divided period obtained by dividing the one field, for example, into six is a subfield. On this assumption, the setting is made such that the initial subfield (first subfield SF1) is the longest, and the length is shortened at a ratio of 1/2 as the number of subfield increases.

The row electrode drive circuit 202 includes a first driver which is commonly provided for the odd number rows, and a second driver 282 which is commonly provided for the even number rows. Each of the drivers 280, 282 is constructed such that the select signal and the nonselect signal are alternately outputted for every one field. When the odd number row is selected, the select signal and the nonselect signal are outputted from the first and second drivers 280, 282 respectively. When the even number row is selected, the nonselect signal and the select signal are outputted from the first and second drivers 280, 282 respectively.

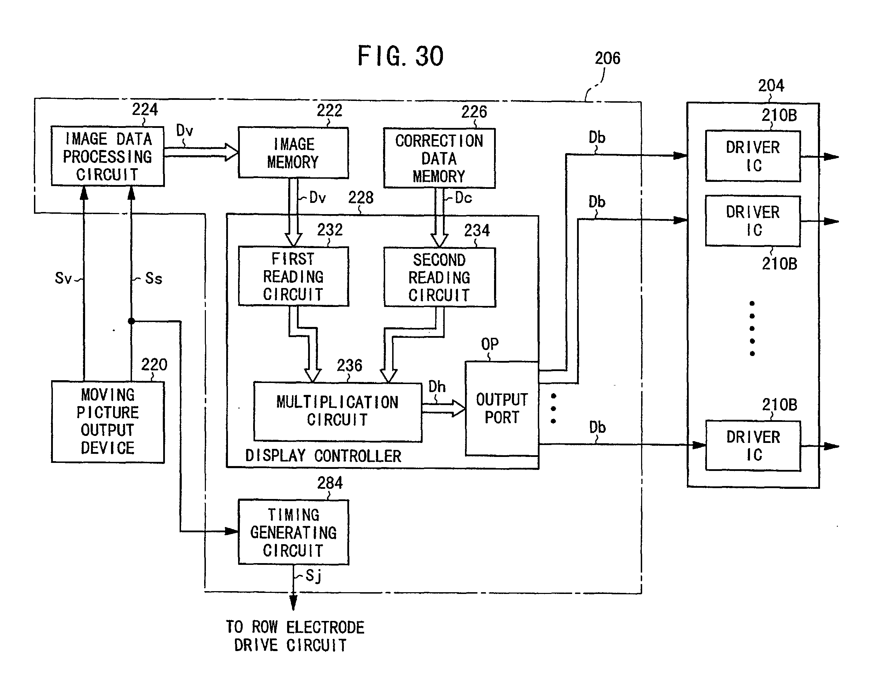

As shown in FIG. 30, the select signal and the nonselect signal are switched in the first and second drivers 280, 282 on the basis of the input of a detection signal Sj from a timing generating circuit 284 provided for the signal processing circuit 206. The timing generating circuit 284 is a circuit for detecting the start timing for the field period on the basis of a synchronization signal Ss supplied from the moving picture output device 220.

The data transfer section 230 (see FIG. 16) of the first driving unit 200A can be used as the data transfer section 230 which is provided corresponding to the driver output 210 of the column electrode drive circuit 204. One driver output 210 is allotted to two dots which are aligned in the vertical direction. Therefore, the dot data Dd outputted from the data transfer section 230 is the data corresponding to two dots. That is, the dot data Dd is provided for every two dots.

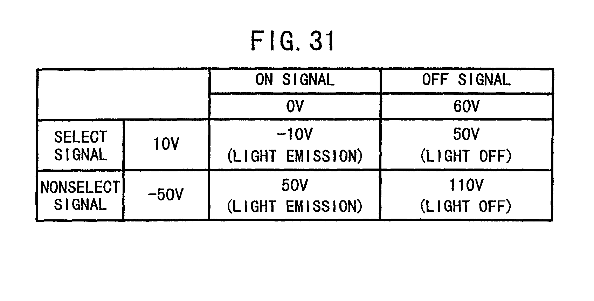

As shown in FIG. 31, the third driving unit 200C is illustrative of the following case. That is, the select signal to be used is 10 V, and the nonselect signal to be used is -50 V, the signals being outputted from the first and second drivers 280, 282 of the row electrode drive circuit 202. The ON signal to be used is 0 V, and the OFF signal to be used is 60 V, the signals being outputted by the aid of the respective driver outputs 210 of the column electrode drive circuit 204.

Therefore, the low level voltage (-10 V) is applied between the column electrode 48b and the row electrode 48a in the actuator element 22 in which the select signal is applied to the row electrode 48a, and the ON signal is applied to the column electrode 48b. The concerning actuator element 22 is in the natural state, i.e., in the light emission state.

The high level voltage (50 V) is applied between the column electrode 48b and the row electrode 48a in the actuator element 22 in which the select signal is applied to the row electrode 48a, and the OFF signal is applied to the column electrode 48b. The concerning actuator element 22 makes the bending displacement in the field diaphragm, giving the light off state.

The high level voltage (50V or 110 V) is applied between the column electrode 48b and the row electrode 48a irrelevant to the ON signal or the OFF signal applied to the column electrode 48b in the actuator element 22 in which the nonselect signal is applied to the row electrode 48a. The concerning actuator element 22 makes the bending displacement in the field diaphragm, giving the light off state.

The third driving unit 200C is basically constructed as described above. Next, its function and effect will be explained.

At first, as shown in FIG. 30, the synchronization signal Ss and the moving picture signal Sv (for example, the analog moving picture signal) based on, for example, the interlace system are inputted from the moving picture output device 220 into the image data processing circuit 224. The synchronization signal Ss from the moving picture output device 220 is inputted into the timing generating circuit 284.

The image data processing circuit 224 converts the inputted moving picture signal Sv into the digital image data Dv in a unit of field on the basis of the synchronization signal Ss. The digital image data Dv is written into the image memory 222 (field buffer). The timing generating circuit 284 detects the start timing for the one field period Tf from the synchronization signal Ss to make output as the detection signal Sj to the row electrode drive circuit 202.

The display controller 228 reads the image data Dv from the image memory 222 and the gradation correction data Dc from the correction data memory 226 to multiply them to obtain the corrected image data Dh (image data in which 6-bit dot data is arranged in 2-dot unit).

The corrected image data Dh is rearranged into a data form corresponding to the output terminals respectively at the output port OP, followed by being outputted at a transfer rate of 1 bit/1 MHz in parallel of 238 from the output port OP to be supplied to the corresponding driver IC's 210 respectively.

The bit strings are sent in parallel to the corresponding data transfer section 230 respectively at the stage at which 240 individuals of the bit strings are aligned in the shift register 212 of each of the driver IC's 210B.

The data transfer section 230, which is provided in 2-dot unit, performs the following operation. That is, the dot data Dd sent from the display controller 228 is read at a constant clock (Tf/6). The dot data Dd is outputted at the timing corresponding to the start timing of the subfield SF1 to SF6. The dot data Dd, which is outputted for every 2 dots, is supplied to the corresponding driver outputs 210 respectively.

On the other hand, in the row electrode drive circuit 202, the odd number row and the even number row are alternately selected for each one field on the basis of the input of the detection signal Sj from the timing generating circuit 284.

The column electrode drive circuit 204 makes conversion into the data signal based on the bit information contained in the dot data Dd to make output in 2-dot unit aligned in the vertical direction via the data line 72.

That is, the bit information contained in the corresponding dot data Dd is supplied as the data signal to the two dots aligned in the vertical direction while being subjected to increment in synchronization with the start timing for the subfield SF1 to SF6. The data signal is substantially supplied to the dot in the row selected by the row electrode drive circuit 202, of the two dots aligned in the vertical direction. In the next field period, the data signal is substantially supplied to the dot in the row which is previously unselected.

The operation as described above is successively repeated, and thus a color screen image corresponding to the image data Dv is displayed on the screen of the display 10.

As described above, in the third driving unit 200C, one dot 26 is constructed by one or more actuator elements 22, and one picture element 28 is constructed by one or more dots 26, wherein there are provided the row electrode drive circuit 202 for alternately selecting the picture element in the odd number row and the picture element in the even number row, the column electrode drive circuit 204 for outputting the data signal composed of the light emission signal and the light off signal for each dot on the basis of the image signal to the picture element on the selected row, and the signal processing circuit 206 for controlling the row electrode drive circuit 202 and the column electrode drive circuit 204. The row electrode drive circuit 202 and the column electrode drive circuit 204 are controlled so that the gradation control is effected at least on the basis of the temporal modulation system by the aid of the signal processing circuit 206. Therefore it is enough to use two types of power source voltages as the power source voltage to be supplied to the row electrode drive circuit 202. Accordingly, it is easy to realize the custom IC architecture for the row electrode drive circuit 202. It is possible to increase the degree of freedom for the design and the production of the driving unit 200C. It is possible to realize low electric power consumption as well.

Further, as for the column driver IC, it is unnecessary to use, for IC itself, any expensive one such as those having the high function, for example, PWM modulation. Basically, it is possible to use multiple-output low price IC merely having a data input shift register and a level shifter. These components are also advantageous to miniaturize the mounting contour size of bare chip, TCP or the like. It is easy to save the space for the portion on which the driving IC is mounted. Therefore, it is also easy to realize a thin type of the display 10. This results in the reduction of the production cost of the display 10.

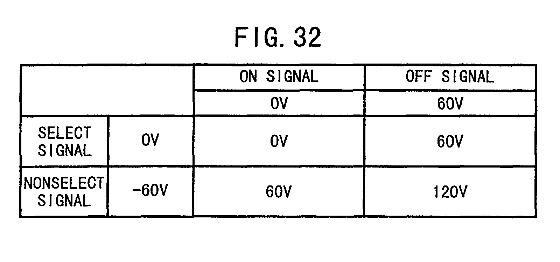

The embodiment described above is illustrative of the case in which the select signal of 10 V and the nonselect signal of -50 V are used, which are outputted from the first and second drivers 280, 282 of the row electrode drive circuit 202. Alternatively, as shown in FIG. 32, the select signal may be 0 V, and the nonselect signal may be -60 V. In this case, the ground electric potential may be used as the electric potential of the select signal. Therefore, it is possible to decrease the number of power sources by one.

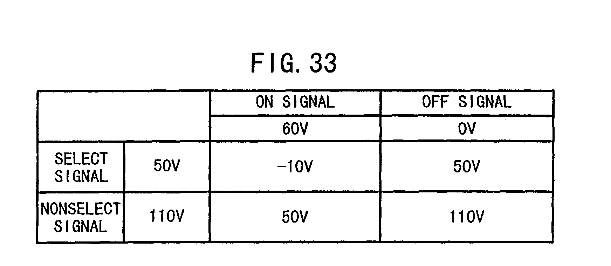

Further alternatively, as shown in FIG. 33, it is also preferable that the polarization of the voltage application is inverted. For example, the select signal to be used may be 50V, the nonselect signal to be used may be 110 V, and the respective potentials of the ON signal and the OFF signal may be 60 V and 0 V. In this case, the polarization direction of the shape-retaining layer 46 is also inverted.

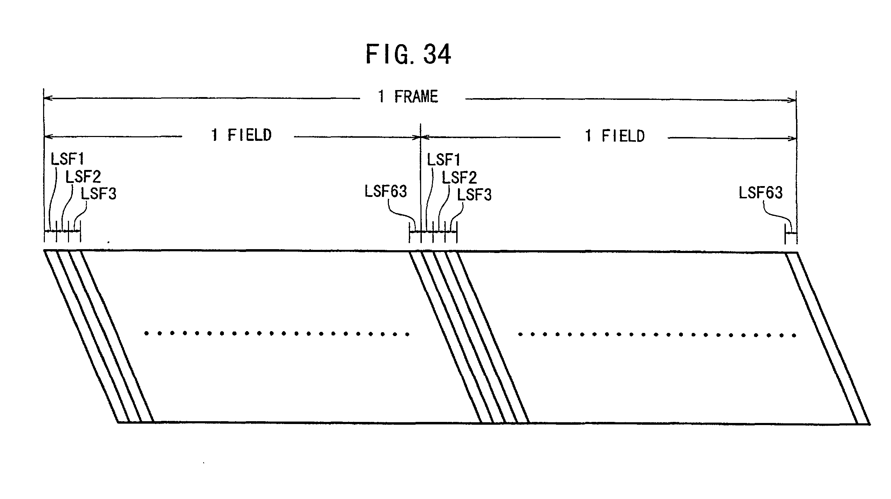

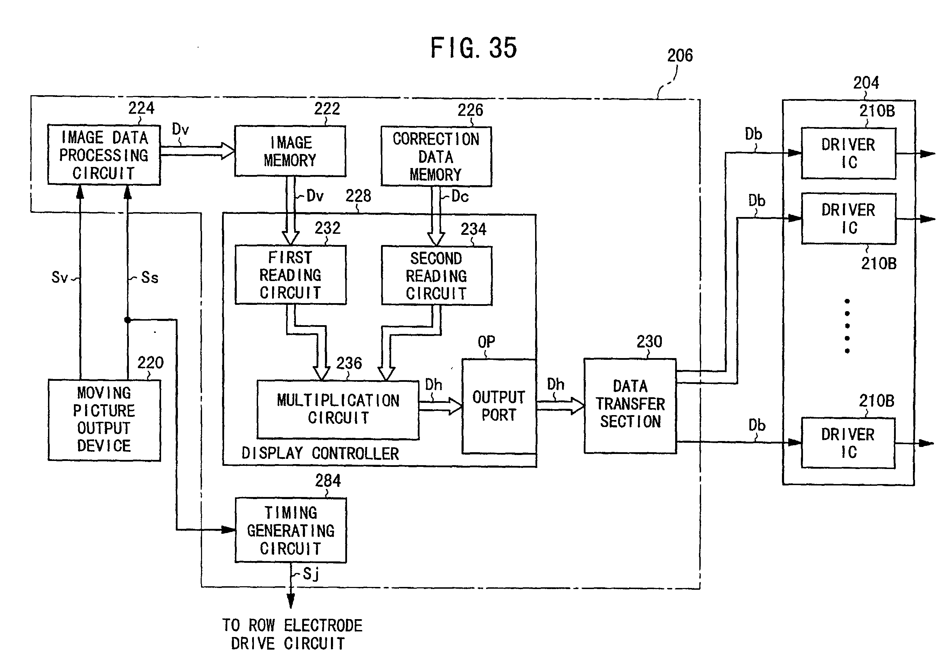

Next, a fourth driving unit 200D will be explained with reference to FIGS. 34 and 35.

In the fourth driving unit 200D, the gradation control based on the temporal modulation system in the signal processing circuit 206 is partially different. As shown in FIG. 34, it is assumed that the display period for one sheet of image is one frame, the period obtained by dividing the one frame into two is one field, and one divided period obtained by equally dividing the one field into a plurality of individuals is a linear subfield. On this assumption, the signal processing circuit 206 prepares the dot data by continuously allotting the display period corresponding to each of the gradation levels to the necessary linear subfield for every two dots.

As shown in FIG. 35, the signal processing circuit of the fourth driving unit 200D is constructed in approximately the same manner as the signal processing circuit 206 of the second driving unit 200B (see FIG. 23). However, the former is different from the latter in that a timing generating circuit 284 is provided for detecting the start timing for the field period on the basis of the synchronization signal Ss supplied from the moving picture output device 220.

The data transfer section 230 of the second driving unit 200B can be used for the data transfer section connected to the downstream stage of the display controller 228.

Also in the fourth driving unit 200D, in the same manner as in the second driving unit 200B, it is easy to realize the custom IC architecture for the row electrode drive circuit 202. It is possible to increase the degree of freedom for the design and the production of the driving unit 200D. It is possible to realize low electric power consumption as well.

Further, as for the column driver IC, it is unnecessary to use, for IC itself, any expensive one such as those having the high function, for example, PWM modulation. Basically, it is possible to use multiple-output low price IC merely having a data input shift register and a level shifter. These components are also advantageous to miniaturize the mounting contour size of bare chip, TCP or the like. It is easy to save the space for the portion on which the driving IC is mounted. Therefore, it is also easy to realize a thin type of the display 10. This results in the reduction of the production cost of the display 10.

In the third and fourth driving units 200C, 200D described above, the picture element in the odd number row and the picture element in the even number row are alternately selected in the row electrode drive circuit 202. Alternatively, picture elements in three or more rows may be selected one after another in the row electrode drive circuit 202.

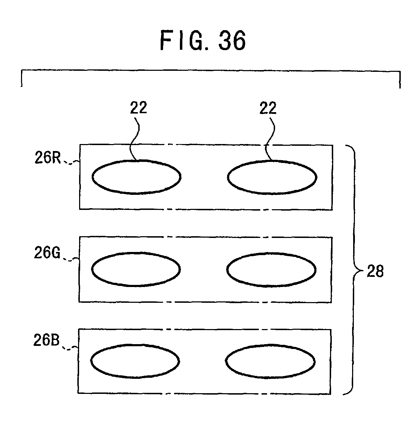

Next, a fifth driving unit 200E will be explained with reference to FIGS. 36 to 39.

Picture elements of a display unit, to which the fifth driving unit 200E is applied, are constructed and arranged, for example, as shown in FIG. 36. That is, one dot 26 is constructed by two actuator elements which are aligned in the horizontal direction. One picture element 28 is constructed by three dots 26 aligned in the vertical direction (red dot 26R, green dot 26G, and blue dot 26B).

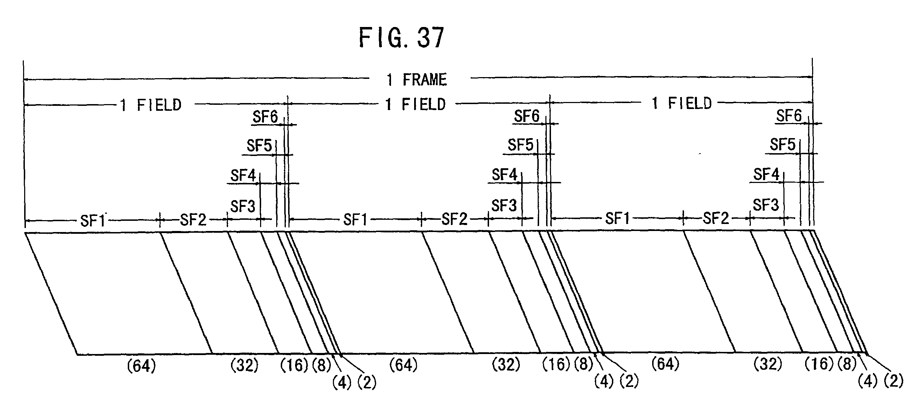

The gradation control, which is based on the temporal modulation system, is performed in the signal processing circuit 206 of the fifth driving unit 200E as shown in FIG. 37. It is assumed that the display period for one sheet of image is one frame, the period obtained by separating the one frame into three is one field (first field, second field, and third field), and one divided period obtained by dividing the one field, for example, into six is a subfield. On this assumption, the setting is made such that the initial subfield (first subfield SF1) is the longest, and the length is shortened at a ratio of 1/2 as the number of subfield increases.

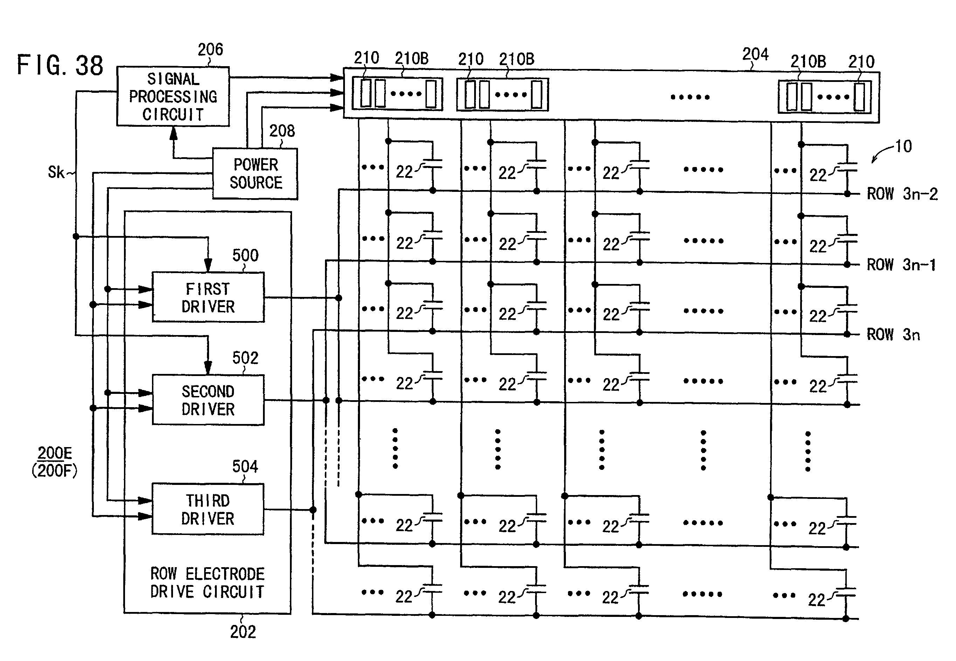

As shown in FIG. 38, the row electrode drive circuit 202 includes a first driver 500 which is commonly provided for (3n-2) rows, a second driver 502 which is commonly provided for (3n-1) rows, and a third driver 504 which is commonly provided for 3n rows. Each of the drivers 500, 502, 504 is constructed to output the select signal and the nonselect signal for every one field one after another.

When the (3n-2) row is selected, the select signal, the nonselect signal, and the nonselect signal are outputted from the first, second, and third drivers 500, 502, 504 respectively. When the (3n-1) row is selected, the nonselect signal, the select signal, and the nonselect signal are outputted from the first, second, and third drivers 500, 502, 504 respectively. When the 3n row is selected, the nonselect signal, the nonselect signal, and the select signal are outputted from the first, second, and third drivers 500, 502, 504 respectively.

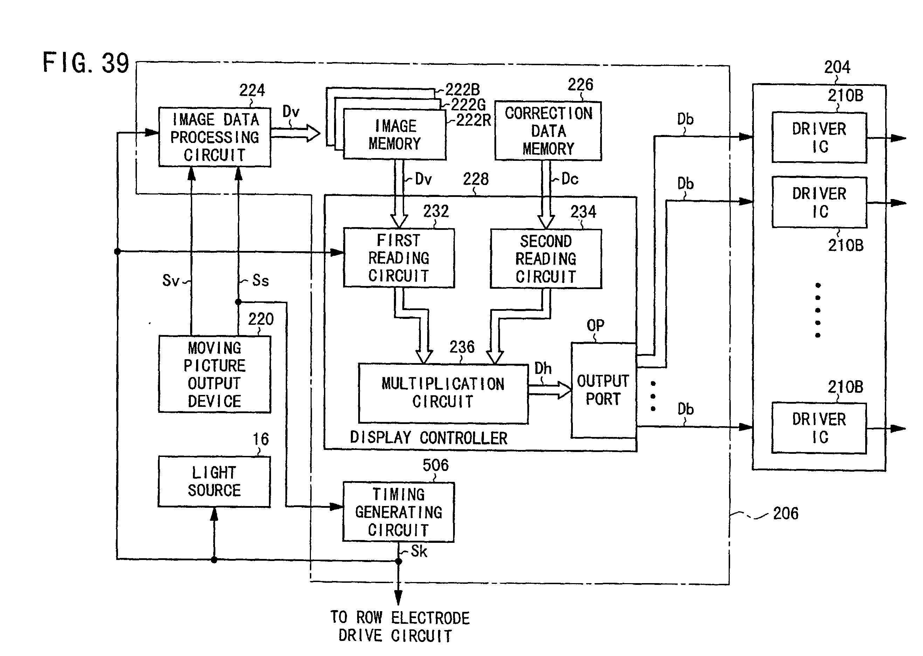

As shown in FIG. 39, the select signal and the nonselect signal are switched in the first, second, and third drivers 500, 502, 504 on the basis of the input of the detection signal Sk from a timing generating circuit 506 provided for the signal processing circuit 206. That is, the row electrode drive circuit 202 successively selects the dot in the (3n-2) row, the dot in the (3n-1) row, and the dot in the 3n row (n = 1, 2,...) respectively in conformity with the synchronization signal Ss from the timing generating circuit 506.

The timing generating circuit 506 generates and outputs the detection signal Sk for the timing in which one frame period is divided into three on the basis of the synchronization signal Ss supplied from the moving picture output device 220.

The moving picture signal Sv based on, for example, the progressive system (for example, the analog moving picture signal) from the moving picture output device 220 and the detection signal Sk from the timing generating circuit 506 are inputted into the image data processing circuit 224 of the signal processing circuit 206 to make conversion into the digital image data Dv, for example, in the unit of three primary colors (red, green, and blue) to be written into the image memory for red 222R, the image memory for green 222G, and the image memory for blue 222B respectively.

The first reading circuit 232 is constructed such that the image data Dv is successively read from the three types of the image memories 222R, 222G, 222B on the basis of the input of the detection signal Sk from the timing generating circuit 506.

The light source 16 is constructed such that the three types of light beams (for example, red light beam, green light beam, and blue light beam) are successively switched and radiated on the basis of the input of the detection signal Sk from the timing generating circuit 506.

The column electrode drive circuit 204 is constructed as follows. That is, the number of driver outputs 210 is 1/3 of the total number of dots, and the number of driver IC's 210B is 1/3 of the number in the first driving unit 200A. One driver output 210 is in charge of the driving of three dots aligned in the vertical direction.

The data transfer section 230 of the first driving unit 200A (see FIG. 16) can be used as the data transfer section which is provided corresponding to the driver output 210 of the column electrode drive circuit 204. One driver output 210 is allotted to three dots aligned in the vertical direction. Therefore, the dot data Dd, which is outputted from the data transfer section 230, is the data for three dots. That is, the dot data Dd is given for every three dots.

In the fifth driving unit 200E, for example, as shown in FIG. 31, the select signal of 10V and the nonselect signal of -50 V, which are outputted from the first, second, and third drivers 500, 502, 504 of the row electrode drive circuit, can be used. The ON signal of 0 V and the OFF signal of 60 V, which are outputted from the respective driver outputs 210 of the column electrode drive circuit 204, can be used.

The fifth driving unit 200E is basically constructed as described above. Next, its function and effect will be explained.

At first, as shown in FIG. 39, the synchronization signal Ss and the moving picture signal Sv (for example, the analog moving picture signal) based on, for example, the progressive system from the moving picture output device 220 are inputted into the image data processing circuit 224. The synchronization signal Ss from the moving picture output device 220 is inputted into the timing generating circuit 506. The timing generating circuit 506 generates and outputs the detection signal Sk with the timing in which one frame period is divided into three on the basis of the inputted synchronization signal Ss.

The image data processing circuit 224 converts the inputted moving picture signal Sv into the digital image data Dv in the unit of three primary colors (red, green, and blue) on the basis of the detection signal Sk from the timing generating circuit 506. The digital image data Dv is written into the image memory for red 222R, the image memory for green 222G, and the image memory for blue 222B respectively.

The display controller 228 reads the image data Dv from the respective image memories 222R, 222G, 222B and the gradation correction data Dc from the correction data memory 226 to multiply them to obtain the corrected image data Dh (image data in which 6-bit dot data is arranged in 3-dot unit).

The corrected image data Dh is rearranged into a data form corresponding to the output terminals respectively at the output port OP, followed by being outputted at a transfer rate of 1 bit/1 MHz in parallel of 238 from the output port OP to be supplied to the corresponding driver IC's respectively.

The bit strings are sent in parallel to the corresponding data transfer section 230 respectively at the stage at which 240 individuals of the bit strings are aligned in the shift register 212 of each of the driver IC's 210B.

The data transfer section 230, which is provided in the 3-dot unit, performs the following operation. That is, the dot data Dd sent from the shift register 212 is read at a constant clock (Tf/6). The dot data Dd is outputted at the timing corresponding to the start timing of the subfield SF1 to SF6. The dot data Dd, which is outputted for every 3 dots, is supplied to the corresponding driver outputs 210 respectively.

On the other hand, in the row electrode drive circuit 202, the (3n-2) row, the (3n-1) row, and the 3n row are successively selected for every one field on the basis of the input of the detection signal Sk from the timing generating circuit 506. At this time, the red light beam, the green light beam, and the blue light beam are radiated one by one for every one field from the light source 16 on the basis of the input of the detection signal Sk from the timing generating circuit 506.

The column electrode drive circuit 204 makes conversion into the data signal based on the bit information contained in the dot data Dd to make output in the 3-dot unit aligned in the vertical direction via the data line 72.

That is, the bit information contained in the corresponding dot data Dd is supplied as the data signal to the three dots aligned in the vertical direction while being subjected to increment in synchronization with the start timing for the subfield SF1 to SF6. The data signal is substantially supplied to the dot in the (3n-2) row (row concerning the red color) selected by the row electrode drive circuit 202, of the three dots aligned in the vertical direction, in the period of the first field (for example, the period in which the red light beam is radiated). In the next second field period (for example, the period in which the green light beam is radiated), the data signal is substantially supplied to the dot in the (3n-1) row (row concerning the green color) which is previously unselected. In the next third field period (for example, the period in which the blue light beam is radiated), the data signal is substantially supplied to the dot in the 3n row (row concerning the blue color) which is previously unselected.

The operation as described above is successively repeated, and thus a color screen image corresponding to the image data Dv is displayed on the screen of the display 10.

As described above, in the fifth driving unit 200E, one dot 26 is constructed by one or more actuator elements 22, and one picture element 28 is constructed by one or more dots 26, wherein there are provided the row electrode drive circuit 202 for successively selecting the picture element in the (3n-2) row, the picture element in the (3n-1) row, and the picture element in the 3n row (n = 1, 2,...), the column electrode drive circuit 204 for outputting the data signal composed of the light emission signal and the light off signal for each dot on the basis of the image signal to the picture element on the selected row, and the signal processing circuit 206 for controlling the row electrode drive circuit 202 and the column electrode drive circuit 204. The row electrode drive circuit 202 and the column electrode drive circuit 204 are controlled so that the gradation control is effected at least on the basis of the temporal modulation system by the aid of the signal processing circuit 206. Therefore it is enough to use two types of power source voltages as the power source voltage to be supplied to the row electrode drive circuit 202. Accordingly, it is easy to realize the custom IC architecture for the row electrode drive circuit 202. It is possible to increase the degree of freedom for the design and the production of the driving unit 200E. It is possible to realize low electric power consumption as well.

Further, as for the column driver IC (column electrode drive circuit 204), it is unnecessary to use, for IC itself, any expensive one such as those having the high function, for example, PWM modulation. Basically, it is possible to use multiple-output low price IC merely having a data input shift register and a level shifter. These components are also advantageous to miniaturize the mounting contour size of bare chip, TCP or the like. It is easy to save the space for the portion on which the driving IC is mounted. Therefore, it is also easy to realize a thin type of the display 10. This results in the reduction of the production cost of the display 10.

Especially, in the fifth driving unit 200E, the light beams of the three primary colors are radiated from the light source 16. Therefore, the blank luminance (light emission luminance caused, for example, by any defect of the optical waveguide plate other than the picture element light emission portion) is 1/3 as compared with a case in which a white light source is used. Thus, it is possible to improve the contrast.

Further, for example, when the red light beam is radiated from the light source 16, the dot concerning the red color is allowed to emit light. Therefore, the color purity is improved, and it is possible to effectively improve the image quality.

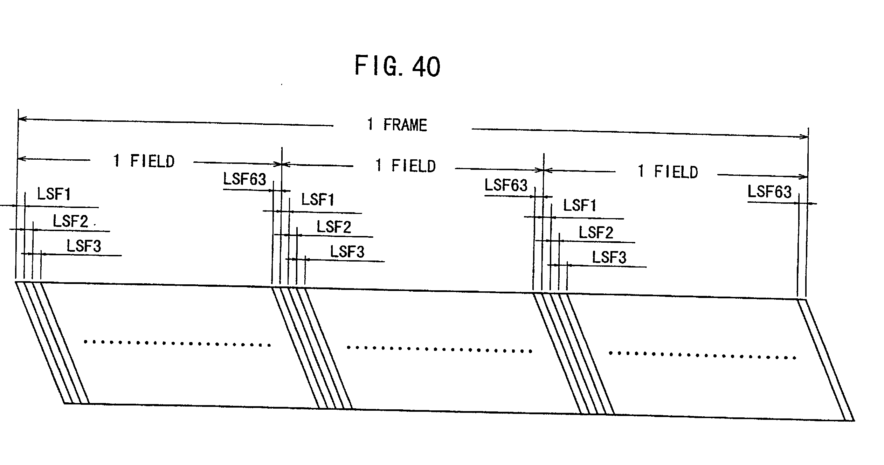

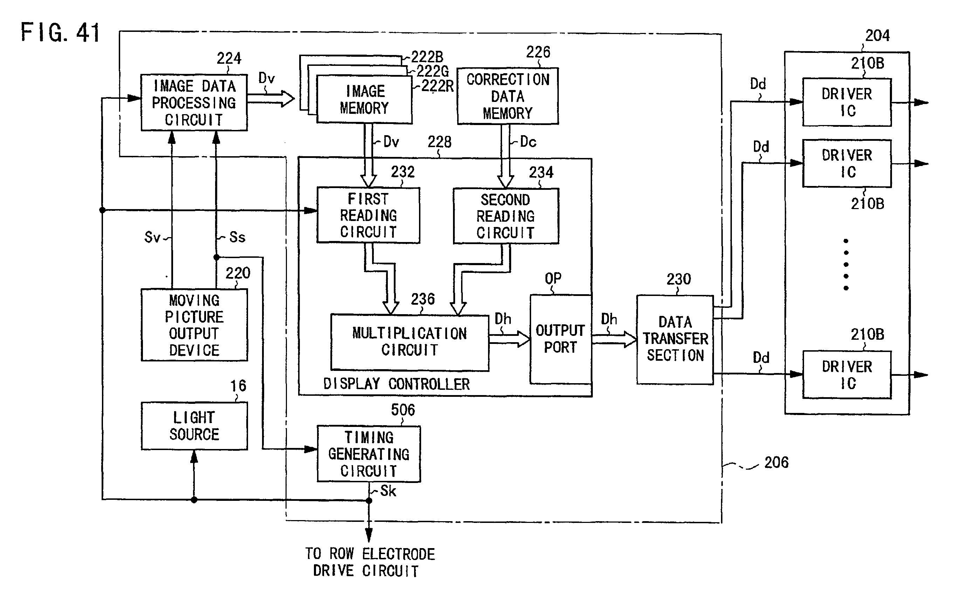

Next, a sixth driving unit 200F will be explained with reference to FIGS. 40 and 41.

In the sixth driving unit 200F, the gradation control based on the temporal modulation system in the signal processing circuit 206 is partially different. As shown in FIG. 40, it is assumed that the display period for one sheet of image is one frame, the period obtained by separating the one frame into three is one field, and one divided period obtained by equally dividing the one filed into a plurality of individuals is a linear subfield. On this assumption, the signal processing circuit 206 continuously allots the display time corresponding to each of the gradation levels to the necessary linear subfield for every three dots to prepare the dot data.

As shown in FIG. 41, the signal processing circuit of the sixth driving unit 200F is constructed in approximately the same manner as the signal processing circuit 206 of the fourth driving unit 200D (see FIG. 35). However, the former is different from the latter in that a timing generating circuit 506 is provided for outputting the detection signal Sk corresponding to the start timing for the field period on the basis of the synchronization signal Ss supplied from the moving picture output device 220.

The data transfer section 230 of the second driving unit 200B can be used for the data transfer section which is connected to the downstream stage of the display controller 228.

Also in the sixth driving unit 200F, in the same manner as in the second driving unit 200B, it is easy to realize the custom IC architecture for the row electrode drive circuit 202. It is possible to increase the degree of freedom for the design and the production of the driving unit 200F. It is possible to realize low electric power consumption as well.

Further, as for the column driver IC (column electrode drive circuit 204), it is unnecessary to use, for IC itself, any expensive one such as those having the high function, for example, PWM modulation. Basically, it is possible to use multiple-output low price IC merely having a data input shift register and a level shifter. These components are also advantageous to miniaturize the mounting contour size of bare chip, TCP or the like. It is easy to save the space for the portion on which the driving IC is mounted. Therefore, it is also easy to realize a thin type of the display 10.

For example, as shown in FIG. 2, the display 10 or the display unit 14, to which the first to sixth driving units 200A to 200F are applied, is operated as follows. That is, the light emission is effected in the natural state of the actuator element 22. When the high level voltage is applied between the row electrode 48a and the column electrode 48b of the actuator element 22, the actuator element 22 is allowed to make the bending displacement to be convex toward the hollow space 34 to effect the light off. Alternatively, the following arrangement may be used. That is, when the actuator element 22 is subjected to the ON operation/OFF operation by allowing the picture element assembly 30 to make contact or separation with respect to the back surface of the optical waveguide plate 20, the static electricity is generated between the back surface of the optical waveguide plate 20 and the contact surface (end surface) of the picture element assembly 30, in addition to the strain generated by applying the voltage to the shape-retaining layer 46. The attractive force and/or the repulsive force caused by the static electricity may be utilized for the ON operation/OFF operation of the actuator element 22.

As a result, the following arrangement is available. That is, the dielectric polarization is generated during the driving of the actuator element 22 to improve the ON characteristic of the actuator element 22 (for example, the contact performance of the picture element assembly 30 and the response performance in the contact direction) by utilizing the attractive force caused by the static electricity. Further, the OFF characteristic other than the ON characteristic of the actuator element 22 (for example, the separation performance of the picture element assembly 30 and the response performance in the separation direction) can be also improved by utilizing not only the attractive force but also the repulsive force caused by the static electricity.

For example, when it is intended to improve only the ON characteristic of the actuator element 22, a coating material is simply arranged on the contact surface (end surface) of the picture element assembly 30 and the optical waveguide plate 20 itself or the back surface of the optical waveguide plate 20 so that they are subjected to the dielectric polarization.

Further, for example, when both of the ON characteristic and the OFF characteristic of the actuator element 22 are improved, a transparent electrode or a metal thin film is arranged at the back surface of the optical waveguide plate 20 to switch the electric polarization so that both of the attractive force and the repulsive force by the static electricity are generated with respect to the contact surface of the picture element assembly 30 subjected to the dielectric polarization.

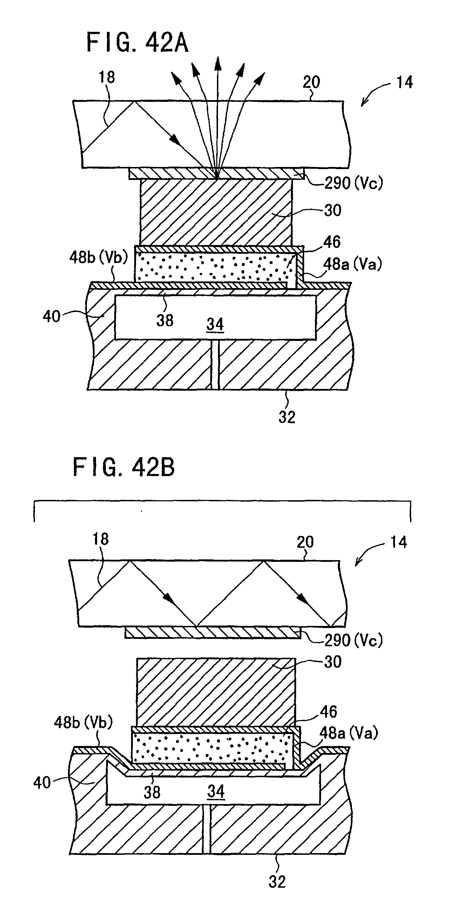

Specifically, the arrangement described above will be explained with reference to FIGS. 42A to 43B. In a display unit 14 shown in FIGS. 42A and 42B, the light emission is effected in the natural state of the actuator element 22, the row electrode 48a is formed on the upper surface of the shape-retaining layer 46, and the column electrode 48b is formed on the lower surface thereof, for example, as shown in FIG. 4. In the display unit 14, a transparent electrode 290 is formed at each of positions corresponding to the actuator elements 22, of the back surface of the optical waveguide plate 20.

As shown in FIG. 42A, when the actuator element 22 is subjected to the ON operation to emit light, then the voltage (Vc > Va) is applied between the row electrode 48a and the transparent electrode 290 corresponding to the concerning actuator element 22, and the voltage between the row electrode 48a and the column electrode 48b is approximately zero (Va ≈ Vb).

Accordingly, the picture element assembly 30 is pressed toward the optical waveguide plate 20 by the aid of the electrostatic attracting force effected between the transparent electrode 290 and the row electrode 48a. Owing to the pressing force, it is possible to improve the luminance, and it is possible to improve the response speed.

On the other hand, as shown in FIG. 42B, when the actuator element 22 is subjected to the OFF operation to turn off the light, then the voltage between the row electrode 48a and the transparent electrode 290 corresponding to the concerning actuator element 22 is approximately zero (Vc ≈ Va), and the voltage (Va < Vb) is applied between the row electrode 48a and the column electrode 48b.

Accordingly, the actuator element 22 makes the bending displacement to be convex toward the hollow space 34, and thus the picture element assembly 30 is separated from the optical waveguide plate 20.

The transparent electrode 290 may be formed on either the back surface of the optical waveguide plate 30 or the end surface of the picture element assembly 30. However, it is preferable that the transparent electrode 290 is formed on the end surface of the picture element assembly 30, because of the following reason. That is, the distance with respect to the row electrode 48a on the actuator element 22 is decreased, and it is possible to generate larger electrostatic force.

The transparent electrode 290, which is formed on the back surface of the optical waveguide plate 20, is effective to improve the separation performance of the picture element assembly 30. In general, any local surface charge is generated on the picture element assembly 30 and the optical waveguide plate 20 in accordance with the contact or separation of the picture element assembly 30. The generation of the surface charge facilitates the picture element assembly 30 to make contact with the optical waveguide plate 20. However, in this case, an inconvenience tends to occur such that the picture element assembly 30 is stuck to the optical waveguide plate 20.

Accordingly, when the transparent electrode 290 is formed on the back surface of the optical waveguide plate 20, then the generation of the local surface charge is mitigated, the inconvenience (sticking) is reduced, and the separation performance of the picture element assembly 30 is improved.

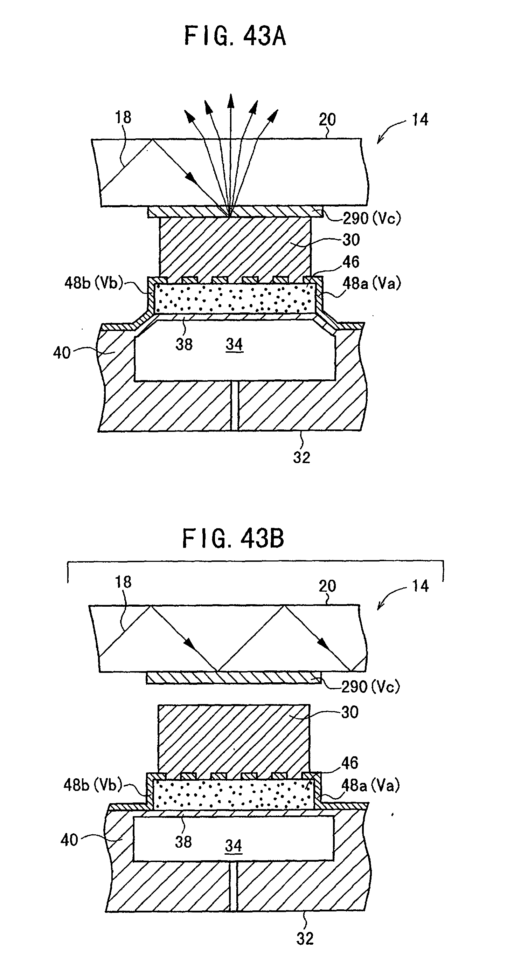

The arrangement, in which the transparent electrode 290 is formed to utilize the static electricity, is also applicable to a display unit 14 as shown in FIGS. 43A and 43B, i.e., a display unit 14 in which a pair of electrodes (row electrode 48a and column electrode 48b) are formed on the upper surface of the shape-retaining layer 46.

That is, when the transparent electrode 290 is formed on the back surface of the optical waveguide plate 20, and the voltage (Vc > Va, Vc > Vb) is applied between the transparent electrode 290 and the pair of electrodes 48a, 48b provided on the upper surface of the actuator element 22, then the static electricity is generated between the both.

A case is now considered, in which the light off is effected in the natural state of the actuator element 22. When the concerning actuator element 22 is subjected to the ON operation to emit light, then the actuator element 22 makes the bending displacement toward the optical waveguide plate 20 by the aid of the voltage (Va < Vb < Vc) between the pair of electrodes 48a, 48b, and the picture element assembly 30 quickly approaches the optical waveguide plate 20 by the aid of the attracting force of the static electricity to give the light emission state. On the other hand, in a state in which no voltage is applied between the transparent electrode 290 and the pair of electrodes 48a, 48b (Va ≈ Vb ≈ Vc), the actuator element 22 is subjected to the OFF operation to make separation from the optical waveguide plate 20 in accordance with the rigidity of the actuator element 22. Thus, the light off state is given.

The first to sixth driving units 200A to 200F are also applicable to a display 10 constructed by arranging a large number of display units 14 based on the use of the static electricity as described above.

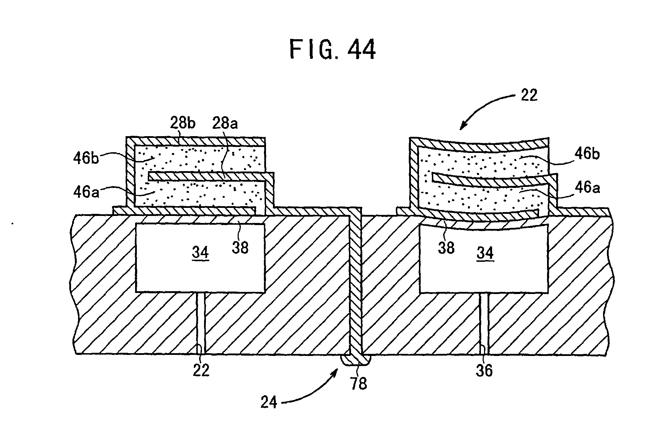

In the display 10 to which the first to sixth driving units 200A to 200F are applied, the actuator element 22, especially the shape-retaining layer 46 is constructed to have the one-layered structure. Alternatively, as shown in FIG. 44, the shape-retaining layer 46 may have a multilayered structure, and a pair of electrodes 48a, 48b are alternately formed on each of the layers. The embodiment shown in FIG. 44 is illustrative of a case in which the column electrode 48b is formed on the lower surface of the first layer of the shape-retaining layer 46a and the upper surface of the second layer of the shape-retaining layer 46b, and the row electrode 48a is formed between the first layer and the second layer. When the shape-retaining layer 46 is allowed to have the multiple layers to alternately form the pair of electrodes 48a, 48b as described above, then it is possible to improve the power (displacement force) of the actuator element 22, and it is possible to improve the separation performance of the picture element assembly 30 (see FIG. 2).

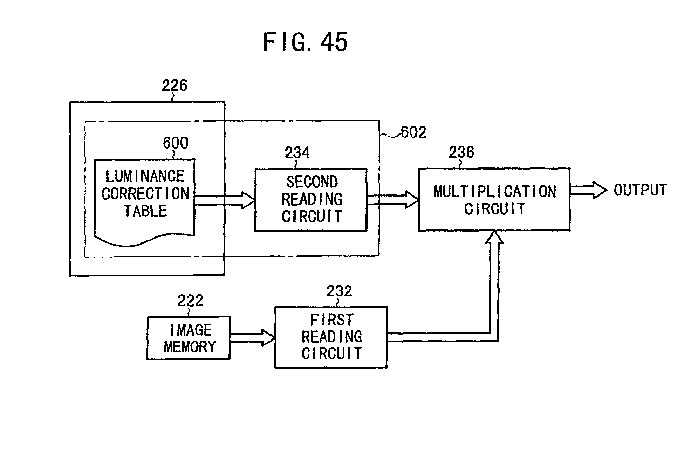

In the first to sixth driving units 200A to 200F, as shown in FIG. 45, a luminance correction table 600, in which at least the luminance correction data for correcting the luminance dispersion for each dot is developed, may be used as the information for the correction to be stored in the correction data memory 226. In this case, the luminance correction table 600 developed in the correction data memory 226 and the second reading circuit 234 function as the luminance-correcting means 602.

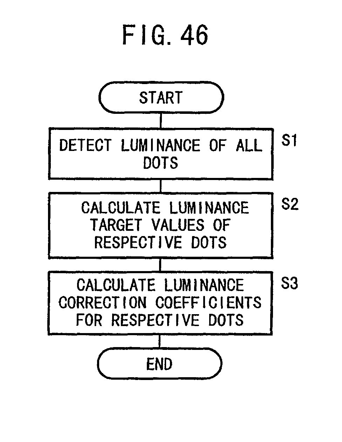

Explanation will now be made for the process for producing the display 10 having the luminance-correcting function, especially for the process for preparing the luminance correction table 600 with reference to FIGS. 46 to 55.

In the process for preparing the luminance correction table, at first, in the step S1 shown in FIG. 46, a uniform image is displayed on the display 10 to detect luminances of all of the dots 26.

Specifically, for example, a signal of an intermediate level of the gray scale (for example, the gradation level of 128 provided that the full scale resides in the gradation level of 256) is given to all of the dots of the display 10 to make display. In this state, for example, a CCD camera is used to measure the respective luminances of all of the dots to determine the measured luminance distribution of the display 10.

After that, in the step S2, the luminance target values of the respective dots 26 are calculated. Subsequently, in the step S3, the luminance correction coefficients for the respective dots 26 are calculated on the basis of the luminance target values of the respective dots 26. Specifically, the smoothing process is performed for the measured luminance distribution on the basis of the actually measured value of the luminance of each of the measured dots 26 to determine the theoretical luminance distribution (distribution of the luminance target values). The smoothing process includes, for example, the averaging process, the least square method, and the higher-order curve approximation.

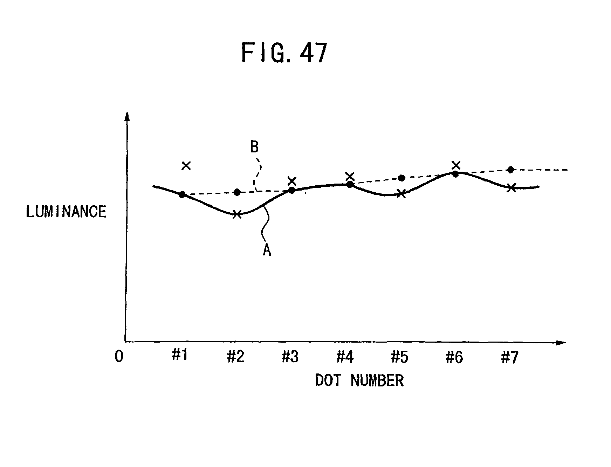

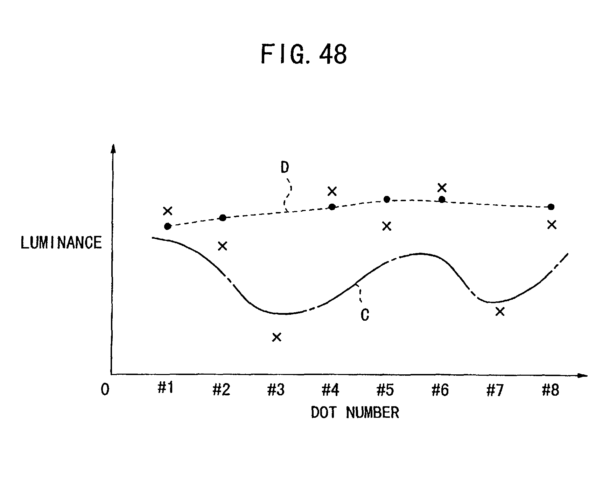

FIGS. 47 and 48 show, for example, the luminance distribution of the respective dots in the first row. In these drawings, the plot indicated by cross marks represents the actually measured luminance distribution, and the plot indicated by circles represents the theoretical luminance distribution.

As shown in FIG. 47, when the dispersion of the actually measured luminance values of the respective dots in the actually measured luminance distribution is small, and the smooth theoretical luminance distribution (see curve B) is obtained by the smoothing process, then the luminance correction is performed for all of the dots.

A specified technique for correcting the luminance will be explained. For example, as shown with the dots #1, #3, #4, and #6 in FIG. 47, when the measured luminance value is larger than the theoretical luminance value, a value less than 1 is used as the correction coefficient for the following expression.

Measured luminance value x Correction coefficient

≈ Theoretical luminance value

The correction coefficient, which satisfies the foregoing expression, is registered as the luminance correction data for the concerning dot in the luminance correction table 600.

On the other hand, for example, as shown with the dots #2, #5, and #7 in FIG. 47, when the measured luminance value is smaller than the theoretical luminance value, 1 is used as the correction coefficient. The correction coefficient is registered as the luminance correction data in the luminance correction table 600. As a result, it is possible to obtain a luminance distribution (see curve A) which is uniformized as compared with the measured luminance distribution in which those of cross marks are plotted.

In some of the completed displays 10, as shown in FIG. 48, the actually measured luminance value is locally low in some cases. In FIG. 48, the dots #3 and #7 are extremely low. Even when the smoothing process is performed as they are, the theoretical luminance distribution is not smoothened as shown by the curve C. Further, the average luminance is unnecessarily lowered in some cases.

In such a case, the dots having the extremely low measured luminance values are ignored to perform the smoothing process. Accordingly, the theoretical luminance distribution having a smooth curve is determined as shown by the curve D. The specified technique for correcting the luminance is carried out in the same manner as described above.

As described above, when the luminance-correcting means 602 is used, then the luminance dispersion of the respective dots upon the production is absorbed, and it is possible to improve the image quality.

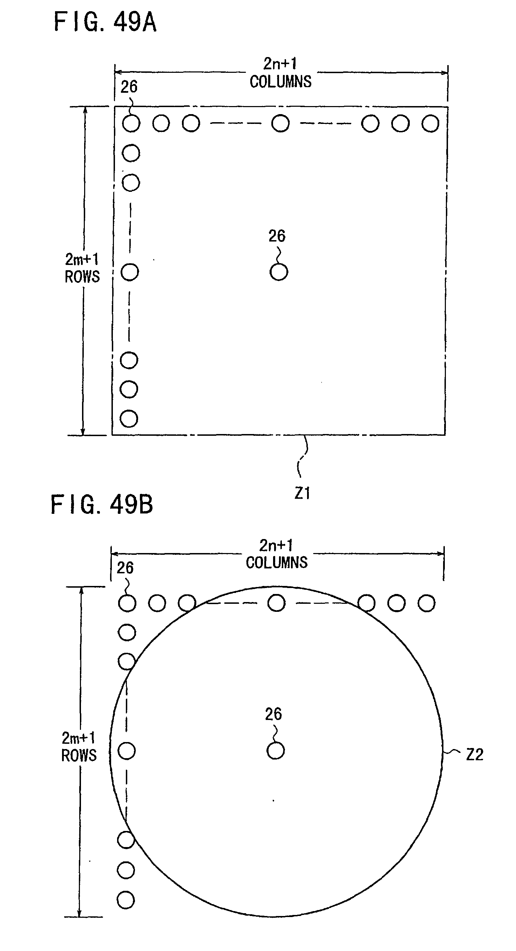

Besides the technique described above, the so-called moving averaging process may be adopted for the luminance-correcting means 602. As shown in FIGS. 49A and 49B, the moving averaging process resides in a method in which the respective luminance values of one dot 26 (central dot 26) and a plurality of dots 26 arranged therearound are averaged, an obtained average value is regarded to be a luminance target value of the central dot 26, and the luminance correction coefficient of the central dot 26 is determined on the basis of the luminance target value and the actually measured luminance value of the central dot 26.

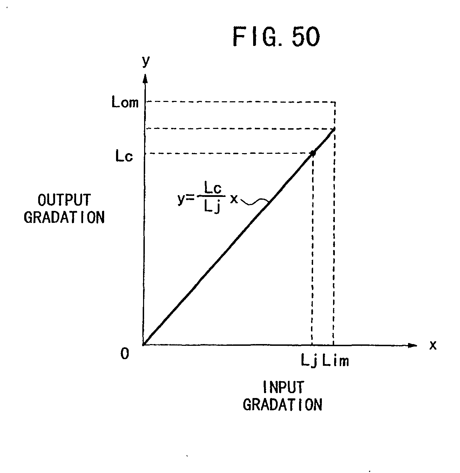

For example, as shown in FIG. 50, the measured luminance value (luminance value before correction: input luminance value) is plotted along the horizontal axis x, and the target luminance value (luminance value after correction: output luminance) is plotted along the vertical axis y. When the measured luminance value is Lj, and the luminance target value is Lc, then a value on a straight line $y = (Lc/Lj)x$ is selected as the luminance correction coefficient. In FIG. 50, Lim indicates the maximum input gradation, and Lom indicates the maximum output gradation.

The plurality of dots 26, which are arranged around the central dot 26, may be included in a dot group corresponding to $(2m + 1)$ rows aligned in the vertical direction, and they may be included in a dot group corresponding to $(2n + 1)$ columns aligned in the horizontal direction. FIG. 49A is illustrative of a case of the selection of the plurality of dots 26 arranged in an area Z1 constructed by $(2m + 1)$ rows $\times$ $(2n + 1)$ columns. FIG. 49B is illustrative of a case of the selection of the plurality of dots 26 arranged in a substantially circular area Z2 included in the area constructed by $(2m + 1)$ rows $\times$ $(2n + 1)$ columns.

When M individuals of the dots 26 are arranged in the vertical direction, N individuals of the dots 26 are arranged in the horizontal direction, and $(M \times N)$ individuals of the dots 26 are provided in total for one of the display units 14, then m and n described above satisfy the following expressions provided that α and β are variables of not less than 1 respectively:

$$(1/2)M \leq 2m + 1 \leq \alpha M$$

$$(1/2)N \leq 2n + 1 \leq \beta N.$$

The method for determining $\alpha$ and $\beta$ will now be explained. At first, if $\alpha$ and $\beta$ are increased, the range for the averaging operation is widened. Therefore, the luminance target value is greatly different from the actual ability (light emission ability) of the dot 26 in some cases. As a result, many dots 26, which exceed the upper limit of the luminance correction coefficient, occasionally appear. Accordingly, $\alpha$ and $\beta$ are set so that the number of dots 26 with their luminance correction coefficients exceeding the upper limit value is not more than a predetermined number. For example, it is preferable that $\alpha$ and $\beta$ are not more than 5, especially not more than 3.

By doing so, the seam can also be made inconspicuous, while suppressing the dispersion of the luminance distribution in the display unit 14. Further, it is possible to make use of the individual luminances of the display units 14. It is possible that the luminance of the display unit 14 capable of emitting bright light is not unnecessarily lowered.

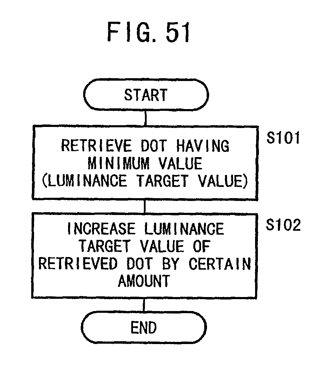

For example, the bottom-up method and the top-down method may be used as the process after calculating the luminance target values for all of the dots 26. As shown in FIG. 51, in the bottom-up method, at first, in the step S101, the dot, which exhibits the minimum value of all of the calculated luminance target values, is retrieved. After that, in the step S102, the current luminance target value is increased by a certain value for the retrieved dot to obtain a new luminance target value.

According to the bottom-up method, an inconvenience is dissolved, which would be otherwise caused such that the image is discontinuous between the display units 14 (continuous surface is maintained). Further, it is possible to extract the display ability of the display unit to the maximum.

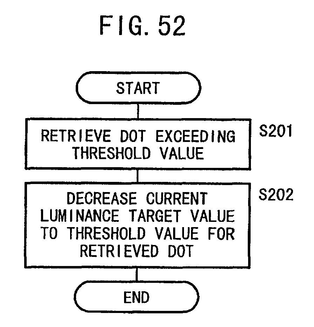

On the other hand, in the top-down method, as shown in FIG. 52, at first, in the step S201, the dot 26, in which the luminance target value exceeds a preset threshold value, is retrieved with respect to all of the calculated luminance target values. After that, in the step S202, the current luminance target value is decreased to the threshold value for the retrieved dot 26.

Also in the top-down method, it is possible to dissolve an inconvenience which would be otherwise caused such that the image is discontinuous between the display units 14.

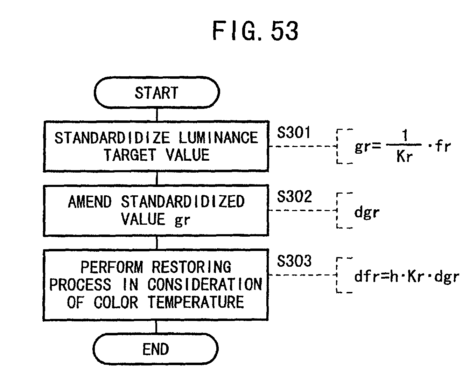

When the luminance correction coefficient is calculated as described above, it is preferable that the color temperature is also considered. Specifically, as shown in FIG. 53, at first, in the step S301, the calculated luminance target values of the respective dots (conveniently designated as "fr") are standardized in conformity with the color scheme respectively. The standardization is performed in order to align the level of the respective color schemes. The standardization is performed by multiplying the luminance target value fr by a reciprocal $1/Kr$ of a standardization coefficient Kr. Accordingly, a value after the standardization (standardized value) gr is determined.

After that, in the step S302, amendment is made so that the standardized value gr is included within a certain range to obtain an amended standardized value dgr. After that, in the step S303, the restoring process is performed in accordance with the color schemes respectively to obtain a new luminance target value dfr in consideration of the color temperature. For example, the following calculation is performed:

$$dfr = h \cdot Kr \cdot dgr.$$

In this expression, h represents the color temperature regulation constant. For example, when it is intended to obtain a reddish image, then $h = 1.0$ is given for the red, and $h = 0.9$ is given for the color schemes other than the red. Accordingly, the dot corresponding to the red is emphasized.

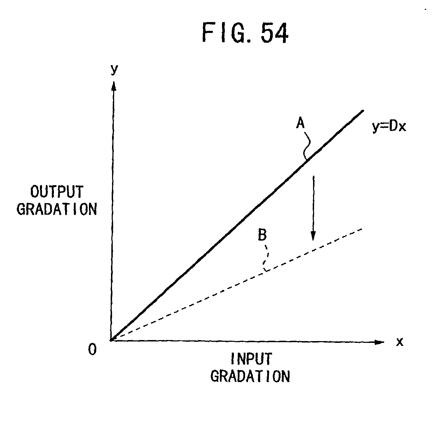

As shown in FIG. 54, the input gradation is plotted along the horizontal axis x, and the output gradation is plotted along the vertical axis y. As indicated by a straight line A, a value on the straight line $y = Dx$ passing through the origin is selected for the luminance correction coefficient described above. Therefore, for example, when the luminance correction coefficient is amended, it is conceived that the slop D is changed. In FIG. 54, a straight line after the change is indicated by a broken line B.

Specifically, the calculation is performed as follows assuming that the input gradation is 128-gradation at the maximum:

$$\text{Output } y = (\text{Corrected value}/128) \times \text{Input x}.$$

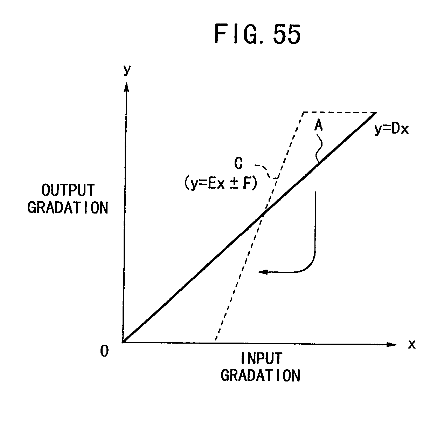

However, in the embodiment of the present invention, as shown in FIG. 55, the amendment for the luminance correction coefficient can also be made to effect the change to a straight line (see broken line C) which does not necessarily pass through the origin. That is, a value on the straight line $y = Ex \pm F$ can be selected as the luminance correction coefficient. In order to realize this procedure, for example, the maximum width of the input gradation is decreased to 64-gradation, and the intercept data (F in the straight line $y = Ex \pm F$) is allotted to the remaining bit number. By doing so, it is possible to avoid the increase in memory capacity.

In this case, the calculation is specifically performed as follows assuming that the input gradation is 64-gradation at the maximum:

$$\text{Output } y = (\text{Corrected value (1)}/64) \times \text{Input x}$$

$$\pm \text{Corrected value (2)}.$$

When this correction system is adopted, the following procedure is available. That is, in the case of the minus corrected value (2), it is possible to perform the proper luminance correction for the dot 26 which begins to turn on from a certain gradation. In the case of the plus corrected value (2), it is possible to perform the proper luminance correction for the dot 26 in which the gradational expression is difficult in the low gradation region.

When the luminance correction coefficient is calculated as described above, it is preferable that the luminance of the dot 26 in the vicinity of the seam (dot 26 in the peripheral portion) of the large number of dots 26 arranged on the display unit 14 is set to have a value which is higher than that of the luminance of the dot 26 disposed in the central portion. Accordingly, the seam between the display units 14 can be made inconspicuous.

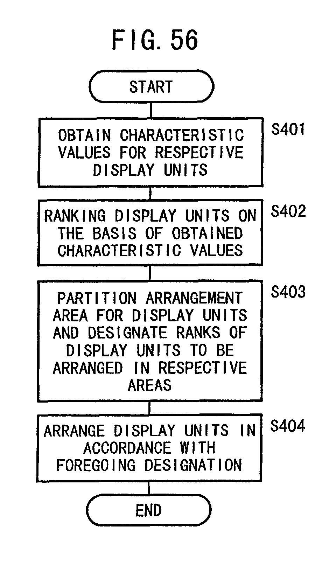

When the display 10 is constructed by arranging a large number of display units 14, it is preferable that the display units 14 are arranged with certain regularity. The method for determining the arrangement will be explained with reference to FIGS. 56 to 60B.

In this arrangement determination method, as shown in FIG. 56, at first, in the step S401, characteristic values are obtained for the respective display units 14 respectively. The characteristic value includes, for example, an average luminance of a plurality of dots 26 for constructing the display unit 14, and a number of deficiencies of dots 26. For example, the luminance is measured for several dots 26 in the display unit 14 to obtain an average value. The average value is regarded as the average luminance.

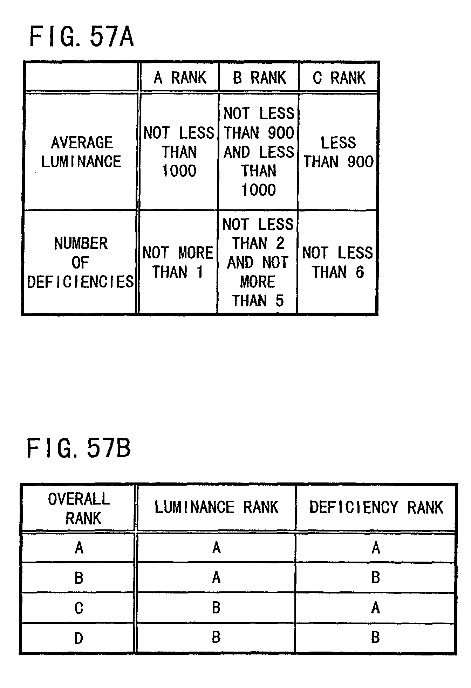

After that, in the step S402, the display units are ranked on the basis of the obtained characteristic values. The ranking is performed, for example, as shown in FIG. 57A. That is, those having the average luminance of not less than 1000 and the number of deficiencies of not more than 1 belong to the A rank. Those having the average luminance of not less than 900 and less than 1000 and the number of deficiencies of not less than 2 and not more than 5 belong to the B rank. Those having the average luminance of less than 900 and the number of deficiencies of not less than 6 belong to the C rank.

Further, the display units 14 are ranked on the basis of the obtained ranks (individual ranks) into those belonging the overall ranks which are determined while giving the priority to the average luminance. For example, those selected for the overall rank A are those in which the rank based on the average luminance is the A rank and the rank based on the number of deficiencies is the A rank. Those selected for the overall rank B are those in which the rank based on the average luminance is the A rank and the rank based on the number of deficiencies is the B rank. Similarly, those selected for the overall rank C are those in which the rank based on the average luminance is the B rank and the rank based on the number of deficiencies is the A rank. Those selected for the overall rank D are those in which the rank based on the average luminance is the B rank and the rank based on the number of deficiencies is the B rank.

After that, in the step S403 shown in FIG. 56, the arrangement area for the plurality of display units 14 on the display 10 is partitioned to designate the ranks of the display units 14 to be arranged in the respective areas. Subsequently, in the step S404, the display units 14 are arranged in accordance with the designation to manufacture the display 10.

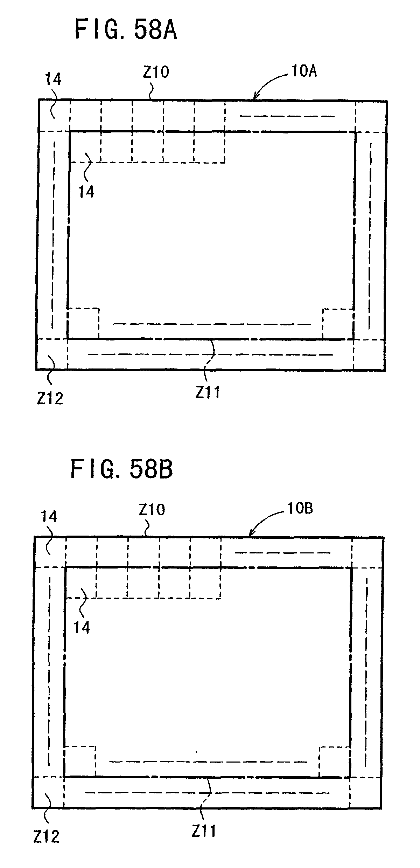

For example, as shown in FIGS. 58A and 58B, the arrangement area Z10 for the display units 14 on the display 10 (10A and 10B) is partitioned into a central portion Z11 and a peripheral portion Z12. The display units 14, which have the high rank based on the number of deficiencies, are arranged in the central portion Z11. The display units 14, which have the low rank based on the number of deficiencies, are arranged in the peripheral portion Z12.

For example, as for the first display 10A, the display units 14, which have the overall rank A, are arranged in the central portion Z11, and the display units 14, which have the overall rank B, are arranged in the peripheral portion Z12. As for the second display 10B, the display units 14, which have the overall rank C, are arranged in the central portion Z11, and the display units 14, which have the overall rank D, are arranged in the peripheral portion Z12.

The first display 10A is uniformed with the display units 14 which have the rank based on the average luminance of the A rank. The second display 10B is uniformed with the display units which have the rank based on the average luminance of the B rank. Therefore, the dispersion of the luminance distribution is suppressed in each of the displays 10A, 10B. It is possible to improve the image quality, and the seam between the display units 14 is inconspicuous.

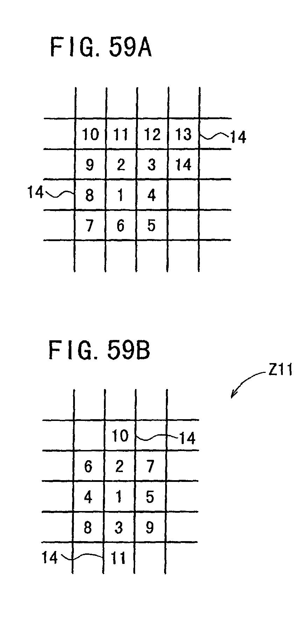

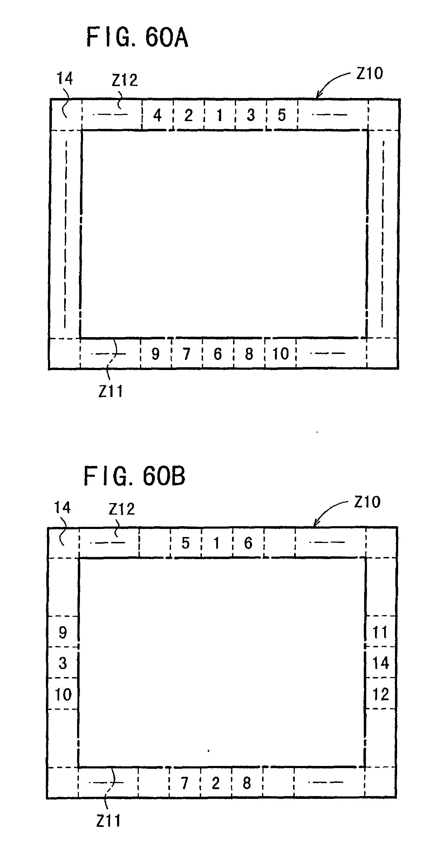

When the display units 14 are arranged, for example, in the central portion Z11, it is preferable that the display units 14 are arranged from the center in a spiral configuration, for example, as shown in FIG. 59A, or the display units 14 are arranged in a order to follow a cross-shaped configuration as shown in FIG. 59B. In FIGS. 59A and 59B, the consecutive numbers are ordered on the basis of the overall rank, and they indicate the order of the arrangement of the display units 14. On the other hand, when the display units 14 are arranged in the peripheral portion Z12, it is preferable that a method is adopted in which the display units 14 are aligned in an order starting from one side as shown in FIG. 60A, or the display units 14 are arranged in a cross-like order as shown in FIG. 60B.

As described above, when the ranked display units 14 are arranged in the designated area, the display units 14, which are ordered in the identical rank, are arranged in accordance with the predetermined rule. Accordingly, it is possible to obtain a smooth luminance distribution when the display 10 is viewed as a whole.

Especially, the technique is adopted, in which the arrangement area Z10 for the display units 14 are partitioned into the central portion Z11 and the peripheral portion Z12, the display units 14 having the high rank are arranged in the central portion Z11, and the display units 14 having the low rank are arranged in the peripheral portion Z12. This technique utilizes such a characteristic that it is difficult for human eyes to perceive the fact even when the periphery is dark. This technique is effective to exclude the sense of incongruity for human eyes.

The characteristic value described above is not limited to the average luminance and the number of deficiencies, for which it is also possible to utilize, for example, the dispersion of the luminances or the like of the dots in the display unit 14. As for the area partition, a variety of ways of partition may be available, other than the partition into the two of the central portion Z11 and the peripheral portion Z12.

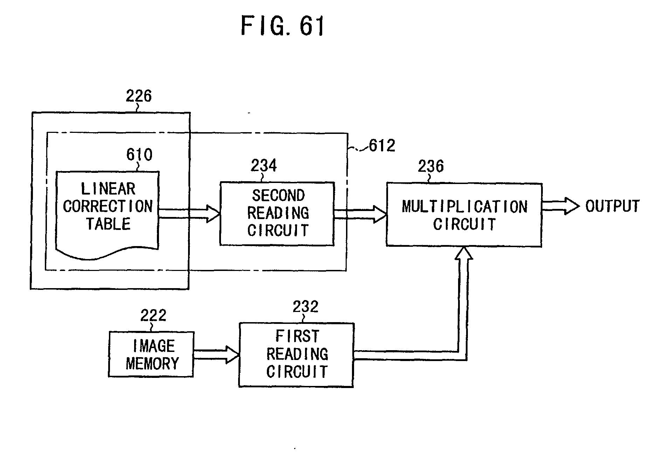

Alternatively, in the first to six driving units 200A to 200F, as shown in FIG. 61, it is also preferable that a linear correction table 610, in which the linear correction data is developed to allow the display characteristic for the gradation level of each of the dots to be linear, is used as the information for the correction to be stored in the correction data memory 226. In this case, the linear correction table 610 developed in the correction data memory 226 and the second reading circuit 234 function as a linear correcting means 612.

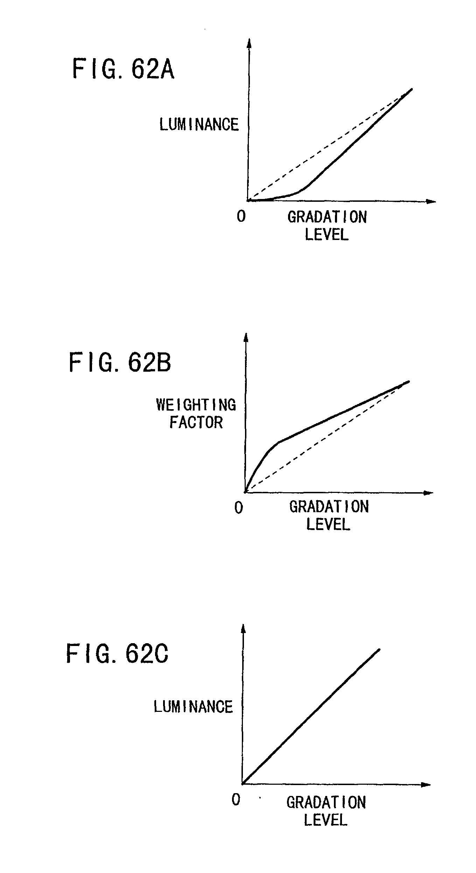

The linear correcting function will now be explained with reference to FIGS. 62A to 62C. At first, the linear correction table 610 is prepared. However, as a prerequisite therefor, the luminance of each of the dots of the display 10 is measured in the same manner as in the luminance correction described above.

Specifically, for example, a signal, in which the gray scale is increased in a stepwise manner, is given to all of the dots of the display 10 to make display. In this state, for example, a CCD camera is used to measure the characteristic of the change of luminance (light emission luminance characteristic) with respect to the change of the gradation level of the gray scale for all of the dots. The number of plots for the respective dots is determined depending on the capacity and the operation speed of the correction data memory 226. FIG. 62A shows a light emission luminance characteristic for a certain dot.

After that, the weighting factor for linearizing the light emission luminance characteristic is determined for each of the dots respectively on the basis of the measured light emission luminance characteristic of each of the dots. FIG. 62B shows a characteristic of the change of the weighting factor corresponding to the light emission luminance characteristic of a certain dot.

The weighting factor for each dot is determined in an amount of the plot made to determine the light emission luminance characteristic described above.

The array of the weighting factors of the number corresponding to the number of the plots is defined as a look-up table for the linearization in relation to the concerning dot. The look-up table as described above is determined for each of the dots to be registered as the linear correction table 610 in the correction data memory 226. The weighting factor between the plots may be determined, for example, in accordance with the first-order approximation (line approximation) at the display stage.

At the actual display stage, the input gradation level of a certain dot is read by the aid of the first reading circuit 232. The weighting factor corresponding to the input gradation level read from the look-up table or the weighting factor determined by the first-order approximation in relation to the concerning dot is read by the aid of the second reading circuit 234. The value of (input gradation data value x weighting factor) is calculated by the multiplication circuit 236 disposed at the downstream stage to make output as the linearized gradation data (see FIG. 62C).

As described above, when the linear correcting means 612 is used, the display characteristic is changed linearly depending on the change of the gradation level in each of the dots. Therefore, it is possible to make the correct image display. Further, it is possible to improve the contrast. It is possible to allow the display image to have sharp feeling.

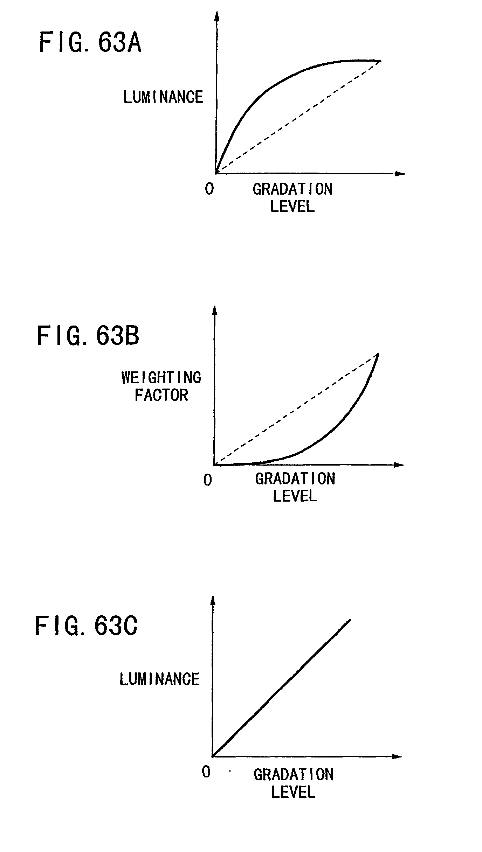

When a screen image of the television signal is displayed by the aid of the display 10, the linear correction process is performed as follows. That is, for example, in the case of the presently used color television system, the gamma control is performed on the image transmission side (sending side) in order to reduce the cost of the television receiver. The gamma control is persistently directed to the Braun tube. Therefore, a light emission luminance characteristic is given as shown in FIG. 63A. For this reason, if the screen image of the television signal applied with the gamma control is displayed as it is by using the display 10, the following problems arise. That is, the resolution is lowered at portions of the image having high chroma, and the sharp feeling disappears.

In view of the above, in the embodiment of the present invention, as shown in FIG. 63B, the array of weighting factors to counteract the gamma control may be defined as a look-up table for the linearization concerning the respective dots.

Accordingly, as shown in FIG. 63C, the display characteristic (display characteristic applied with the gamma control) with respect to the gradation level in the sending system (image transmission system) can be linearly corrected. Therefore, even when the television signal applied with the gamma control is displayed, the decrease in resolution of the high chroma portion of the image disappears. It is possible to allow the displayed image to have the sharp feeling.

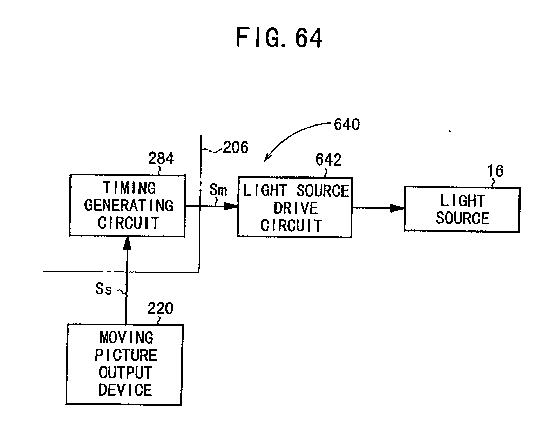

As shown in FIG. 64, the first to sixth driving units 200A to 200F may have a dimming control means 640 for switching, at least at two stages, the power of the light source 16 at an arbitrary timing in one frame.

The power of the light source 16 may be switched by the dimming control means 640 by using a light source drive circuit 642 on the basis of the input of a detection signal Sm from the timing generating circuit 284 provided for the signal processing circuit 206. The timing generating circuit 284 detects the switching timing for the power of the light source 16 on the basis of the synchronization signal Ss supplied from the moving picture output device 220.

For example, explanation will be made on the basis of the second driving unit 200B. As shown in FIG. 21, the second driving unit 200B is operated as follows. That is, it is assumed that the display period for one sheet of image is one frame, and one divided period, which is obtained by equally dividing the one frame, for example, into 63 individuals, is a linear subfield. On this assumption, the signal processing circuit 206 continuously allots the display time corresponding to each of the gradation levels to the necessary linear subfield for each dot to prepare the dot data.

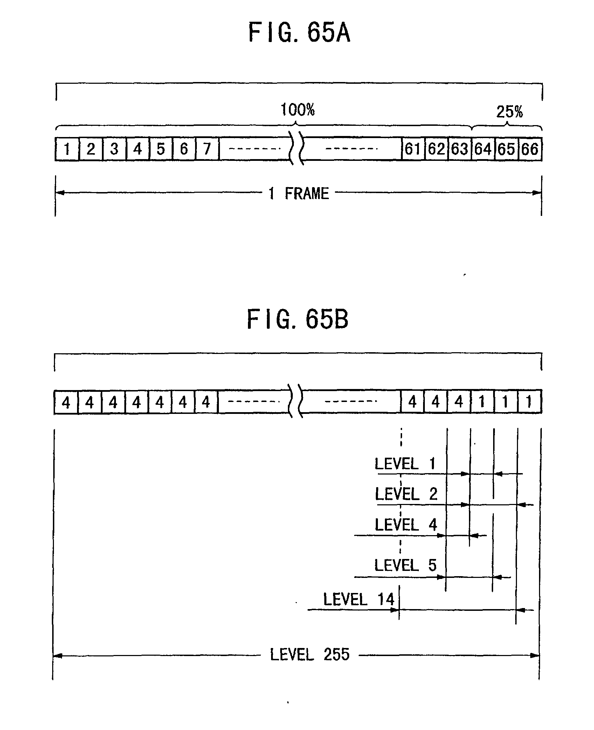

Accordingly, in this embodiment, as shown in FIG. 65A, three linear subfields are added to the end of 63 individuals of the linear subfields. The power of the light source 16 is 100 % for the period ranging from the first linear subfield LSF1 to the 63rd linear subfield LSF63. The power of the light source 16 is 25 % for the period ranging from the 64th linear subfield LSF64 to the 66th linear subfield LSF66 disposed thereafter.

Accordingly, even when all of the display periods of the respective linear subfields are identical, each of the linear subfields ranging from the first linear subfield LSF1 to the 63rd linear subfield LSF63 has the luminance which is four times that of each of the linear subfields ranging from the 64th linear subfield LSF64 to the 66th linear subfield LSF66.

Therefore, as shown in FIG. 65B, when the gradation level of 1 is expressed, the ON signal is outputted to the 64th linear subfield LSF64. When the gradation level of 2 is expressed, the ON signal is continuously outputted to the 64th and 65th linear subfields LSF64 and LSF65. When the gradation of 4 is expressed, the ON signal is outputted to the 63rd linear subfield LSF63. When the gradation level of 5 is expressed, the ON signal is continuously outputted to the 63rd and 64th linear subfields LSF63 and LSF64. When the gradation level of 14 is expressed, the ON signal is continuously outputted to the 61st and 65th linear subfields LSF61 and LSF65.

That is, in this embodiment, the expression can be made up to the 256 gradations (0 to 255) only by adding the three linear subfields LSF64 to LSF66, although the expression is otherwise successful for only the 64 gradations. Because only the three linear subfields LSF64 to LSF66 are added, it is almost unnecessary to change the display period for one linear subfield as compared with the construction in which one frame is formed by 64 individuals of the linear subfields. The problem concerning the design change scarcely arises. Further, the luminance is hardly lowered when the white color is displayed, because the period, in which the power of the light source 16 is 25 %, is the short period which is 3/66 of one frame.

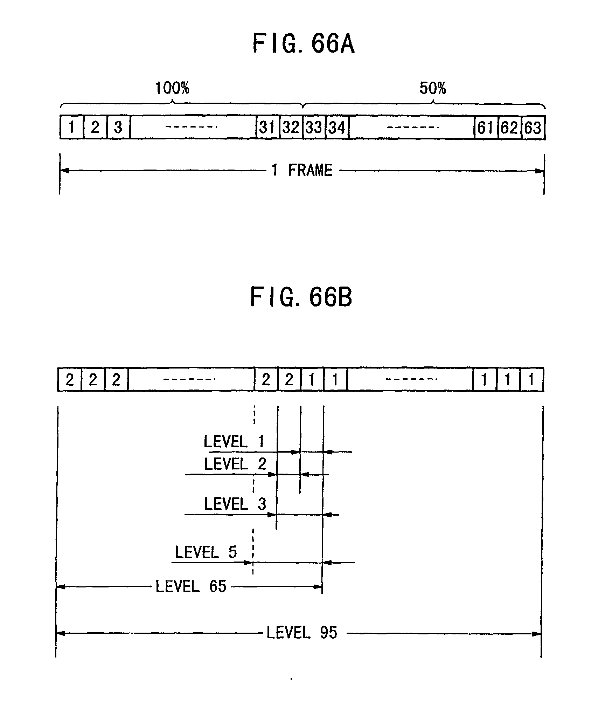

In the embodiment described above, the three linear subfields LSF64 to LSF66 are added after 63 individuals of the linear subfields LSF1 to LSF63 to switch the power of the light source 16 between 100 % and 25 %. Alternatively, as shown in FIG. 66A, the power of the light source 16 may be 100 % for the former half 32 individuals of the linear subfields LSF1 to LSF32 of the 63 individuals of the linear subfields LSF1 to LSF63, and the power of the light source 16 may be 50 % for the latter half of the 31 individuals of the linear subfields LSF33 to LSF63.

In this case, even when all of the display periods for the respective linear subfields are identical, each of the linear subfields of the former half of the 1st to 32nd linear subfields LSF1 to LSF32 has the luminance which is twice that of each of the linear subfields of the latter half of the 33rd to 63rd linear subfields LSF33 to LSF63.

Therefore, as shown in FIG. 66B, when the gradation level of 1 is expressed, the ON signal is outputted to the 33rd linear subfield LSF33. When the gradation level of 2 is expressed, the ON signal is outputted to the 32nd linear subfield LSF32.- When the gradation of 3 is expressed, the ON signal is continuously outputted to the 32nd and 33rd linear subfields LSF32 and LSF33. When the gradation of 5 is expressed, the ON signal is continuously outputted to the 31st to 33rd linear subfields LSF31 to LSF33.

That is, in this embodiment, the expression can be made for the 96 gradations (0 to 95), although the expression is otherwise successful for only the 64 gradations. When the power of the light source 16 is 100 % for all of the 63 individuals of the linear subfields LSF1 to LSF63, it is possible to realize low electric power consumption, because the period, in which the power of the light source 16 is 50 %, is added at an arbitrary timing in this embodiment, as compared with a case in which the power of the light source 16 is 100 % even when the gradational expression is made for the low level.

In this embodiment, the following procedure may be available. That is, the average luminance of the image of the next frame accumulated in the image memory 22 is analyzed. If the image has the high average luminance, the power of the light source 16 is fixed to 100 % for the next frame to perform the gradational expression with the 63 individuals of the linear subfields LSF1 to LSF63. In this case, it is possible to avoid a phenomenon in which the image is viewed while the luminance is lowered as a whole.

Those usable as the light source 16 include a high speed cold cathode tube excellent in response characteristic (with a rising speed within 0.1 ms), LED (with a rising speed within 20 ns), and a fluorescent tube arranged for a cathode with carbon nano tube-field emitter.

Next, the driving method as described below may be adopted for the first to sixth driving units 200A to 200F.

At first, explanation will be made, for example, for the ordinary driving in the second driving unit 200B. As shown in FIG. 54A, when the consideration is made for one dot, the period in which the OFF signal is to be outputted and the period in which the ON signal is to be outputted are determined depending on the gradation level of the concerning dot.

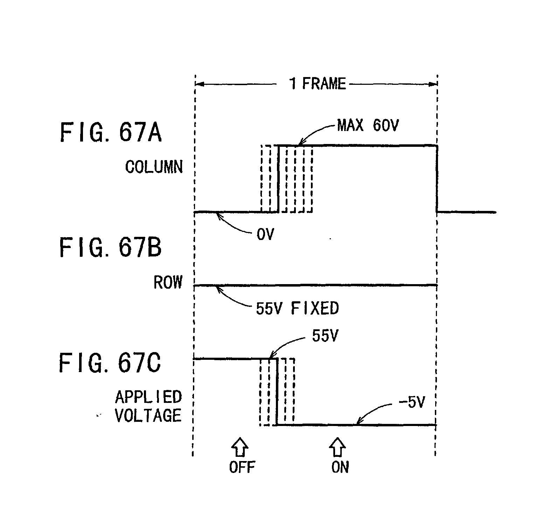

In the period in which the OFF signal is to be outputted, for example, 0 V is applied to the column electrode 48b as shown in FIG. 67A, and for example, 55 V (fixed) is applied to the row electrode 48a as shown in FIG. 67B. The difference in electric potential therebetween, i.e., 55 V is applied to the concerning dot as shown in FIG. 67C, resulting in the light off state. At the point of time of approach to the period in which the ON signal is to be outputted, for example, maximum 60 V is applied to the column electrode 48b as shown in FIG. 67A, and for example, 55 V (fixed) is applied to the row electrode 48a as shown in FIG. 67B. The difference in electric potential therebetween, i.e., -5 V is applied to the concerning dot as shown in FIG. 67C, giving the light emission state.

In the ordinary operation as described above, the gradational expression is made from the point of the start of one frame for each dot. Therefore, it is necessary that the picture element assembly 30 is sufficiently separated from the optical waveguide plate 20 at the point of time of the start of the frame. However, there may be the following possibility. That is, the response upon the separation of the picture element assembly 30 becomes slow, due to the slow response during the separation of the picture element assembly 30 or due to any deterioration of the separation performance of the picture element assembly 30 in a time-dependent manner. In the worst case, no separation occurs, while maintaining the state in which the picture element assembly 30 is stuck to the optical waveguide plate 20.

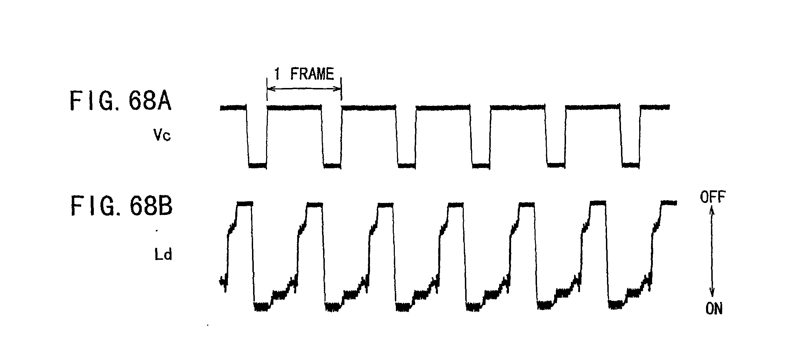

FIGS. 68A and 68B show an experimental result obtained by measuring the light emission characteristic of the dot 26 in the ordinary operation as described above. This experiment was performed such that the change of intensity of light (Ld) scattered from the concerning dot 26 was measured with an avalanche photodiode (APD), while measuring the waveform of the applied voltage Vc to the certain dot 26 (see FIG. 68A). According to FIG. 68B, it is understood that the light emission characteristic slowly goes toward the OFF state from the point of time of the start of one frame, and the OFF response in one frame is slow.

In order to avoid such a situation, for example, when the voltage to be applied to the row electrode 48a is 100 V, it is necessary that the voltage to be applied to the column electrode 48b during the period of the ON signal is 105 V, in order to realize the light emission state during the output period of the ON signal. In this case, it is necessary to increase the voltage resistance of the driver IC 210B. The driver IC 210B is increased in size, and it becomes expensive corresponding thereto.

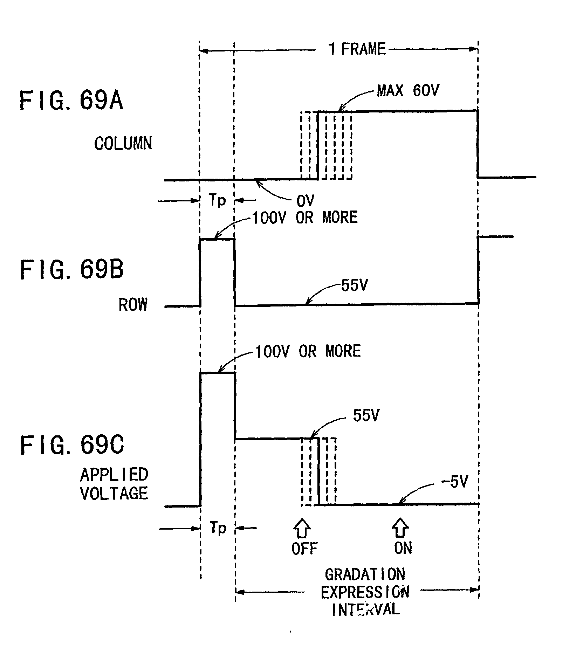

In view of the above, in this embodiment, as shown in FIGS. 69A to 69C, the voltage (separation voltage) to reliably separate all of the dots is applied in an initial predetermined period (preparatory period Tp) of one frame. A period of time of a degree (for example, 1 msec), in which the light emission luminance is scarcely affected, is allotted to the preparatory period Tp, with respect to the entire one frame (for example, 1/60 Hz = 16.7 ms).

The preparatory period Tp is started, for example, when one frame is started. For example, 0 V is applied to the column electrodes 48b of all of the dots as shown in FIG. 69A, and the separation voltage, for example, not less than 100 V is applied to the row electrode 48a as shown in FIG. 69B. The difference in electric potential therebetween, i.e., not less than 100 V is applied to all of the dots as shown in FIG. 69C. Accordingly, all of the dots are reliably in the light off state simultaneously with the start of one frame. It is possible to improve the separation characteristic of the picture element assembly 30 without substantially adding any part. It is possible to improve the yield of the display 10.

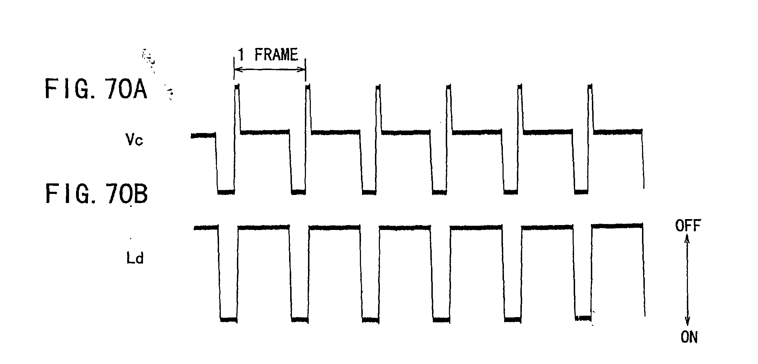

FIGS. 70A and 70B show an experimental result obtained by measuring the light emission characteristic of the dot 26 in the case of the provision of the preparatory period as described above. This experiment was also performed such that the change of intensity of light (Ld) scattered from the concerning dot 26 was measured with an avalanche photodiode (APD), while measuring the waveform of the applied voltage Vc to the certain dot 26 (see FIG. 70A). According to FIG. 70B, it is understood that the light emission characteristic steeply goes toward the OFF state from the point of time of the start of one frame, and the OFF response in one frame is extremely quick.

The separation voltage applied in the preparatory period Tp is generated by the row driver. Accordingly, it is possible to set the voltage which is not less than the voltage resistance of the driver IC 210B, i.e., the voltage which sufficiently displaces the picture element assembly 30 in the separation direction. Therefore, it is unnecessary to change the driver IC 210B.

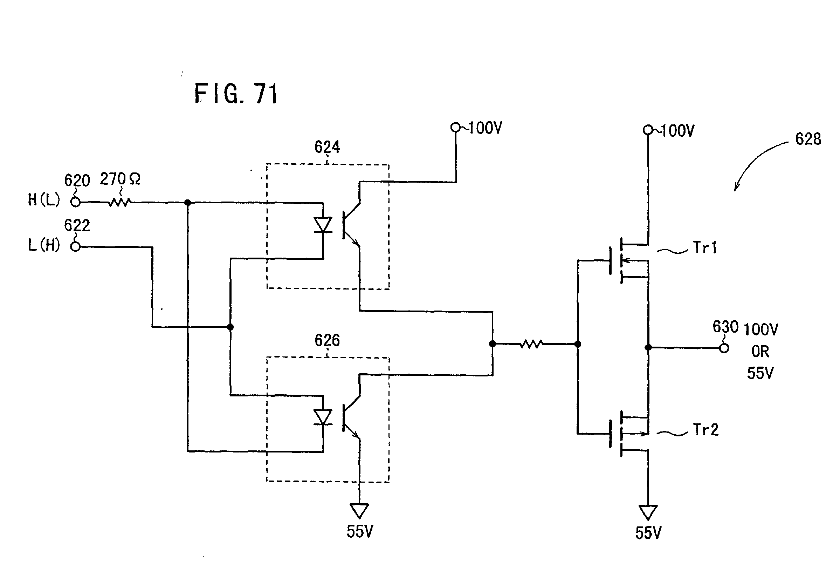

For example, as shown in FIG. 71, the row electrode drive circuit 202 is a circuit which makes it possible to commonly drive all of the dots, which can be realized easily and inexpensively. The operation of the circuit shown in FIG. 71 will be briefly explained. In the preparatory period Tp, the high level signal is inputted into a first input terminal 620, and the low level signal is inputted into a second input terminal 622. Accordingly, a first photocoupler 624 is in the ON state, and a second photocoupler 626 is in the OFF state. The high level signal is applied to the respective gates of a CMOS transistor 628 disposed at the downstream stage. As a result, an NMOS transistor Tr1 is turned on, and the high level signal (100 V) is outputted from an output terminal 630.

On the other hand, in the period other than the preparatory period Tp, the low level signal is inputted into the first input terminal 620, and the high level signal is inputted into the second input terminal 622. Accordingly, the first photocoupler 624 is in the OFF state, and the second photocoupler 626 is in the ON state. The low level signal is applied to the respective gates of the CMOS transistor 628 disposed at the downstream stage. As a result, a PMOS transistor Tr2 is turned on, and the low level signal (55 V) is outputted from the output terminal 630.

In the third to sixth driving units 200C to 200F described above, as also shown in FIGS. 31 to 33, when the OFF signal is supplied to the dot 26 in the unselection state, the high voltage is applied to the dot 26. Therefore, the picture element assembly 30 can be reliably separated from the optical waveguide plate 20, and it is possible to improve the contrast. Further, the voltage (absolute value) of the nonselect signal can be set to have a smaller value. For example, in the embodiment shown in FIG. 33, the voltage of the nonselect signal can be decreased from 110 V, for example, to 80 V. It is possible to contribute the reduction of the electric power consumption.

Further, the number of expressible gradations can be increased by adding the multiple-gradation procedure based on the image processing (for example, the error diffusion method and the dither method) in the subfield driving effected by the first, third, and fifth driving units 200A, 200C, 200E described above and in the linear subfield driving effected by the second, fourth, and sixth driving units 200B, 200D, 200F described above.

The respective dots are fixed in the ON state or the OFF state by using only the gradational expression based on the image processing without using the subfield driving and the linear subfield driving as described above. Therefore, it is possible to display a still picture with low electric power consumption. This procedure is preferably used, for example, for an electronic poster. In this case, the dots may be driven and displaced only when the displayed still picture is rewritten with another image. Therefore, it is possible to greatly reduce the electric power consumption.

An area in which a constant still picture is displayed and an area in which a moving picture is displayed are allowed to exist in a mixed manner depending on the display pattern in some cases. In order to respond to such a display pattern, the display controller may be prepared for two lines, i.e., a circuit system corresponding to the moving picture (subfield driving or linear subfield driving) and a circuit system corresponding to the still picture (only gradational expression based on image processing). Accordingly, it is possible to perform the mixed display of moving picture/still picture, while greatly suppressing the electric power consumption.

The display forms as described above are preferred, for example, for the advertisement to which the contents (digital contents and/or analog contents) are delivered, for example, from a central facility of the ground wave, the internet, the telephone line, the artificial satellite, or the cable television.

Especially, when the internet is used, it is preferable that the still picture file or the moving picture file subjected to the compression process is delivered from a central facility for delivering the contents. The file delivered from the central facility is expanded on the side of the display connected to the internet, and it is converted into the display data. In this case, a compressed file decoder circuit may be provided at the upstream stage of the image data processing circuit 224. When an external storage unit such as a hard disk is provided on the display side (contents-receiving side), the image contents may be stored. Upon the display, the image contents may be read from the external storage unit. In this case, the contents delivered from the central facility may be once accumulated in the external storage unit on the display side.

When a plurality of displays and the central facility are connected to one another by means of the internet or the like in accordance with the method as described above, the display of the optimum contents, which conforms, for example, to the installation place of the display and the time zone, can be collectively managed in a centralized manner from the central facility.

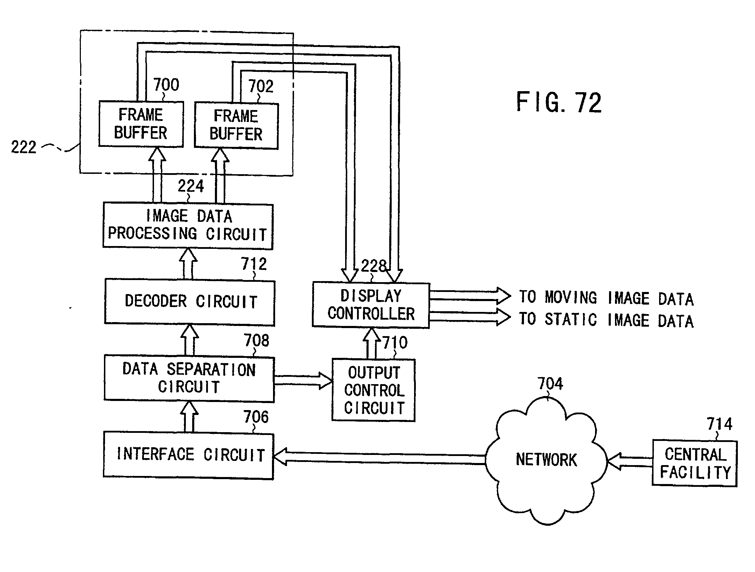

A form of use (form of use according to a first specified embodiment), which realizes the function as described above, will now be explained on the basis of FIG. 72.

As shown in FIG. 72, the form of use according to the first specified embodiment is installed with, for example, a frame buffer 700 for the still picture and a frame buffer 702 for the moving picture as the image memory 222. The form of use according to the first specified embodiment can be realized by providing, for example, an interface circuit 706 for receiving various data from a network 704 to make output to a circuit system disposed at the downstream stage, a data separation circuit 708 for separating the data outputted from the interface circuit 706 into the file concerning the image (still picture file and moving picture file) and the control data, an output control circuit 710 for controlling the display controller 228, for example, in the unit of display unit 14 (performing control corresponding to the still picture and control corresponding to the moving picture) on the basis of the control data from the data separation circuit 708, and a compressed file decoder circuit 712 arranged at the upstream stage of the image data processing circuit 224, for expanding the compressed file concerning the image and making restoration into the still picture data and the moving picture data.

Accordingly, the data, which is received by the interface circuit 706 via the network 704 from the central facility 714, is separated by the data separation circuit 708 into the file concerning the image and the control data which are supplied to the compressed file decoder circuit 712 and the output control circuit 710 respectively.

The compressed file decoder circuit 712 expands the supplied file concerning the image to make restoration into the still picture data and the moving picture data which are outputted to the image data processing circuit 224 disposed at the downstream stage. The image data processing circuit 224 stores the restored still picture data in the frame buffer 700 for the still picture, and it stores the moving picture data in the frame buffer 702 for the moving picture.

On the other hand, the output control circuit 710 controls the display controller 228 on the basis of the control data from the data separation circuit 708. In this case, for example, the address data for the display unit 14 for displaying the still picture can be used as the control data. The output control circuit 710 separates the data transfer section 230 and the first and second reading circuits 232, 234 in the display controller 228 into those for the still picture and for the moving picture on the basis of the control data.

Accordingly, the still picture data is read from the frame buffer 700 for the still picture by the circuit system designated for the still picture, of the display controller 228. The still picture is displayed by the aid of a plurality of display units 14 indicated by the address data. The moving picture data is read from the frame buffer 702 for the moving picture by the circuit system designated for the moving picture. The moving picture is displayed by the aid of a plurality of display units 14 other than the plurality of display units 14 indicated by the address data.

Further, a display system according to a second specified embodiment is also available. That is, for example, the power source current is monitored in each of the displays 10. Obtained results are periodically transmitted to the central facility 714 as the status information of the respective displays 10.

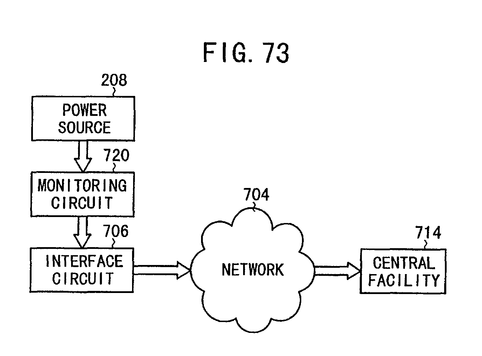

As shown in FIG. 73, this arrangement is realized by providing a monitoring circuit 720 for the power source 208, and providing an interface circuit 706 for transmitting the output of the monitoring circuit 720 as the status information. Accordingly, it is possible to manage whether or not a plurality of displays 10 disposed at remote locations are out of order, from the central facility 714.

Next, a form of use according to a third specified embodiment corrects the decrease in luminance which is caused in a time-dependent manner. That is, when the display is driven for a long period of time, it is feared that the ON characteristic of the dot (characteristic of the picture element assembly 30 to make contact with the first principal surface of the optical waveguide plate 20) is deteriorated as the elapse of time, and the decrease in display luminance is caused. In order to avoid such an inconvenience, the display luminance can be maintained at approximately the same level as that of the initial stage by decreasing the ON voltage of the dot (increasing the absolute value).

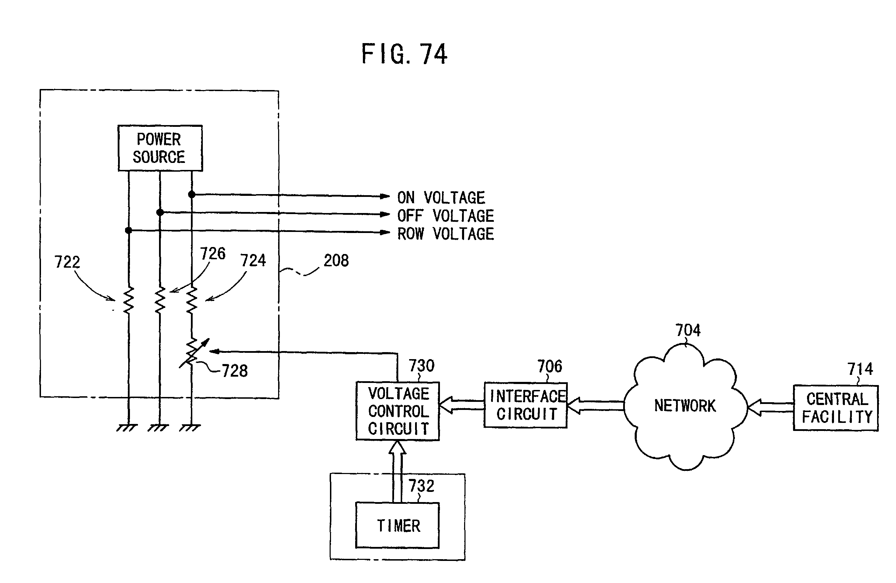

A specified circuit arrangement is shown in FIG. 74. That is, the arrangement makes it possible to generate a variable voltage, for example, in an ON voltage-generating system 724 of various voltage-generating systems installed in the power source 208 (a row voltage-generating system 722 for generating the row voltage to be applied to the row electrode 48a, an ON voltage-generating system 724 for generating the ON voltage to be applied to the column electrode 48b, and an OFF voltage-generating system 726 for generating the OFF voltage to be applied to the column electrode 48b). The embodiment shown in FIG. 74 is illustrative of a case in which a variable resistor 728 is provided. An interface circuit 706 for receiving the information concerning the voltage change from the central facility 714, and a voltage control circuit 730 for controlling the variable resistor 728 to set the ON voltage to a desired voltage on the basis of the information from the interface circuit 706 are provided at the upstream stage of the power source 208.

The central facility 714 manages the result of the measurement performed with the display 10 to be used to monitor the decrease in luminance in a factory. The information concerning the voltage change is transmitted via the network 704 to the display 10 which conforms to the timing at which the luminance is decreased, of the displays 10 installed at the respective districts. On the side of the display 10, the information from the central facility 714 is received via the interface circuit 706, and the ON voltage, which is generated by the ON voltage-generating system 724, is changed to a desired voltage.

For example, when the row voltage is 50 V and the ON voltage is 50 V at the point of time of installation, then 0 V is applied to the dot if the ON operation is to be performed. The information on the voltage change is supplied at the timing at which the luminance begins to be lowered due to the time-dependent change. Accordingly, the ON voltage is changed, for example, to 52 V. Accordingly, - 2 V, which is lower than 0 V, is applied to the dot which is to perform the ON operation. The picture element assembly 30 makes further displacement toward the optical waveguide plate 20. Thus, the luminance in the ON state is improved.

The information on the voltage change is supplied again at the timing at which the luminance is lowered as the time further elapses. Accordingly, the ON voltage is changed, for example, to 54 V. Accordingly, -4 V, which is lower than 0 V, is applied to the dot which is to perform the ON operation. The picture element assembly 30 makes further displacement toward the optical waveguide plate 20. Thus, the luminance in the ON state is improved.

In the form of use described above, the timing, at which the luminance is lowered, is deduced by using the monitoring display 10 in the factory. Alternatively, the following method is also preferably adopted. That is, a manager at the operation site is made to communicate the fact that the luminance is lowered, by using, for example, electronic mail or telephone. Based on the communication of the decrease in luminance, the information on the voltage change is transmitted from the central facility 714 to the concerning display 10.

The embodiment described above is illustrative of the case in which the remote control is performed by using the network 704. Of course, it is also preferable that the display 10 itself is allowed to have a function to change the voltage. For example, the temporal information to indicate the timing of the decrease in luminance and the voltage value to be supplied to the variable resistor 728 are previously stored in a plurality of registers installed in the voltage control circuit 730 respectively. When the temporal information from a timer 732 (see FIG. 74) connected to the upstream stage of the voltage control circuit 730 coincides with one of the temporal information in the registers, the variable resistor 728 is controlled by the voltage value stored in the concerning register to give a desired ON voltage. Thus, it is possible to suppress the decrease in luminance.

Alternatively, another embodiment is also available. That is, for example, a dummy actuator element 22 is constructed and incorporated into the display unit 14 arranged at the periphery of the display screen beforehand, of the plurality of display units 14. The displacement state of the actuator element 22 is detected with a sensor (for example, a strain gauge). It is judged whether or not the luminance is lowered on the basis of the displacement upon the ON operation in the dummy actuator element 22.

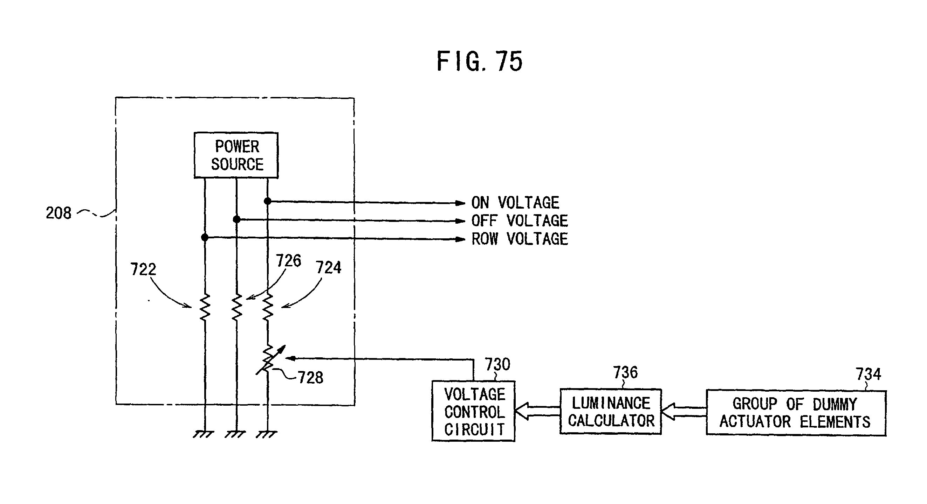

The following judgement technique is available as shown in FIG. 75. That is, detection signals, which are outputted by the aid of the sensors respectively from a group 734 of a large number of dummy actuator elements 22, are supplied to a light emission luminance calculator 736. The light emission luminance calculator 736 is used to approximately calculate the luminance of the entire display screen from the flux of the detection signals. On the other hand, a threshold value is stored in a register in the voltage control circuit 730. The voltage control circuit 730 judges that the entire luminance is lowered, when the approximate value supplied from the light emission luminance calculator 736 is decreased to be lower than the threshold value. The variable resistor 728 of the ON voltage-generating system 724 is controlled to give a desired ON voltage. Accordingly, it is possible to maintain the light emission luminance to be in the initial state.

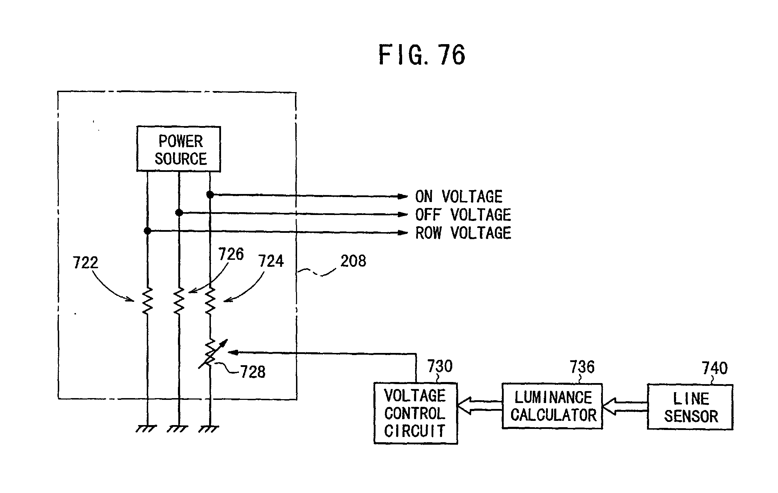

As still another embodiment, the following technique is also adopted preferably as shown in FIG. 76. That is, a line sensor 740, which is movable rightwardly and leftwardly on the display plane of the display 10, is installed. The line sensor 740 is periodically driven, while performing the white display on the display 10. The light emission luminance is detected with the line sensor 740.

Also in this case, the image pickup signal, which is successively outputted from the line sensor 740, is supplied to the light emission luminance calculator 736. The light emission luminance calculator 736 is used to calculate the luminance of the entire display screen on the basis of the image pickup signals continuously supplied. A threshold value is stored in a register in the voltage control circuit 730. It is judged that the entire luminance is lowered when the calculated value supplied from the light emission luminance calculator 736 is decreased to be lower than the threshold value. The variable resistor 728 of the ON voltage-generating system 724 is controlled to give a desired ON voltage. Accordingly, it is possible to maintain the light emission luminance to be in the initial state.

The embodiment described above is illustrative of the case in which the luminance is corrected by controlling the ON voltage applied to the column electrode 48b. Alternatively, the correction of the luminance can be also realized by controlling the light source 16 (form of use according to a fourth specified embodiment).

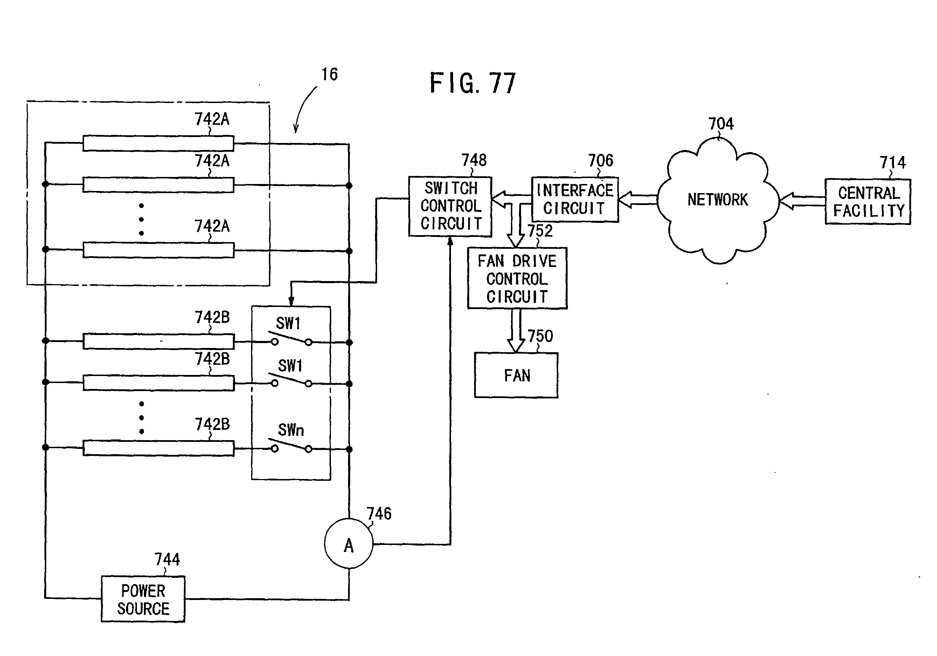

As shown in FIG. 77, for example, when a cold cathode tube or the like is used as the light source 16, one light source 16 can be constructed by bundling a plurality of cold cathode tubes 742 and installing them in a reflector (not shown). In this case, in addition to a prescribed number (for example, twelve) of cold cathode tubes 742A, a plurality (for example, four) of preparatory cold cathode tubes 724B are installed. Switches Sw1, Sw2,..., Swn are inserted and connected beforehand between the preparatory cold cathode tubes 724B and the power source 744 respectively. The current of the light source 16 is monitored by using a current-detecting means 746. It is judged whether or not the amount of light emitted from the light source 16 is lowered, on the basis of the current value supplied from the current-detecting means 746. When the current is lowered, a switch, which corresponds to a predetermined number (for example, one) of cold cathode tube 742B of the preparatory cold cathode tubes 742B, is turned on by the aid of a switch control circuit 748 to increase the light amount.

Of course, the following technique may be adopted to correct the luminance by the aid of the light source 16. At first, a manager at the operation site is made to communicate the fact that the luminance is lowered. Based on the communication, the information that the luminance is to be corrected is delivered from the central facility 714 via the network. The concerning display 10 receives the information by the aid of the interface circuit 706 to supply the information to the switch control circuit 748. The switch control circuit 748 turns on the switch corresponding to a predetermined number (for example, one) of cold cathode tube 742B of the preparatory cold cathode tubes 742B on the basis of the supplied information. Accordingly, the light amount of the light source 16 is increased, and the luminance is improved.

It is known that the fading of the fluorescent pigment of the color filter proceeds as the time of use elapses. Especially, it is known that the fading of the blue color filter proceeds. Accordingly, at least one cold cathode tube to emit blue light is installed as the preparatory cold cathode tube 742B beforehand. Based on the communication from the operation site that the fading occurs, the blue cold cathode tube as the preparatory one may be turned on.

In addition to the selective turning on of the preparatory cold cathode tube 742B, the output of a fan 750 for cooling the light source 16 may be adjusted. Accordingly, it is possible to suppress any quick temperature change, and it is possible to use the system for a long period of time. Further, it is possible to suppress the uneven illuminance or the like which would be otherwise cause by the temperature change. In this case, as shown in FIG. 77, for example, it is also preferable to provide a fan drive control circuit 752 for driving and controlling the fan 750 on the basis of the information concerning the selective turning on from the interface circuit 706.

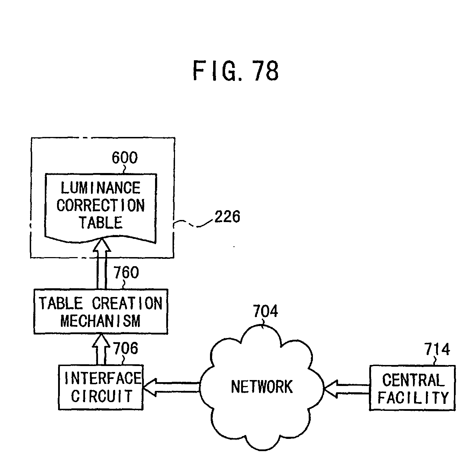

The embodiment described above is illustrative of the case in which the luminance is adjusted by controlling the peripheral units of the display controller 228. Alternatively, as shown in FIG. 78, the luminance may be adjusted by changing the value in the luminance correction table 600 logically allotted in the correction data memory 226 of the display controller 228 (a display system according to a fifth specified embodiment).

In this case, as shown in FIG. 78, a group of luminance correction values, which are to be used when the luminance is lowered, are transmitted via the network 704, for example, from the central facility 714 to the concerning display 10 at the point of time at which the luminance of the certain display 10 is lowered. The concerning display 10 receives the correction values from the central facility 714 via the interface circuit 706. A table creation mechanism 760, which is disposed at the downstream stage, prepares a new luminance correction table on the basis of the received correction value. The luminance correction table 600 having been stored in the correction data memory 226 is rewritten therewith.

The respective dots are operated so that the decrease in luminance is suppressed in accordance with the various luminance correction values supplied from the new luminance correction table 600. Therefore, it is possible to maintain the display luminance at approximately the same level as that at the initial stage.

The technique for rewriting the luminance correction table 600 is not limited to the procedure based on the supply from the central facility 714. In the same manner as in FIG. 74, a new luminance correction table 600 may be prepared by the table creation mechanism 760 on the basis of the temporal information from the timer 732. Alternatively, in the same manner as in FIGS. 75 and 76, a new luminance correction table 600 may be prepared by the table creation mechanism 760 on the basis of the calculated value outputted from the group 734 of dummy actuator elements 22 or the line sensor 740 by the aid of the light emission luminance calculator 736.

When the luminance correction table 600 is rewritten, then the compensating means for the luminance decrease is not only effected, but also the white balance caused by the fading can be compensated. For example, when the blue color is subjected to fading, the luminance correction coefficient is rewritten so that the luminance level is improved for only the blue color. By doing so, it is possible to maintain the white balance at approximately the same level as that at the initial stage.

As described above, the maintenance for the display 10 can be performed by utilizing the network 704 or automatically in a self-diagnosis manner by adopting the forms of use according to the second to fifth specified embodiments shown in FIGS. 73 to 78. Usually, in the maintenance for the display 10 arranged with a large number of display units 14, a maintenance operator goes hurriedly to the operation site in principle to perform the repair even in the case of the simple operation. Therefore, the cost required for the maintenance is enormous, which is unfavorable to popularize the display 10.

However, when the forms of use according to the second to fifth specified embodiments described above are adopted, the simple maintenance operation such as the luminance adjustment can be automatically performed. It is possible to greatly reduce the cost required for the maintenance. When the maintenance charge is set depending on the various forms of use even in the case of one type of the luminance adjustment, it is possible to provide careful maintenance service. It is possible to contribute to the popularization of the display 10.

When the display principle of the display 10 according to the embodiment of the present invention is used, it is possible to exactly construct an optical switch which performs ON/OFF of light output and selective light output. That is, it is possible to construct an optical switch comprising an optical waveguide to function as an optical waveguide passage into which light is introduced to be transmitted without any leakage, and a driving section which is provided opposingly to one side of the optical waveguide and which is arranged with actuator elements of a number corresponding to one or a large number of optical switch contacts, wherein light output is turned ON/OFF and the light is selectively led to only a specified output by controlling a displacement action of the actuator element in a direction to make contact or separation with respect to the optical waveguide in response to an optical switch control signal to be inputted so that leakage light is controlled at a predetermined portion of the optical waveguide.

It is a matter of course that the method for producing the display apparatus according to the present invention are not limited to the embodiments described above, which may be embodied in other various forms without deviating from the gist or essential characteristics of the present invention.

**Claims**

1. A method for producing a display apparatus constructed by arranging a plurality of display units (14) arranged with a plurality of display components (26), said method comprising the steps of:

    displaying a uniform image on said display apparatus (10) to detect luminances of said respective display components (26);
    calculating luminance target values of said respective display components (26); and
    calculating luminance correction coefficients for said respective display components (26) on the basis of said luminance target values of said respective display components (26).

2. The method for producing said display apparatus according to claim 1, wherein said luminance target value is calculated by averaging said luminances of said display component (26) and said plurality of display components (26) arranged therearound, and regarding an obtained average value as said luminance target value of said display component (26).

3. The method for producing said display apparatus according to claim 2, wherein said plurality of display components (26), which are arranged around said display component (26), are included in a group of said display components (26) corresponding to (2m + 1) rows aligned in a vertical direction, and they are included in a group of said display components (26) corresponding to (2n + 1) columns aligned in a horizontal direction.

4. The method for producing said display apparatus according to claim 3, wherein when M individuals of said display components (26) are arranged in vertical direction, N individuals of said display components (26) are arranged in horizontal direction, and (M × N) individuals of said display components (26) are provided in total for one of said display units (14), then m and n satisfy the following expressions provided that a and β are variables of not less than 1 respectively:

$$(1/2)M \leq 2m + 1 \leq \alpha M$$

$$(1/2)N \leq 2n + 1 \leq \beta N.$$

5. The method for producing said display apparatus according to claim 4, wherein $\alpha$ and $\beta$ are set so that said display components (26), in each of which said luminance correction coefficient exceeds an upper limit value, have a number which is not more than a predetermined number.

6. The method for producing said display apparatus according to any one of claims 1 to 5, further comprising:

    a first step of retrieving said display component (26) which exhibits a minimum value of said calculated luminance target values; and
    a second step of increasing said current luminance target value by a certain value for said retrieved display component (26).

7. The method for producing said display apparatus according to any one of claims 1 to 6, further comprising the steps of:

    retrieving said display component (26) which exceeds a threshold value of said calculated luminance target values; and
    decreasing said current luminance target value to said threshold value for said retrieved display component (26).

8. The method for producing said display apparatus according to any one of claims 1 to 7, wherein said luminance correction coefficient is calculated in consideration of color temperature.

9. The method for producing said display apparatus according to claim 8, further comprising the steps of:

    performing standardization for said calculated luminance target values for said respective display components (26) in accordance with a color scheme respectively;
    making amendment so that values obtained after said standardization are included in a certain range; and
    performing a restoring process for values obtained after said amendment in accordance with said color scheme respectively to obtain luminance target values in consideration of said color temperature.

10. The method for producing said display apparatus according to claim 9, wherein said step to obtain said luminance target values in consideration of said color temperature includes a process for multiplying a color temperature regulation constant.

11. The method for producing said display apparatus according to any one of claims 1 to 10, wherein said display unit (14) is a display unit (14) comprising an optical waveguide plate (20) for introducing light (18) from a light source (16) thereinto, and a driving section (24) provided opposingly to a first plate surface of said optical waveguide plate (20) and arranged with said display components (26) of a number corresponding to a large number of picture elements, wherein a screen image corresponding to an image signal is displayed on said optical waveguide plate (20) by controlling a displacement action of an actuator element (22) of said display component (26) in a direction to make contact or separation with respect to said optical waveguide plate (20) in accordance with an attribute of said image signal to be inputted so that leakage light is controlled at a predetermined portion of said optical waveguide plate (20).

12. A method for producing a display apparatus constructed by arranging a plurality of display units (14) arranged with a plurality of display components (26), said method comprising the steps of:

obtaining characteristic values for said respective display units (14) respectively;
ranking said display units (14) on the basis of said obtained characteristic values;
partitioning an arrangement area (Z10) for said plurality of display units (14) of said display apparatus (10) to designate ranks of said display units (14) to be arranged in respective areas (Z12); and
arranging said display units (14) in accordance with said designation to manufacture said display apparatus (10).

13. The method for producing said display apparatus according to claim 12, wherein when said ranked display units (14) are arranged in said designated areas (Z11, Z12), said display units (14), which are ordered in an identical rank, are arranged in accordance with a predetermined rule.

14. The method for producing said display apparatus according to claim 12 or 13, wherein:

said arrangement area (Z10) for said display units (14) is partitioned into a central portion (Z11) and a peripheral portion (Z12); and
said display units (14) having high ranks are arranged in said central portion (Z11), and said display units (14) having low ranks are arranged in said peripheral portion (Z12).

15. The method for producing said display apparatus according to any one of claims 12 to 14, wherein:

when said characteristic value includes an average luminance of said plurality of display components (26) for constructing said display unit (14) and a number of deficiencies of said display components (26);
said ranking is determined by overall evaluation on the basis of a rank based on said average luminance and a rank based on said number of deficiencies.

16. The method for producing said display apparatus according to claim 15, wherein:

said arrangement area (Z10) for said display units (14) is partitioned into a central portion (Z11) and a peripheral portion (Z12); and
said display units (14) having high ranks based on said number of deficiencies are arranged in said central portion (Z11), and said display unit (14) having low ranks based on said number of deficiencies are arranged in said peripheral portion (Z12).

17. The method for producing said display apparatus according to claim 16, wherein said display units (14) having substantially identical ranks based on said average luminance are arranged in said central portion (Z11) and said peripheral portion (Z12).

FIG. 1

FIG. 2

# FIG. 3

# FIG. 4

EP 1 211 661 A1

FIG. 5

# FIG. 6A

48a    48b    46

# FIG. 6B

48a    48b    46

# FIG. 7A

# FIG. 7B

# FIG. 8

## FIG. 9

EP 1 211 661 A1

# FIG. 10

EP 1 211 661 A1

FIG. 11

# FIG. 12

## FIG. 13

# FIG. 14

| OFFSET POTENTIAL | ON SIGNAL | OFF SIGNAL |
|---|---|---|
| | 0V | 60V |
| 10V | −10V<br>(LIGHT EMISSION) | 50V<br>(LIGHT OFF) |

FIG. 15

EP 1 211 661 A1

# FIG. 16

EP 1 211 661 A1

210B

212

Db →

230 Dd

DATA TRANSFER
SECTION

DRIVER
OUTPUT

210

230 Dd

DATA TRANSFER
SECTION

DRIVER
OUTPUT

210

230 Dd

DATA TRANSFER
SECTION

DRIVER
OUTPUT

210

230 Dd

DATA TRANSFER
SECTION

DRIVER
OUTPUT

210

Pc1
(T/6)

230

250

252

Dd

DRIVER
OUTPUT

210

Pc2
(T/2, T/4, ···, T/64)

FIG. 17

1FRAME

SF1  SF2  SF3  SF4  SF5  SF6

(64)  (32)  (16)  (8)  (4)  (2)

FIG. 18

# FIG. 19

| OFFSET POTENTIAL | ON SIGNAL | OFF SIGNAL |
|---|---|---|
|  | 0V | 60V |
| 0V | 0V | 60V |

## FIG. 20

| OFFSET POTENTIAL | ON SIGNAL | OFF SIGNAL |
|---|---|---|
| | 60V | 0V |
| 50V | −10V | 50V |

FIG. 21

F I G. 22A

F I G. 22B

# FIG. 23

EP 1 211 661 A1

# FIG. 24

# FIG. 25

EP 1 211 661 A1



# FIG. 26

# FIG. 27

9599

300

9599   9599

0   1 0   1 0

300

302

(FIRST DATA OUTPUT CIRCUIT)

300

9599   1 0

(TRANSFERRED AT 240 CYCLES)

300B

39   1 0

$\phi_{139}$   $\phi_{101}$   $\phi_{100}$

(SECOND DATA OUTPUT CIRCUIT)

$\phi_1$

EP 1 211 661 A1

FIG. 28

EP 1 211 661 A1

# FIG. 29

EP 1 211 661 A1

# FIG. 30

TO ROW ELECTRODE
DRIVE CIRCUIT

EP 1 211 661 A1

## FIG. 31

|  |  | ON SIGNAL | OFF SIGNAL |
| --- | --- | --- | --- |
|  |  | 0V | 60V |
| SELECT SIGNAL | 10V | −10V (LIGHT EMISSION) | 50V (LIGHT OFF) |
| NONSELECT SIGNAL | −50V | 50V (LIGHT EMISSION) | 110V (LIGHT OFF) |

## FIG. 32

|  |  | ON SIGNAL | OFF SIGNAL |
|---|---|---|---|
|  |  | 0V | 60V |
| SELECT SIGNAL | 0V | 0V | 60V |
| NONSELECT SIGNAL | −60V | 60V | 120V |

## FIG. 33

| | | ON SIGNAL | OFF SIGNAL |
|---|---|---|---|
| | | 60V | 0V |
| SELECT SIGNAL | 50V | −10V | 50V |
| NONSELECT SIGNAL | 110V | 50V | 110V |

## FIG. 34

1 FRAME

1 FIELD          1 FIELD

LSF1  LSF1
LSF2  LSF2
LSF3  LSF3
LSF63         LSF63

EP 1 211 661 A1

# FIG. 35

IMAGE DATA PROCESSING CIRCUIT — 224

IMAGE MEMORY — 222

CORRECTION DATA MEMORY — 226

FIRST READING CIRCUIT — 232

SECOND READING CIRCUIT — 234

MULTIPLICATION CIRCUIT — 236

OUTPUT PORT — OP

DATA TRANSFER SECTION — 230

DISPLAY CONTROLLER — 228

MOVING PICTURE OUTPUT DEVICE — 220

TIMING GENERATING CIRCUIT — 284

TO ROW ELECTRODE DRIVE CIRCUIT

DRIVER IC — 210B

DRIVER IC

DRIVER IC

204

206

$S_v$, $S_s$, $D_v$, $D_c$, $D_h$, $D_b$, $S_j$

EP 1 211 661 A1

# FIG. 36

## FIG. 37

FIG. 38

EP 1 211 661 A1

**FIG. 39**

EP 1 211 661 A1

# FIG. 40

EP 1 211 661 A1

FIG. 41

DISPLAY CONTROLLER

TO ROW ELECTRODE DRIVE CIRCUIT

FIG. 42A

FIG. 42B

# FIG. 43A

# FIG. 43B

FIG. 44

FIG. 45

# FIG. 46

FIG. 47

# FIG. 48

# FIG. 49A

2n+1
COLUMNS

26

2m+1
ROWS

26

Z1

# FIG. 49B

2n+1
COLUMNS

26

2m+1
ROWS

26

Z2

# FIG. 50

OUTPUT
GRADATION

$y = \dfrac{Lc}{Lj} x$

INPUT
GRADATION

# FIG. 51

```
        ┌─────────────────┐
        │      START      │
        └─────────────────┘
                 │
   ┌───────────────────────────┐  S101
   │    RETRIEVE DOT HAVING     │
   │       MINIMUM VALUE        │
   │  (LUMINANCE TARGET VALUE)  │
   └───────────────────────────┘
                 │
   ┌───────────────────────────┐  S102
   │    INCREASE LUMINANCE      │
   │       TARGET VALUE OF      │
   │  RETRIEVED DOT BY CERTAIN  │
   │          AMOUNT            │
   └───────────────────────────┘
                 │
        ┌─────────────────┐
        │       END       │
        └─────────────────┘
```

# FIG. 52

```
        ┌─────────────────┐
        │      START       │
        └─────────────────┘
                 │
    ┌─────────────────────────┐   S201
    │  RETRIEVE DOT EXCEEDING  │
    │      THRESHOLD VALUE     │
    └─────────────────────────┘
                 │
    ┌─────────────────────────┐   S202
    │     DECREASE CURRENT     │
    │  LUMINANCE TARGET VALUE  │
    │   TO THRESHOLD VALUE FOR │
    │       RETRIEVED DOT      │
    └─────────────────────────┘
                 │
        ┌─────────────────┐
        │       END        │
        └─────────────────┘
```

# F I G. 53

START

| STANDARDIDIZE LUMINANCE TARGET VALUE | S301 | $gr = \dfrac{1}{Kr} \cdot fr$ |

| AMEND STANDARDIDIZED VALUE gr | S302 | $dgr$ |

| PERFORM RESTORING PROCESS IN CONSIDERATION OF COLOR TEMPERATURE | S303 | $dfr = h \cdot Kr \cdot dgr$ |

END

# F I G. 54

# FIG. 55

# FIG. 56

START

OBTAIN CHARACTERISTIC
VALUES FOR RESPECTIVE
DISPLAY UNITS — S401

RANKING DISPLAY UNITS ON
THE BASIS OF OBTAINED
CHARACTERISTIC VALUES — S402

PARTITION ARRANGEMENT
AREA FOR DISPLAY UNITS
AND DESIGNATE RANKS OF
DISPLAY UNITS TO BE
ARRANGED IN RESPECTIVE
AREAS — S403

ARRANGE DISPLAY UNITS IN
ACCORDANCE WITH
FOREGOING DESIGNATION — S404

END

FIG. 57A

|  | A RANK | B RANK | C RANK |
|---|---|---|---|
| AVERAGE LUMINANCE | NOT LESS THAN 1000 | NOT LESS THAN 900 AND LESS THAN 1000 | LESS THAN 900 |
| NUMBER OF DEFICIENCIES | NOT MORE THAN 1 | NOT LESS THAN 2 AND NOT MORE THAN 5 | NOT LESS THAN 6 |

FIG. 57B

| OVERALL RANK | LUMINANCE RANK | DEFICIENCY RANK |
|---|---|---|
| A | A | A |
| B | A | B |
| C | B | A |
| D | B | B |

FIG. 58A

FIG. 58B

# FIG. 59A

# FIG. 59B

## FIG. 60A

## FIG. 60B

FIG. 61

FIG. 62A

LUMINANCE

0    GRADATION
        LEVEL

FIG. 62B

WEIGHTING
FACTOR

0    GRADATION
        LEVEL

FIG. 62C

LUMINANCE

0    GRADATION
        LEVEL

FIG. 63A

FIG. 63B

FIG. 63C

## FIG. 64

## F I G. 65A

## F I G. 65B

## FIG. 66A

100%                                              50%

| 1 | 2 | 3 | ------- | 31 | 32 | 33 | 34 | ------- | 61 | 62 | 63 |

← ————————————— 1 FRAME ————————————— →

## FIG. 66B

| 2 | 2 | 2 | ------- | 2 | 2 | 1 | 1 | ------- | 1 | 1 | 1 |

LEVEL 1

LEVEL 2

LEVEL 3

LEVEL 5

← ——————— LEVEL 65 ——————— →

← ————————————— LEVEL 95 ————————————— →

FIG. 67A

COLUMN

1 FRAME

MAX 60V

0V

FIG. 67B

ROW

55V FIXED

FIG. 67C

APPLIED VOLTAGE

55V

−5V

OFF    ON

FIG. 68A

Vc

1 FRAME

FIG. 68B

Ld

OFF

ON

FIG. 69A

COLUMN

1 FRAME

MAX 60V

Tp

0V

FIG. 69B

ROW

100V OR MORE

55V

FIG. 69C

APPLIED
VOLTAGE

100V OR MORE

55V

−5V

Tp

OFF

ON

GRADATION
EXPRESSION
INTERVAL

EP 1 211 661 A1

1 FRAME

FIG. 70A

Vc

FIG. 70B

Ld

OFF

ON

FIG. 71

628

Tr1

Tr2

630 100V
OR
55V

100V

55V

100V

55V

624

626

620 270Ω

622

H (L)

L (H)

# FIG. 72

TO MOVING IMAGE DATA
TO STATIC IMAGE DATA

DISPLAY CONTROLLER — 228

OUTPUT CONTROL CIRCUIT — 710

FRAME BUFFER — 702

FRAME BUFFER — 700

IMAGE DATA PROCESSING CIRCUIT — 224

DECODER CIRCUIT — 712

DATA SEPARATION CIRCUIT — 708

INTERFACE CIRCUIT — 706

NETWORK — 704

CENTRAL FACILITY — 714

222

# FIG. 73

208
POWER SOURCE

720
MONITORING CIRCUIT

706
INTERFACE CIRCUIT

704
NETWORK

714
CENTRAL FACILITY

# FIG. 74

EP 1 211 661 A1

FIG. 75

# FIG. 76

POWER
SOURCE

ON VOLTAGE
OFF VOLTAGE
ROW VOLTAGE

722    726  724    208

728

730        736        740

VOLTAGE
CONTROL
CIRCUIT

LUMINANCE
CALCULATOR

LINE
SENSOR

EP 1 211 661 A1

# FIG. 77

EP 1 211 661 A1

# FIG. 78

FIG. 79

FIG. 80

| INTERNATIONAL SEARCH REPORT | International application No. |
|---|---|
| | PCT/JP01/01867 |

**A. CLASSIFICATION OF SUBJECT MATTER**
Int.Cl⁷   G09G3/20
          G02B26/08
          G09F9/00

According to International Patent Classification (IPC) or to both national classification and IPC

**B. FIELDS SEARCHED**

Minimum documentation searched (classification system followed by classification symbols)
Int.Cl⁷   G09G3/20
          G02B26/08
          G09F9/00

Documentation searched other than minimum documentation to the extent that such documents are included in the fields searched
Jitsuyo Shinan Koho        1926-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 11-282420, A (Sanyo Electric Co., Ltd.),<br>15 October, 1999 (15.10.99),<br>Full text; Figs. 1 to 10   (Family: none) | 1,2<br>3-5,11 |
| Y | JP, 7-7709, A (Matsushita Electric Ind. Co., Ltd.),<br>10 January, 1995 (10.01.95),<br>Par. No. [0035]; Fig. 2   (Family: none) | 3-5 |
| X<br>Y | JP, 11-85104, A (NHK TECHNICAL SERVICE K.K.),<br>30 March, 1999 (30.03.99),<br>Full text; Figs. 1 to 4   (Family: none) | 1,2,6,7<br>3-5,11 |
| Y | EP, 903720, A2 (NGK INSULATORS, LTD.),<br>24 March, 1999 (24.03.99),<br>Par. Nos. [0074] to [0079]; Fig. 1<br>& JP, 11-38935, A | 11 |
| X<br>Y<br>A | JP, 7-287536, A (Sanyo Electric Co., Ltd.),<br>31 October, 1995 (31.10.95),<br>Full text; Figs. 1 to 8   (Family: none) | 12,13<br>14<br>15-17 |

☒ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 May, 2001 (30.05.01) | 12 June, 2001 (12.06.01) |

| Name and mailing address of the ISA/<br>    Japanese Patent Office | Authorized officer |
|---|---|
| Facsimile No. | Telephone No. |

Form PCT/ISA/210 (second sheet) (July 1992)

## INTERNATIONAL SEARCH REPORT

| International application No. |
| --- |
| PCT/JP01/01867 |

| C (Continuation). DOCUMENTS CONSIDERED TO BE RELEVANT | | |
| --- | --- | --- |
| Category* | Citation of document, with indication, where appropriate, of the relevant passages | Relevant to claim No. |
| Y | JP, 6-282241, A (Pioneer Electronic Corporation), 07 October, 1994 (07.10.94), Par. No. [0015]; Fig. 5   (Family: none) | 14 |
| Y | JP, 9-198007, A (Mitsubishi Electric Corporation), 31 July, 1997 (31.07.97), Par. No. [0059]; Figs. 1 to 10   (Family: none) | 8-10 |

Form PCT/ISA/210 (continuation of second sheet) (July 1992)

**EP 1 211 661 A1**

<table>
<tr><td rowspan="2"><b>INTERNATIONAL SEARCH REPORT</b></td><td>International application No.</td></tr>
<tr><td>PCT/JP01/01867</td></tr>
</table>

**Box I   Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II   Observations where unity of invention is lacking (Continuation of item 2 of first sheet)**

This International Searching Authority found multiple inventions in this international application, as follows:

The technical feature of the inventions of claims 1-11 defining a contribution over the prior art is that "the luminance is corrected according to the luminance correction coefficient", while the technical feature of the inventions of claims 12-17 defining a contribution over the prior art is to comprise "a step of determining characteristics for each display unit, a step of ranking each display unit according to the determined characteristics, a step of dividing the array area of each display unit and ranking each display unit to be disposed in each area". There is no "technical relationship among those inventions involving the same or corresponding special technical features" provided for in PCT Rule 13.2.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest.
☒   No protest accompanied the payment of additional search fees.

Form PCT/ISA/210 (continuation of first sheet (1)) (July 1992)